(19) Europäisches Patentamt
European Patent Office
Office européen des brevets

(11) EP 4 525 096 A1

(12) EUROPEAN PATENT APPLICATION
published in accordance with Art. 153(4) EPC

(43) Date of publication:
19.03.2025 Bulletin 2025/12

(21) Application number: 24744726.1

(22) Date of filing: 18.01.2024

(51) International Patent Classification (IPC):
H01M 4/62 (2006.01) H01M 4/13 (2010.01)
H01M 4/131 (2010.01) H01M 4/525 (2010.01)

(52) Cooperative Patent Classification (CPC):
H01G 11/26; H01G 11/38; H01G 11/46; H01M 4/13;
H01M 4/131; H01M 4/525; H01M 4/62; Y02E 60/10

(86) International application number:
PCT/JP2024/001347

(87) International publication number:
WO 2024/154806 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.01.2023 JP 2023006026

(71) Applicant: DAIKIN INDUSTRIES, LTD.
Osaka-shi, Osaka 530-0001 (JP)

(72) Inventors:
- NISHIMURA, Kenta
Osaka-Shi, Osaka 530-0001 (JP)
- KATO, Taketo
Osaka-Shi, Osaka 530-0001 (JP)
- YAMADA, Takaya
Osaka-Shi, Osaka 530-0001 (JP)
- NAGAI, Shota
Osaka-Shi, Osaka 530-0001 (JP)
- INOUE, Ryo
Osaka-Shi, Osaka 530-0001 (JP)
- TERADA, Junpei
Osaka-Shi, Osaka 530-0001 (JP)
- YAMANAKA, Taku
Osaka-Shi, Osaka 530-0001 (JP)

(74) Representative: Hoffmann Eitle
Patent- und Rechtsanwälte PartmbB
Arabellastraße 30
81925 München (DE)

# (54) SELF-SUPPORTING MIXTURE FILM FOR ELECTROCHEMICAL DEVICE, ELECTRODE, AND ELECTROCHEMICAL DEVICE

(57) The disclosure provides a self-supporting electrochemical device mixture film exhibiting excellent strength and excellent flexibility without a support. Provided is a self-supporting electrochemical device mixture film containing: at least one of an electrode active material or a solid electrolyte; and a binder, the binder containing a TFE-based polymer composition, the TFE-based polymer composition containing a TFE-based polymer and at least one compound selected from the group consisting of a compound represented by the following formula (1) and a compound represented by the following formula (2):

Formula (1): $(H-(CF_2)_{m-1}-COO)_pM^1$

wherein m is 4 to 20; $M^1$ is H, a metal atom, $NR^5_4$ (where $R^5$s are optionally the same as or different from each other and each represent H or a C1-C10 organic group), or the like; and p is 1 or 2, and

Formula (2): $(H- (CF_2)_n-SO_3)_qM^2$

wherein n is 4 to 20; $M^2$ is H, a metal atom, $NR^5_4$ (where $R^5$ is as defined above), or the like; and q is 1 or 2.

EP 4 525 096 A1

## Description

TECHNICAL FIELD

The disclosure relates to self-supporting electrochemical device mixture films, electrodes, and electrochemical devices.

BACKGROUND ART

Secondary batteries such as lithium-ion secondary batteries are used in small and portable electrical and electronic devices such as laptop PCs, cellular phones, smart phones, tablet PCs, and Ultrabooks, and are also being commercialized as a wide variety of power sources, including in-vehicle power sources for driving automobiles and the like and large power sources for stationary applications. The reason for this is that secondary batteries are high-voltage, high-energy-density batteries with low self-discharge and low memory effect and can be made extremely lightweight. Secondary batteries are now demanded to have even higher energy densities, and further improvements in battery characteristics are desired.

Patent Literature 1 discloses an energy storage device in which at least one of the cathode or the anode includes a polytetrafluoroethylene composite binder material.

Patent Literature documents 2 to 6 each describe use of polytetrafluoroethylene as a binder for batteries.

CITATION LIST

- Patent Literature

Patent Literature 1: JP 2017-517862 T
Patent Literature 2: WO 2021/181887 A1
Patent Literature 3: WO 2021/181888 A1
Patent Literature 4: WO 2021/192541 A1
Patent Literature 5: WO 2022/138942 A1
Patent Literature 6: WO 2022/138939 A1

SUMMARY OF INVENTION

- Technical Problem

The disclosure aims to provide a self-supporting electrochemical device mixture film exhibiting excellent strength and excellent flexibility without a support, and an electrode and an electrochemical device each including the self-supporting electrochemical device mixture film.

- Solution to Problem

The disclosure (1) relates to a self-supporting electrochemical device mixture film containing: at least one of an electrode active material or a solid electrolyte; and a binder,

the binder containing a tetrafluoroethylene-based polymer composition,
the tetrafluoroethylene-based polymer composition containing a tetrafluoroethylene-based polymer and at least one compound selected from the group consisting of a compound represented by the following formula (1) and a compound represented by the following formula (2):

Formula (1) : $(H-(CF_2)_{m-1}-COO)_pM^1$

wherein m is 4 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2; and

Formula (2) : $(H-(CF_2)_n-SO_3)_qM^2$

wherein n is 4 to 20; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

The disclosure (2) relates to the self-supporting electrochemical device mixture film according to the disclosure (1), wherein $M^1$ in the formula (1) is H or $NH_4$ and $M^2$ in the formula (2) is H or $NH_4$.
The disclosure (3) relates to the electrochemical device mixture according to the disclosure (1) or (2), wherein the tetrafluoroethylene-based polymer is polytetrafluoroethylene.
The disclosure (4) relates to the self-supporting electrochemical device mixture film according to any one of the disclosures (1) to (3), wherein the tetrafluoroethylene-based polymer is contained in an amount of 99.95% by mass or more relative to the tetrafluoroethylene-based polymer composition.
The disclosure (5) relates to the self-supporting electrochemical device mixture film according to any one of the disclosures (1) to (4), wherein the compound (1) is contained in an amount of 1 ppb by mass or more and 1000 ppb by mass or less and the compound (2) is contained in an amount of 5000 ppb by mass or less, relative to the tetrafluoroethylene-based polymer composition.
The disclosure (6) relates to a self-supporting electrochemical device mixture film containing: at least one of an electrode active material or a solid electrolyte; and a binder,

the binder containing a tetrafluoroethylene-based polymer composition,
the tetrafluoroethylene-based polymer composition being expandable and having a 0.1% mass reduction temperature of 400°C or lower.

The disclosure (7) relates to a self-supporting electrochemical device mixture film containing: at least one of an electrode active material or a solid electrolyte; and a binder,

the binder containing a tetrafluoroethylene-based polymer composition,
the tetrafluoroethylene-based polymer composition being expandable and having a 1.0% mass reduction temperature of 492°C or lower.

The disclosure (8) relates to a self-supporting electrochemical device mixture film containing: at least one of an electrode active material or a solid electrolyte; and a binder,

the binder containing a tetrafluoroethylene-based polymer composition,
the tetrafluoroethylene-based polymer composition being expandable and having a thermal stability index (TII) of 20 or higher.

The disclosure (9) relates to a self-supporting electrochemical device mixture film containing: at least one of an electrode active material or a solid electrolyte; and a binder,

the binder containing a tetrafluoroethylene-based polymer composition,
the tetrafluoroethylene-based polymer composition having a standard specific gravity of 2.200 or less and a 0.1% mass reduction temperature of 400°C or lower.

The disclosure (10) relates to a self-supporting electrochemical device mixture film containing: at least one of an electrode active material or a solid electrolyte; and a binder,

the binder containing a tetrafluoroethylene-based polymer composition,
the tetrafluoroethylene-based polymer composition having a standard specific gravity of 2.200 or less and a 1.0% mass reduction temperature of 492°C or lower.

The disclosure (11) relates to the self-supporting electrochemical device mixture film according to the disclosure (10), wherein the tetrafluoroethylene-based polymer composition has a standard specific gravity of 2.130 or more and a 1.0% mass reduction temperature of 470°C or higher.
The disclosure (12) relates to the self-supporting electrochemical device mixture film according to the disclosure (10) or (11), wherein the tetrafluoroethylene-based polymer composition contains a tetrafluoroethylene-based polymer, and
the tetrafluoroethylene-based polymer is polytetrafluoroethylene.

The disclosure (13) relates to the self-supporting electrochemical device mixture film according to any one of the disclosures (10) to (12), wherein the tetrafluoroethylene-based polymer is contained in an amount of 99.95% by mass or more relative to the tetrafluoroethylene-based polymer composition.

The disclosure (14) relates to the self-supporting electrochemical device mixture film according to any one of the disclosures (1) to (13), wherein the self-supporting electrochemical device mixture film has a thickness of 300 μm or smaller.

The disclosure (15) relates to the self-supporting electrochemical device mixture film according to the disclosure (14), wherein the self-supporting electrochemical device mixture film has a thickness of 50 μm or greater and 200 μm or smaller.

The disclosure (16) relates to the self-supporting electrochemical device mixture film according to any one of the disclosures (1) to (15), wherein the tetrafluoroethylene-based polymer composition is substantially free from a compound represented by the following formula (3):

Formula (3): $(H-(CF_2)_8-SO_3)_qM^2$

wherein $M^2$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and q is 1 or 2.

The disclosure (17) relates to the self-supporting electrochemical device mixture film according to the disclosure (16), wherein the compound represented by the formula (3) amounts to 25 ppb by mass or less relative to the tetrafluoroethylene-based polymer composition.

The disclosure (18) relates to the self-supporting electrochemical device mixture film according to any one of the disclosures (1) to (17), wherein the tetrafluoroethylene-based polymer composition contains at least one compound selected from the group consisting of a compound represented by the following formula (4) and a compound represented by the following formula (4'), each in an amount of 1000 ppb by mass or less relative to the tetrafluoroethylene-based polymer composition:

Formula (4) : $(H-(CF_2)_{15}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (4'): $(H-(CF_2)_{16}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2.

The disclosure (19) relates to the self-supporting electrochemical device mixture film according to any one of the disclosures (1) to (18), wherein the tetrafluoroethylene-based polymer composition contains at least one compound selected from the group consisting of a compound represented by the following formula (5) and a compound represented by the following formula (5'), each in an amount of 1000 ppb by mass or less relative to the tetrafluoroethylene-based polymer composition:

Formula (5) : $(H-(CF_2)_{13}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (5'): $(H-(CF_2)_{14}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2.

The disclosure (20) relates to the self-supporting electrochemical device mixture film according to any one of the disclosures (1) to (19), wherein the tetrafluoroethylene-based polymer contains a tetrafluoroethylene unit and a modifying monomer unit based on a modifying monomer copolymerizable with tetrafluoroethylene.

The disclosure (21) relates to the self-supporting electrochemical device mixture film according to any one of the disclosures (1) to (20), wherein the binder has a fibrous structure with a fibril diameter (median value) of 100 nm or smaller.
The disclosure (22) relates to the self-supporting electrochemical device mixture film according to any one of the disclosures (1) to (21), wherein the solid electrolyte is a sulfide-based solid electrolyte or an oxide-based solid electrolyte.
The disclosure (23) relates to the self-supporting electrochemical device mixture film according to any one of the disclosures (1) to (22), wherein the electrode active material is a lithium-nickel composite oxide.
The disclosure (24) relates to an electrode including the self-supporting electrochemical device mixture film according to any one of the disclosures (1) to (23).
The disclosure (25) relates to an electrochemical device including the electrode according to the disclosure (24).

- Advantageous Effects of Invention

The disclosure can provide a self-supporting electrochemical device mixture film exhibiting excellent strength and excellent flexibility without a support, and an electrode and an electrochemical device each including the self-supporting electrochemical device mixture film.

BRIEF DESCRIPTION OF DRAWINGS

FIG. 1 is a schematic cross-sectional view of a pressure cell used in ion-conductivity measurement of solid electrolyte mixture sheets in EXAMPLES.

DESCRIPTION OF EMBODIMENTS

The term "organic group" as used herein means a group containing one or more carbon atoms or a group formed by removing one hydrogen atom from an organic compound.
Examples of the "organic group" include

an alkyl group optionally containing one or more substituents,
an alkenyl group optionally containing one or more substituents,
an alkynyl group optionally containing one or more substituents,
a cycloalkyl group optionally containing one or more substituents,
a cycloalkenyl group optionally containing one or more substituents,
a cycloalkadienyl group optionally containing one or more substituents,
an aryl group optionally containing one or more substituents,
an aralkyl group optionally containing one or more substituents,
a non-aromatic heterocyclic group optionally containing one or more substituents,
a heteroaryl group optionally containing one or more substituents,
a cyano group,
a formyl group,
RaO-,
RaCO-,
$RaSo_2$-,
RaCOO-,
RaNRaCO-,
RaCONRa-,
RaOCO-,
$RaOSO_2$, and
$RaNRbSO_2$-
wherein Ras are each independently
an alkyl group optionally containing one or more substituents,
an alkenyl group optionally containing one or more substituents,
an alkynyl group optionally containing one or more substituents,
a cycloalkyl group optionally containing one or more substituents,
a cycloalkenyl group optionally containing one or more substituents,
a cycloalkadienyl group optionally containing one or more substituents,
an aryl group optionally containing one or more substituents,
an aralkyl group optionally containing one or more substituents,
a non-aromatic heterocyclic group optionally containing at least one substituent, or

a heteroaryl group optionally containing one or more substituents; and
Rbs are each independently H or an alkyl group optionally containing one or more substituents.

The organic group is preferably an alkyl group optionally containing one or more substituents.

The term "substituent" as used herein means a group that can substitute for an atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoylamino group, a halogen atom, a sulfamoylcarbamoyl group, a carbamoylsulfamoyl group, a dialiphatic oxyphosphinyl group, and a diaromatic oxyphosphinyl group.

The aliphatic group may be either saturated or unsaturated, and may contain a group such as a hydroxy group, an aliphatic oxy group, a carbamoyl group, an aliphatic oxycarbonyl group, an aliphatic thio group, an amino group, an aliphatic amino group, an acylamino group, or a carbamoylamino group. Examples of the aliphatic group include alkyl groups containing 1 to 8, preferably 1 to 4 carbon atoms in total, such as a methyl group, an ethyl group, a vinyl group, a cyclohexyl group, and a carbamoylmethyl group.

The aromatic group may contain, for example, a nitro group, a halogen atom, an aliphatic oxy group, a carbamoyl group, an aliphatic oxycarbonyl group, an aliphatic thio group, an amino group, an aliphatic amino group, an acylamino group, or a carbamoylamino group. Examples of the aromatic group include aryl groups containing 6 to 12, preferably 6 to 10 carbon atoms in total, such as a phenyl group, a 4-nitrophenyl group, a 4-acetylaminophenyl group, and a 4-methanesulfonylphenyl group.

The heterocyclic group may contain, for example, a halogen atom, a hydroxy group, an aliphatic oxy group, a carbamoyl group, an aliphatic oxycarbonyl group, an aliphatic thio group, an amino group, an aliphatic amino group, an acylamino group, or a carbamoylamino group. Examples of the heterocyclic group include 5- to 6-membered hetero rings containing 2 to 12, preferably 2 to 10 carbon atoms in total, such as a 2-tetrahydrofuryl group and a 2-pyrimidyl group.

The acyl group may contain, for example, an aliphatic carbonyl group, an aryl carbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, or a carbamoylamino group. Examples of the acyl group include acyl groups containing 2 to 8, preferably 2 to 4 carbon atoms in total, such as an acetyl group, a propanoyl group, a benzoyl group, and a 3-pyridinecarbonyl group.

The acylamino group may contain a group such as an aliphatic group, an aromatic group, or a heterocyclic group, and may contain, for example, an acetylamino group, a benzoylamino group, a 2-pyridinecarbonylamino group, or a propanoylamino group. Examples of the acylamino group include an acylamino group containing 2 to 12, preferably 2 to 8 carbon atoms in total, and an alkylcarbonylamino group containing 2 to 8 carbon atoms in total, such as an acetylamino group, a benzoylamino group, a 2-pyridinecarbonylamino group, or a propanoylamino group.

The aliphatic oxycarbonyl group may be either saturated or unsaturated, and may contain a group such as a hydroxy group, an aliphatic oxy group, a carbamoyl group, an aliphatic oxycarbonyl group, an aliphatic thio group, an amino group, an aliphatic amino group, an acylamino group, or a carbamoylamino group. Examples of the aliphatic oxycarbonyl group include alkoxycarbonyl groups containing 2 to 8, preferably 2 to 4 carbon atoms in total, such as a methoxycarbonyl group, an ethoxycarbonyl group, and a (t)-butoxycarbonyl group.

The carbamoyl group may contain a group such as an aliphatic group, an aromatic group, or a heterocyclic group. Examples of the carbamoyl group include an unsubstituted carbamoyl group and an alkylcarbamoyl group containing 2 to 9 carbon atoms in total. Preferred are an unsubstituted carbamoyl group and an alkylcarbamoyl group containing 2 to 5 carbon atoms in total, such as a N-methylcarbamoyl group, a N,N-dimethylcarbamoyl group, and a N-phenylcarbamoyl group.

The aliphatic sulfonyl group may be either saturated or unsaturated, and may contain a group such as a hydroxy group, an aromatic group, an aliphatic oxy group, a carbamoyl group, an aliphatic oxycarbonyl group, an aliphatic thio group, an amino group, an aliphatic amino group, an acylamino group, or a carbamoylamino group. Examples of the aliphatic sulfonyl group include alkylsulfonyl groups containing 1 to 6, preferably 1 to 4 carbon atoms in total, such as a methanesulfonyl group.

The aromatic sulfonyl group may contain a group such as a hydroxy group, an aliphatic group, an aliphatic oxy group, a carbamoyl group, an aliphatic oxycarbonyl group, an aliphatic thio group, an amino group, an aliphatic amino group, an acylamino group, or a carbamoylamino group. Examples of the aromatic sulfonyl group include aryl sulfonyl

groups containing 6 to 10 carbon atoms in total, such as a benzenesulfonyl group.

The amino group may contain a group such as an aliphatic group, an aromatic group, or a heterocyclic group.

The acylamino group may contain a group such as an acetylamino group, a benzoylamino group, a 2-pyridinecarbonylamino group, or a propanoylamino group. Examples of the acylamino group include acylamino groups containing 2 to 12, preferably 2 to 8 carbon atoms in total. More preferred are alkylcarbonylamino groups containing 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, and a 2-pyridinesulfonamide group.

The sulfamoyl group may contain a group such as an aliphatic group, an aromatic group, or a heterocyclic group. Examples of the sulfamoyl group include a sulfamoyl group, an alkylsulfamoyl group containing1 to 9 carbon atoms in total, a dialkylsulfamoyl group containing 2 to 10 carbon atoms in total, an aryl sulfamoyl group containing 7 to 13 carbon atoms in total, and a heterocyclic sulfamoyl group containing 2 to 12 carbon atoms in total. More preferred are a sulfamoyl group, an alkylsulfamoyl group containing 1 to 7 carbon atoms in total, a dialkylsulfamoyl group containing 3 to 6 carbon atoms in total, an aryl sulfamoyl group containing 6 to 11 carbon atoms in total, and a heterocyclic sulfamoyl group containing 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be either saturated or unsaturated, and may contain a group such as a methoxy group, an ethoxy group, an i-propyloxy group, a cyclohexyloxy group, or a methoxyethoxy group. Examples of the aliphatic oxy group include alkoxy groups containing 1 to 8, preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may each contain an aliphatic group, an aliphatic oxy group, a halogen atom, a carbamoyl group, a heterocyclic group fused with the aryl group, or an aliphatic oxycarbonyl group, preferably contain an aliphatic group containing 1 to 4 carbon atoms in total, an aliphatic oxy group containing 1 to 4 carbon atoms in total, a halogen atom, a carbamoyl group containing 1 to 4 carbon atoms in total, a nitro group, or an aliphatic oxycarbonyl group containing 2 to 4 carbon atoms in total.

The aliphatic thio group may be either saturated or unsaturated. Examples thereof include alkylthio groups containing 1 to 8, more preferably 1 to 6 carbon atoms in total, such as a methylthio group, an ethylthio group, a carbamoylmethylthio group, and a t-butylthio group.

The carbamoylamino group may contain a group such as an aliphatic group, an aryl group, or a heterocyclic group. Examples of the carbamoylamino group include a carbamoylamino group, an alkylcarbamoylamino group containing 2 to 9 carbon atoms in total, a dialkylcarbamoylamino group containing 3 to 10 carbon atoms in total, an aryl carbamoylamino group containing 7 to 13 carbon atoms in total, and a heterocyclic carbamoylamino group containing 3 to 12 carbon atoms in total. Preferred are a carbamoylamino group, an alkylcarbamoylamino group containing 2 to 7 carbon atoms in total, a dialkylcarbamoylamino group containing 3 to 6 carbon atoms in total, an aryl carbamoylamino group containing 7 to 11 carbon atoms in total, and a heterocyclic carbamoylamino group containing 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

The organic group contained in a hydrocarbon surfactant herein is preferably free from a fluorine atom.

The disclosure will be specifically described below.

The disclosure provides a self-supporting electrochemical device mixture film (hereafter, also referred to as self-supporting film (1) of the disclosure) containing: at least one of an electrode active material or a solid electrolyte; and a binder, the binder containing a tetrafluoroethylene (TFE)-based polymer composition, the TFE-based polymer composition containing: a TFE-based polymer; and at least one compound selected from the group consisting of a compound represented by the following formula (1) and a compound represented by the following formula (2):

Formula (1): $(H\text{-}(CF_2)_{m-1}\text{-}COO)_pM^1$

wherein m is 4 to 20; $M^1$ is H, a metal atom, $NR^5_4$ (where $R^5$s may be the same as or different from each other and each represent H or a C1-C10 organic group), imidazolium optionally containing a substituent, pyridinium optionally containing a substituent, or phosphonium optionally containing a substituent; and p is 1 or 2; and

Formula (2): $(H\text{-}(CF_2)_n\text{-}SO_3)_qM^2$

wherein n is 4 to 20; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

The disclosure also provides a self-supporting electrochemical device mixture film (hereafter, also referred to as

self-supporting film (2) of the disclosure) containing: at least one of an electrode active material or a solid electrolyte; and a binder, the binder containing a TFE-based polymer composition, the TFE-based polymer composition being expandable and having a 0.1% mass reduction temperature of 400°C or lower.

The disclosure also provides a self-supporting electrochemical device mixture film (hereafter, also referred to as self-supporting film (3) of the disclosure) containing: at least one of an electrode active material or a solid electrolyte; and a binder, the binder containing a TFE-based polymer composition, the TFE-based polymer composition being expandable and having a 1.0% mass reduction temperature of 492°C or lower.

The disclosure also provides a self-supporting electrochemical device mixture film (hereafter, also referred to as self-supporting film (4) of the disclosure) containing: at least one of an electrode active material or a solid electrolyte; and a binder, the binder containing a TFE-based polymer composition, the TFE-based polymer composition being expandable and having a thermal stability index (TII) of 20 or higher.

The disclosure also provides a self-supporting electrochemical device mixture film (hereafter, also referred to as self-supporting film (5) of the disclosure) containing: at least one of an electrode active material or a solid electrolyte; and a binder, the binder containing a TFE-based polymer composition, the TFE-based polymer composition having a standard specific gravity of 2.200 or less and a 0.1% mass reduction temperature of 400°C or lower.

The disclosure also provides a self-supporting electrochemical device mixture film (hereafter, also referred to as self-supporting film (6) of the disclosure) containing: at least one of an electrode active material or a solid electrolyte; and a binder, the binder containing a TFE-based polymer composition, the TFE-based polymer composition having a standard specific gravity of 2.200 or less and a 1.0% mass reduction temperature of 492°C or lower.

The self-supporting films (1) to (6) of the disclosure are herein collectively referred to as "self-supporting film of the disclosure", unless otherwise stated.

The self-supporting film of the disclosure containing a specific binder exhibits excellent strength and excellent flexibility without a support such as a base material. The self-supporting film of the disclosure therefore can be handled independently, exhibiting excellent handleability.

The term "self-supporting film" herein refers to a film capable of maintaining its film shape independently without a support such as a base material. The self-supporting film is a film that can be handled independently, unlike a film (supported film) formed on a support through deposition or similar processes.

It should be noted that, depending on the intended use or mode of use, the self-supporting film may be bonded or laminated to various base materials by appropriate bonding means such as adhesion or supported by various supports.

Whether the film is a self-supporting film or not is determined by the following method.

A film piece (10 × 10 cm), cut from a film with a thickness of 10 μm or greater and 1000 μm or smaller, is grasped at its center of gravity using tweezers (PTS07, available from Engineer Inc.). If the grasped film piece does not crack, split, or bend, the film is determined to be a self-supporting film.

The self-supporting film of the disclosure preferably has a thickness of 300 μm or smaller, more preferably 250 μm or smaller, still more preferably 200 μm or smaller, further more preferably 180 μm or smaller, particularly preferably 150 μm or smaller, while preferably 10 μm or greater, more preferably 15 μm or greater, still more preferably 20 μm or greater, further more preferably 30 μm or greater, further more preferably 40 μm or greater, particularly preferably 50 μm or greater.

The self-supporting film of the disclosure even with a small thickness as described above exhibits sufficient strength and sufficient flexibility, enabling downsizing and weight reduction of batteries.

The TFE-based polymer composition used for the binder in the self-supporting film (1) of the disclosure contains at least one compound selected from the group consisting of a compound represented by the following formula (1) (hereafter, also referred to as compound (1)) and a compound represented by the following formula (2) (hereafter, also referred to as compound (2)). The TFE-based polymer composition used for the binder in any of the self-supporting films (2) to (6) of the disclosure may contain any of the above compounds.

Formula (1) : $(H\text{-}(CF_2)_{m-1}\text{-}COO)_pM^1$

In the formula, m is 4 to 20; $M^1$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

Formula (2): $(H\text{-}(CF_2)_n\text{-}SO_3)_qM^2$

In the formula, n is 4 to 20; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

The metal atom for $M^1$ or $M^2$ may be a monovalent or divalent metal atom, an alkali metal (Group 1), or an alkaline earth metal (Group 2). Specific examples thereof include Na, K, and Li.

The four $R^5$s may be the same as or different from each other. $R^5$ is preferably H or a C1-C10 organic group, more preferably H or a C1-C4 organic group.

$M^1$ and $M^2$ are each preferably H, an alkali metal, or $NH_4$, more preferably H or $NH_4$.

In the formula (1), m is preferably 6 or larger, more preferably 8 or larger, still more preferably 11 or larger, further more preferably 13 or larger, particularly preferably 15 or larger, while preferably 18 or smaller, more preferably 16 or smaller.

In the formula (2), n is preferably 6 or larger, more preferably 8 or larger, still more preferably 11 or larger, further more preferably 13 or larger, particularly preferably 15 or larger, while preferably 18 or smaller, more preferably 16 or smaller.

When the TFE-based polymer composition contains the compound (1) (in an amount of greater than 0), the amount of the compound (1) may be 10 ppm by mass or less, preferably 5000 ppb by mass or less, more preferably 1000 ppb by mass or less, still more preferably 500 ppb by mass or less, further more preferably 100 ppb by mass or less, further more preferably 25 ppb by mass or less, further more preferably 15 ppb by mass or less, particularly preferably 10 ppb by mass or less, relative to the TFE-based polymer composition. The lower limit is not limited, and may be less than the lower limit of quantitation, 0.1 ppb by mass, or 1 ppb by mass.

When the TFE-based polymer composition contains the compound (2) (in an amount of greater than 0), the amount of the compound (2) may be 10 ppm by mass or less, preferably 5000 ppb by mass or less, more preferably 1000 ppb by mass or less, still more preferably 500 ppb by mass or less, further more preferably 100 ppb by mass or less, further more preferably 25 ppb by mass or less, further more preferably 15 ppb by mass or less, particularly preferably 10 ppb by mass or less, relative to the TFE-based polymer composition. The lower limit is not limited, and may be less than the lower limit of quantitation, 0.1 ppb by mass, or 1 ppb by mass.

The TFE-based polymer composition containing the compound (1) and/or the compound (2) can be obtained using a hydrocarbon surfactant. The TFE-based polymer composition used for the binder in the self-supporting film of the disclosure may contain a hydrocarbon surfactant in addition to the TFE-based polymer and the compound (1) and/or the compound (2). The amount of the hydrocarbon surfactant in the TFE-based polymer composition is not limited, and is typically 100 ppm by mass to 10% by mass.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The TFE-based polymer composition used for the binder in the self-supporting film of the disclosure is preferably substantially free from a compound represented by the following formula (3) (hereafter, also referred to as compound (3)):

Formula (3): $(H\text{-}(CF_2)_8\text{-}SO_3)_qM^2$

wherein $M^2$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and q is 1 or 2.

The phrase "substantially free from the compound (3)" means that the amount of the compound (3) is 25 ppb by mass or less relative to the TFE-based polymer composition. The amount of the compound (3) is preferably 20 ppb by mass or less, more preferably 15 ppb by mass or less, still more preferably 10 ppb by mass or less, relative to the TFE-based polymer composition. The lower limit is not limited, and may be 0 ppb by mass, 0.1 ppb by mass, or 1 ppb by mass.

The TFE-based polymer composition used for the binder in the self-supporting film of the disclosure contains at least one compound selected from the group consisting of a compound represented by the following formula (4) (hereafter, also referred to as compound (4)) and a compound represented by the following formula (4') (hereafter, also referred to as compound (4')). The amounts thereof are each preferably 1000 ppb by mass or less relative to the TFE-based polymer composition.

Formula (4) : $(H\text{-}(CF_2)_{15}\text{-}COO)_pM^1$

In the formula, $M^1$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

Formula (4'): $(H\text{-}(CF_2)_{16}\text{-}COO)_pM^1$

In the formula, $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

When the TFE-based polymer composition contains the compound (4) (in an amount of greater than 0), the amount of the compound (4) is more preferably 500 ppb by mass or less, still more preferably 250 ppb by mass or less, further more preferably 100 ppb by mass or less, further more preferably 50 ppb by mass or less, further more preferably 25 ppb by mass or less, further more preferably 15 ppb by mass or less, particularly preferably 10 ppb by mass or less, relative to the TFE-based polymer composition. The lower limit is not limited, and may be less than the lower limit of quantitation, 0.1 ppb by mass, or 1 ppb by mass.

When the TFE-based polymer composition contains the compound (4') (in an amount of greater than 0), the amount of the compound (4') is more preferably 500 ppb by mass or less, still more preferably 250 ppb by mass or less, further more preferably 100 ppb by mass or less, further more preferably 50 ppb by mass or less, further more preferably 25 ppb by mass or less, further more preferably 15 ppb by mass or less, particularly preferably 10 ppb by mass or less, relative to the TFE-based polymer composition. The lower limit is not limited, and may be less than the lower limit of quantitation, 0.1 ppb by mass, or 1 ppb by mass.

The TFE-based polymer composition used for the binder in the self-supporting film of the disclosure contains at least one compound selected from the group consisting of a compound represented by the following formula (5) (hereafter, also referred to as compound (5)) and a compound represented by the following formula (5') (hereafter, also referred to as compound (5')). The amounts thereof are each preferably 1000 ppb by mass or less relative to the TFE-based polymer composition.

Formula (5) : $(H\text{-}(CF_2)_{13}\text{-}COO)_pM^1$

In the formula, $M^1$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

Formula (5'): $(H\text{-}(CF_2)_{14}\text{-}COO)_pM^1$

In the formula, $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

When the TFE-based polymer composition contains the compound (5) (in an amount of greater than 0), the amount of the compound (5) is more preferably 500 ppm by mass or less, still more preferably 250 ppb by mass or less, further more preferably 100 ppb by mass or less, further more preferably 50 ppb by mass or less, further more preferably 25 ppb by mass or less, further more preferably 15 ppb by mass or less, particularly preferably 10 ppb by mass or less, relative to the TFE-based polymer composition. The lower limit is not limited, and may be less than the lower limit of quantitation, 0.1 ppb by mass, or 1 ppb by mass.

When the TFE-based polymer composition contains the compound (5') (in an amount of greater than 0), the amount of the compound (5') is more preferably 500 ppb by mass or less, still more preferably 250 ppb by mass or less, further more preferably 100 ppb by mass or less, further more preferably 50 ppb by mass or less, further more preferably 25 ppb by mass or less, further more preferably 15 ppb by mass or less, particularly preferably 10 ppb by mass or less, relative to the TFE-based polymer composition. The lower limit is not limited, and may be less than the lower limit of quantitation, 0.1 ppb by mass, or 1 ppb by mass.

The amounts of the compounds (1), (2), (3), (4), (4'), (5), and (5') are values measured by liquid chromatography mass spectrometry as described later in EXAMPLES.

The TFE-based polymer composition used for the binder in the self-supporting film of the disclosure may be a homopolymer of tetrafluoroethylene (TFE) or a TFE copolymer containing a polymerized unit based on TFE (TFE unit) and a polymerized unit based on a modifying monomer (hereinafter, also referred to as a "modifying monomer unit"). The copolymer containing a TFE unit and a modifying monomer unit may contain a modifying monomer unit in an amount of 10% by mass or less and may be a modified polytetrafluoroethylene (PTFE). The modified PTFE may contain 99.0% by mass or more of the TFE unit and 1.0% by mass or less of the modifying monomer unit. The modified PTFE may consist of the TFE unit and the modifying monomer unit.

In order to achieve improved binding force, and improved strength and improved flexibility of the mixture sheet, the TFE-based polymer is preferably the TFE copolymer, more preferably a modified PTFE.

The homopolymer of TFE refers to a polymer containing a polymerized unit based on a modifying monomer copolymerizable with TFE in an amount of less than 0.0001% by mass in all polymerized units.

In order to achieve improved expandability, improved binding force, and improved strength and improved flexibility of the mixture sheet, the TFE copolymer preferably contains a modifying monomer unit in an amount falling within a range of 0.00001 to 10% by mass in all polymerized units. The lower limit of the amount of the modifying monomer unit is more preferably 0.0001% by mass, still more preferably 0.001% by mass, further more preferably 0.005% by mass, even more preferably 0.010% by mass. The upper limit of the amount of the modifying monomer unit is preferably 5.0% by mass, more preferably 3.0% by mass, still more preferably 1.0% by mass, further more preferably 0.90% by mass, further more preferably 0.80% by mass, further more preferably 0.50% by mass, further more preferably 0.40% by mass, further more preferably 0.30% by mass, further more preferably 0.20% by mass, further more preferably 0.15% by mass, further more preferably 0.10% by mass, further more preferably 0.08% by mass, particularly preferably 0.05% by mass, most preferably 0.03% by mass.

The modifying monomer unit as used herein means a portion constituting the molecular structure of the TFE-based polymer and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene (CTFE); perfluorovinyl ether; perfluoroallyl ether; a (perfluoroalkyl)ethylene; and ethylene. One modifying monomer may be used alone or two or more modifying monomers may be used in combination.

The perfluorovinyl ether may be, but is not limited to, an unsaturated perfluoro compound represented by the following formula (A):

$$CF_2=CF\text{-}ORf \qquad (A)$$

wherein Rf is a perfluoro organic group. The term "perfluoro organic group" herein means an organic group in which all hydrogen atoms bonded to any carbon atom are replaced by fluorine atoms. The perfluoro organic group may have ether oxygen.

An example of the perfluorovinyl ether is a perfluoro(alkyl vinyl ether) (PAVE) represented by the formula (A) wherein Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include: those represented by the formula (A) wherein Rf is a C4-C9 perfluoro(alkoxyalkyl) group;

those represented by the formula (A) wherein Rf is a group represented by the following formula:

[Chem. 1]

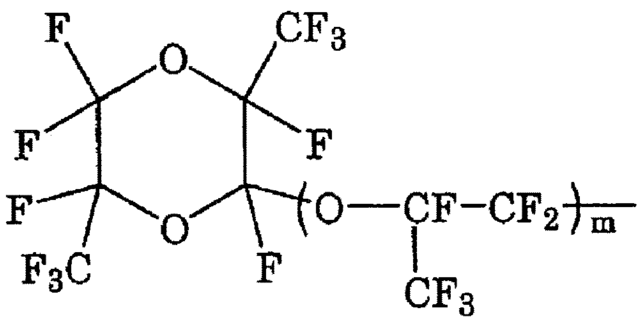

wherein m is 0 or an integer of 1 to 4; and

those represented by the formula (A) wherein Rf is a group represented by the following formula:

[Chem. 2]

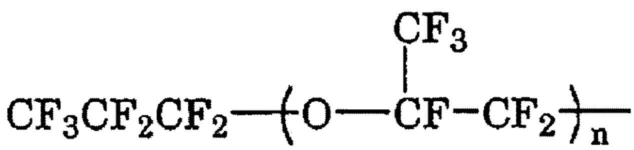

wherein n is an integer of 1 to 4.

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the following formula (B):

$$CF_2=CF-CF_2-ORf^1 \qquad (B)$$

wherein $Rf^1$ is a perfluoro organic group.

$Rf^1$ is preferably a C1-C10 perfluoroalkyl group or a C1-C10 perfluoroalkoxyalkyl group. The perfluoroallyl ether preferably includes at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably includes at least one selected from the group consisting of $CF_2=CF-CF_2-O-C_2F_5$, $CF_2=CF-CF_2-O-C_3F_7$, and $CF_2=CF-CF_2-O-C_4F_9$, and is still more preferably $CF_2=CF-CF_2-O-CF_2CF_2CF_3$.

In order to achieve improved expandability, improved binding force, and improved flexibility of the mixture sheet, the modifying monomer preferably includes at least one selected from the group consisting of PAVE, HFP, VDF, and CTFE, more preferably includes at least one selected from the group consisting of perfluoro(methyl vinyl ether) (PMVE), HFP, VDF, and CTFE, more preferably includes at least one selected from the group consisting of PMVE and HFP.

The TFE-based polymer may have a core-shell structure. An example of the TFE-based polymer having a core-shell structure is a TFE-based polymer including a core of a high-molecular-weight TFE-based polymer and a shell of a lower-molecular-weight TFE polymer or a TFE copolymer in a particle.

Another example thereof is a modified PTFE including a core of a high-molecular-weight PTFE and a shell of a lower-molecular-weight PTFE or a modified PTFE in a particle. An example of such a modified PTFE is a PTFE disclosed in JP 2005-527652 T.

For formation of a mixture sheet with still higher strength, the TFE-based polymer preferably has an endothermic peak temperature of 320°C or higher, more preferably 325°C or higher, still more preferably 330°C or higher, further more preferably 335°C or higher, further more preferably 340°C or higher, further more preferably 342°C or higher, particularly preferably 344°C or higher. The endothermic peak temperature is preferably 350°C or lower.

The endothermic peak temperature is the temperature corresponding to the minimum point on a heat-of-fusion curve obtained by performing differential scanning calorimetry (DSC) at a temperature-increasing rate of 10°C/min on a fluororesin that has never been heated to a temperature of 300°C or higher. When two or more minimum points are present in one melting peak, the temperatures corresponding to the respective peaks are considered as endothermic peak temperatures.

Preferably, the TFE-based polymer has at least one endothermic peak in a range of 333°C to 347°C on a heat-of-fusion curve drawn by increasing the temperature at a rate of 10°C/min using a differential scanning calorimeter (DSC), and has an enthalpy of fusion of 62 mJ/mg or higher at 290°C to 350°C calculated from the heat-of-fusion curve.

For formation of a mixture sheet with still higher strength, the TFE-based polymer preferably has a number average molecular weight (Mn) of $0.5 \times 10^6$ or more, more preferably $1.0 \times 10^6$ or more, still more preferably $1.5 \times 10^6$ or more, further more preferably $2.0 \times 10^6$ or more, particularly preferably $3.0 \times 10^6$ or more. The number average molecular weight is preferably $20.0 \times 10^6$ or less, more preferably $15.0 \times 10^6$ or less, still more preferably $12.0 \times 10^6$ or less, further more preferably $10.0 \times 10^6$ or less, particularly preferably $8.0 \times 10^6$ or less.

The number average molecular weight is the molecular weight determined in conformity with the method described in the following literature, based on the heat of crystallization estimated by performing temperature drop measurement with a differential scanning calorimeter (DSC) on the molten fluororesin. The measurement is performed five times, and the average of the three values excluding the maximum and minimum values is used.

Literature: Suwa, T.; Takehisa, M.; Machi, S., J. Appl. Polym. Sci. vol. 17, pp. 3253 (1973).

The amount of the TFE-based polymer in the TFE-based polymer composition used for the binder in the self-supporting film of the disclosure may be 95.0% by mass or more, preferably 98.0% by mass or more, more preferably 99.0% by mass or more, still more preferably 99.5% by mass or more, particularly preferably 99.9% by mass or more, most preferably 99.95% by mass or more, relative to the TFE-based polymer composition.

The amount of the TFE-based polymer composition in the binder in the self-supporting film of the disclosure may be 95.0% by mass or more, preferably 98.0% by mass or more, more preferably 99.0% by mass or more, still more preferably 99.5% by mass or more, particularly preferably 99.9% by mass or more, most preferably 99.95% by mass or more relative to the binder.

The TFE-based polymer composition used for the binder in any of the self-supporting films (1), (3), (4), and (6) of the disclosure may have a 0.1% mass reduction temperature of 400°C or lower. The TFE-based polymer composition used for the binder in any of the self-supporting films (2) and (5) of the disclosure has a 0.1% mass reduction temperature of 400°C or lower.

The TFE-based polymer composition having a 0.1% mass reduction temperature of 400°C or lower can be obtained using a hydrocarbon surfactant.

The 0.1% mass reduction temperature may be 350°C or higher.

The 0.1% mass reduction temperature is a value measured by the following method.

About 10 mg of a composition of a TFE-based polymer that has never been heated to 300°C or higher is precisely weighed out, and placed in a special aluminum pan, followed by thermogravimetry/differential thermal analysis (TG-DTA). The 0.1% mass reduction temperature is a temperature corresponding to a point at which the weight is reduced by 0.1 mass% when the temperature of the aluminum pan is increased in a temperature range from 25°C to 600°C at a rate of 10°C/min in the air atmosphere.

The TFE-based polymer composition used for the binder in any of the self-supporting films (1), (2), (4), and (5) of the disclosure may have a 1.0% mass reduction temperature of 492°C or lower. The TFE-based polymer composition used for the binder in any of the self-supporting films (3) and (6) of the disclosure has a 1.0% mass reduction temperature of 492°C or lower.

The TFE-based polymer composition having a 1.0% mass reduction temperature of 492°C or lower can be obtained using a hydrocarbon surfactant.

The 1.0% mass reduction temperature may be 400°C or higher, 420°C or higher, 450°C or higher, or 470°C or higher.

The 1.0% mass reduction temperature is a value measured by the following method.

About 10 mg of a composition of a TFE-based polymer that has never been heated to 300°C or higher is precisely weighed out, and placed in a special aluminum pan, followed by simultaneous thermogravimetry/differential thermal analysis (TG-DTA). The 1.0% mass reduction temperature is a temperature corresponding to a point at which the weight is reduced by 1.0 mass% when the temperature of the aluminum pan is increased in a temperature range from 25°C to 600°C at a rate of 10°C/min in the air atmosphere.

The TFE-based polymer composition used for the binder in any of the self-supporting films (1) to (3), (5), and (6) of the disclosure preferably has a TII of 20 or higher. The TFE-based polymer composition used for the binder in the self-supporting film (4) of the disclosure has a thermal stability index (TII) of 20 or higher.

The TFE-based polymer composition having a TII of 20 or higher can be obtained using a hydrocarbon surfactant. The TII is preferably 25 or higher, more preferably 30 or higher, still more preferably 35 or more, particularly preferably 40 or higher. The TII is also preferably 50 or lower.

The TII is measured in conformity with ASTM D4895-89.

The TFE-based polymer composition used for the binder in any of the self-supporting films (1), (5), and (6) of the disclosure is preferably expandable. The TFE-based polymer composition used for the binder in any of the self-supporting films (2) to (4) of the disclosure is expandable. When the TFE-based polymer composition is expandable, further improved binding force, and further improved strength and further improved flexibility of the resulting mixture sheet can be achieved.

The TFE-based polymer composition being expandable means that it does not break in the following expansion test.

A beading obtained by the above paste extrusion at a RR of 100 is heated at 230°C for 30 minutes, whereby a lubricant is removed from the beading. The beading (extrudate) is cut to an appropriate length and the resulting sample is clamped at each end with a gap between the clamps of 1.5 inches (38 mm), followed by heating to 300°C in an air-circulating furnace. The clamps are then moved apart at a desired speed (stretching speed) until the separation distance corresponds to the desired degree of stretching (total degree of stretching). The expansion test (stretching test) is performed in this manner. The stretching method is essentially in conformity with the method disclosed in US 4576869 B, except that the extrusion speed is different (51 cm/min, not 84 cm/min). The "degree of stretching" shows the increase in length attributable to expansion, and is typically expressed in relation to the original length. In the above stretching method, the stretching speed is 1000%/sec and the total degree of stretching is 2400%.

The TFE-based polymer composition used for the binder in any of the self-supporting films (1) to (4) of the disclosure preferably has a standard specific gravity (SSG) of 2.200 or less. The TFE-based polymer composition used for the binder in any of the self-supporting films (5) and (6) of the disclosure has a SSG of 2.200 or less. When the TFE-based polymer composition has a SSG of 2.200 or less, improved expandability, improved binding force, and improved strength and improved flexibility of the resulting mixture sheet can be achieved.

The SSG is more preferably 2.190 or less, still more preferably 2.180 or less, further more preferably 2.175 or less, even more preferably 2.170 or less, particularly preferably 2.165 or less.

The SSG is also preferably 2.130 or more.

The SSG is determined by the water displacement method in conformity with ASTM D792 using a sample molded in conformity with ASTM D4895.

The binder in the self-supporting film of the disclosure preferably has a fibrous structure with a fibril diameter (median value) of 100 nm or smaller. The fibril diameter (median value) is more preferably 90 nm or smaller, still more preferably 80 nm or smaller, further more preferably 70 nm or smaller, further more preferably 65 nm or smaller, particularly

preferably 62 nm or smaller. Such a binder with a fine fibril diameter present in the electrochemical device mixture binds the powder particles of the components (e.g., electrode active material and solid electrolyte) constituting the electrochemical device mixture, which further improves the strength and flexibility of the mixture sheet.

Excessive fibrillation tends to reduce the flexibility. The lower limit is not limited. Still, from the viewpoint of the strength, it is preferably 5 nm, more preferably 10 nm, still more preferably 15 nm, particularly preferably 20 nm, for example.

The fibril diameter (median value) is a value measured by the following method.

(1) A magnified image (7000x) of an electrochemical device mixture sheet is taken using a scanning electron microscope (S-4800 model, available from Hitachi, Ltd.), whereby an image is obtained.
(2) Two lines are drawn on this image at equal intervals in the horizontal direction, whereby the image is trisected.
(3) For all fibrillated binders on the upper line, the diameter is measured at three points for each fibrillated binder, and the average value is taken as the diameter of that fibrillated binder. The three points selected to measure the diameter include the intersection of the fibrillated binder and the line and locations 0.5 μm above and below the intersection (excluding unfibrillated binder primary particles).
(4) The operation of (3) is performed for all fibrillated binders on the lower line.
(5) Based on the first image, the field of view is moved 1 mm to the right, and another image is taken. The diameters of fibrillated binders are measured through (3) and (4) above. The above operation is repeated, and terminated when the number of measurements exceeds 80.
(6) The median value of the diameters of all fibrillated binders measured above is taken as the fibril diameter.

The binder in the self-supporting film of the disclosure can be prepared using the TFE-based polymer composition containing a TFE-based polymer.

The TFE-based polymer composition for preparing the binder is preferably substantially free from water. This can improve the strength and flexibility of the mixture sheet, and also can reduce or prevent deterioration of battery characteristics. Moreover, the electrode active material or solid electrolyte to be used together can be selected from a wide range of selections, which is advantageous in terms of the production process. The phrase "substantially free from water" means that the water content of the TFE-based polymer composition is 0.050% by mass or less.

The water content is preferably 0.040% by mass or less, more preferably 0.020% by mass or less, still more preferably 0.010% by mass or less, further more preferably 0.005% by mass or less, particularly preferably 0.002% by mass or less.

The water content is determined by the following method.

The mass of the TFE-based polymer composition is weighed before and after heating at 150°C for two hours, and the water content is calculated by the following expression. The sample is taken three times, and this calculation is performed for each sample and the values are averaged.

Water content (% by mass) = [(mass (g) of TFE-based polymer composition before heating) - (mass (g) of TFE-based polymer composition after heating)]/(mass (g) of TFE-based polymer composition before heating) $\times$ 100

The TFE-based polymer composition is preferably substantially free from a fluorine-containing compound (other than the compounds (1) and (2) described above) having a molecular weight of 1000 or less. The phrase "substantially free from a fluorine-containing compound" means that the amount of the fluorine-containing compound is 25 ppb by mass or less relative to the TFE-based polymer composition.

The amount of the fluorine-containing compound is preferably less than 25 ppb by mass, more preferably 10 ppb by mass or less, still more preferably less than 10 ppb by mass, further more preferably 5 ppb by mass or less, further more preferably 3 ppb by mass or less, further more preferably 1 ppb by mass or less, particularly preferably less than 1 ppb by mass. The lower limit is not limited, and may be an amount below the lower limit of quantitation.

The amount of the fluorine-containing compound having a molecular weight of 1000 or less is measured by the following method.

To a 1-g portion of a sample weighed out is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower limit of quantitation in this measurement method is 10 ppb by mass.

The amount of the fluorine-containing compound having a molecular weight of 1000 or less can also be measured

by the following method.

To a 1-g portion of a sample weighed out is added 10 g (12.6 mL) of methanol, followed by ultrasonication at 60°C for two hours, standing at room temperature, and subsequent removal of solids, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Methanol standard solutions having five different known levels of fluorine-containing compound concentrations are prepared, and analyzed using a liquid chromatograph mass spectrometer. By first order approximation based on the methanol standard solution concentrations and the peak integral values in each concentration range, a calibration curve is created. The amount of the fluorine-containing compound contained in the extract is determined from the calibration curve, and converted to the amount of the fluorine-containing compound contained in the sample.

The lower limit of quantitation in this measurement method is 1 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to the TFE-based polymer. The fluorine-containing surfactant herein is used in polymerization.

The fluorine-containing compound having a molecular weight of 1000 or less may be a compound that is not added in polymerization, for example, a compound that is produced as a by-product in polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include the TFE-based polymer.

The hydrophilic group may be, for example, -COOM, - $SO_2M$, or -$SO_3M$, and examples include anionic groups such as -COOM and -$SO_3M$ wherein M is H, a metal atom, $NR^1_4$, imidazolium optionally containing a substituent, pyridinium optionally containing a substituent, or phosphonium optionally containing a substituent; and $R^1$ is H or an organic group.

The fluorine-containing surfactant may also be a fluorine-containing surfactant in which the anionic portion has a molecular weight of 1000 or less (fluorine-containing anionic surfactant). The "anionic portion" means a portion excluding the cation in the fluorine-containing surfactant. For example, in the case of $F(CF_2)_{n1}COOM$, the anionic portion refers to the portion "$F(CF_2)_{n1}COO$".

Examples of the fluorine-containing anionic surfactant include a compound represented by the following formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group containing 3 to 20 carbon atoms in which some or all of Hs are replaced by F; the alkylene group optionally containing one or more ether bonds in which some of Hs are replaced by Cl; and $Y^0$ is an anionic group.

The anionic group for $Y^0$ may be -COOM, -$SO_2M$, or - $SO_3M$, and may be -COOM or -$SO_3M$.

M is H, a metal atom, $NR^1_4$, imidazolium optionally containing a substituent, pyridinium optionally containing a substituent, or phosphonium optionally containing a substituent, wherein $R^1$ is H or an organic group.

Examples of the metal atom include an alkali metal (Group 1) and an alkaline earth metal (Group 2), such as Na, K, and Li.

$R^1$ may be H or a $C_{1-10}$ organic group, may be H or a $C_{1-4}$ organic group, and may be H or a $C_{1-4}$ alkyl group.

M may be H, a metal atom, or $NR^1_4$, may be H, an alkali metal (Group 1), an alkaline earth metal (Group 2), or $NR^1_4$, and may be H, Na, K, Li, or $NH_4$.

In $Rf^{n0}$, 50% or more of H atoms may be replaced by fluorine.

The fluorine-containing surfactant may be a single fluorine-containing surfactant or a mixture containing two or more fluorine-containing surfactants.

Examples of the fluorine-containing surfactant include compounds represented by the following formulas. The fluorine-containing surfactant may be a mixture of these compounds:

$F(CF_2)_7COOM$,

$F(CF_2)_5COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

and

[Chem. 3]

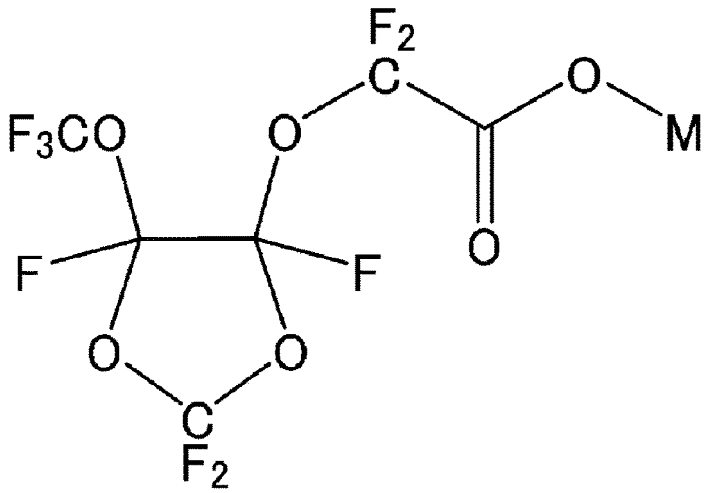

In each formula, M is H, a metal atom, $NR^1_4$, imidazolium optionally containing a substituent, pyridinium optionally containing a substituent, or phosphonium optionally containing a substituent, where $R^1$ is H or an organic group.

The TFE-based polymer composition of the disclosure is preferably substantially free from any of the fluorine-containing compounds represented by the above formulas.

In each of the above formulas, M may be H, a metal atom, or $NR^1_4$, may be H, an alkali metal (Group 1), an alkaline earth metal (Group 2), or $NR^1_4$, or may be H, Na, K, Li, or $NH_4$.

$R^1$ may be H or a $C_{1-10}$ organic group, may be H or a $C_{1-4}$ organic group, or may be H or a $C_{1-4}$ alkyl group.

The TFE-based polymer composition of the disclosure substantially free from any of the fluorine-containing compounds represented by the above formulas can further improve the strength and flexibility of the mixture sheet.

The phrase "substantially free from any of the fluorine-containing compounds represented by the above formulas" means that the amount of any of the fluorine-containing compounds is 25 ppb by mass or less relative to the TFE-based polymer composition.

The amount of the fluorine-containing compound is preferably less than 25 ppb by mass, more preferably 10 ppb by mass or less, still more preferably less than 10 ppb by mass, further more preferably 5 ppb by mass or less, further more preferably 3 ppb by mass or less, further more preferably 1 ppb by mass or less, particularly preferably less than 1 ppb by mass. The lower limit is not limited, and may be an amount below the lower limit of quantitation.

The TFE-based polymer composition of the disclosure is also preferably substantially free from a fluorine-containing compound represented by the following formula:

$$[C_{n-1}F_{2n-1}COO^{-}]M^{+}$$

wherein n is an integer of 9 to 14, preferably 9 to 12; and $M^{+}$ is a cation. This can further improve the strength and flexibility of the mixture sheet.

M constituting the cation $M^{+}$ in the formula is the same as M mentioned above.

The phrase "substantially free from the fluorine-containing compound represented by the formula" means that the amount of the fluorine-containing compound is 25 ppb by mass or less relative to the TFE-based polymer composition.

The amount of the fluorine-containing compound is preferably less than 25 ppb by mass, more preferably 10 ppb by mass or less, still more preferably less than 10 ppb by mass, further more preferably 5 ppb by mass or less, further more preferably 3 ppb by mass or less, further more preferably 1 ppb by mass or less, particularly preferably less than 1 ppb by mass. The lower limit is not limited, and may be an amount below the lower limit of quantitation.

The TFE-based polymer composition preferably has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

In order to achieve improved binding force, and improved strength and improved flexibility of the mixture sheet, the TFE-based polymer composition preferably has an extrusion pressure at a reduction ratio (RR) of 100 of 10 MPa or higher, more preferably 12 MPa or higher, still more preferably 15 MPa or higher, further more preferably 16 MPa or higher, particularly preferably 17 MPa or higher.

In order to achieve improved processibility, the extrusion pressure at a RR of 100 is preferably 50 MPa or lower, more preferably 40 MPa or lower, still more preferably 35 MPa or lower, further more preferably 30 MPa or lower, further more preferably 25 MPa or lower, further more preferably 21 MPa or lower, particularly preferably 20 MPa or lower.

The extrusion pressure at a RR of 100 is measured by the following method in conformity with the method described in JP 2002-201217 A.

To 100 g of the TFE-based polymer composition is added 21.7 g of lubricant (trade name: Isopar H (registered trademark), ExxonMobil Corp.), followed by mixing at room temperature for three minutes in a glass bottle. Next, the glass bottle is left to stand for at least one hour at room temperature (25°C) before extrusion, whereby a lubricated resin is obtained. The lubricated resin is paste-extruded through an orifice (diameter: 2.5 mm, land length: 11 mm, introduction angle: 30°) at room temperature at a reduction ratio of 100:1, whereby uniform beadings (extrudates) are obtained. The extrusion speed, i.e., ram speed is set to 20 inches/min (51 cm/min). The load at which the pressure is in equilibrium in the paste extrusion is measured, and the obtained value is divided by the cross-sectional area of the cylinder used in the paste extrusion, whereby the extrusion pressure is calculated.

In order to achieve improved binding force, and improved strength and improved flexibility of the mixture sheet, the TFE-based polymer composition preferably has an extrusion pressure at a RR of 300 of preferably 18 MPa or higher, more preferably 23 MPa or higher, still more preferably 25 MPa or higher, further more preferably 28 MPa or higher, even more preferably 30 MPa or higher, particularly preferably 32 MPa or higher.

In order to improve the processibility, the extrusion pressure at a RR of 300 is preferably 45 MPa or lower, more preferably 40 MPa or lower.

The extrusion pressure at a RR of 300 is measured by the following method.

Fifty grams of the TFE-based polymer composition and 11.00 g of hydrocarbon oil (trade name: Isopar-E, available from ExxonMobil Corporation) as an extrusion aid are mixed for three minutes in a polyethylene container. A cylinder of an extruder is filled with the resulting mixture at room temperature ($25 \pm 2$°C). A load of 0.47 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice (reduction ratio) is 300. The value obtained by dividing the load (N) at which the pressure is in equilibrium in the latter half of the extrusion operation by the cylinder cross-sectional area is defined as the extrusion pressure (MPa).

In order to achieve improved binding force, improved strength and improved flexibility of the mixture sheet, the TFE-based polymer composition preferably has a tensile strength at break of 10.0 N or higher, more preferably 13.0 N or higher, still more preferably 16.0 N or higher, further more preferably 19.0 N or higher, further more preferably 22.0 N or higher, further more preferably 25.0 N or higher, further more preferably 28.0 N or higher, further more preferably 30.0 N or higher, further more preferably 32.0 N or higher, particularly preferably 35.0 N or higher. The higher the tensile strength at break, the better. Still, the tensile strength at break may be 100.0 N or lower, 80.0 N or lower, or 50.0 N or lower.

The tensile strength at break is a value obtained by the following method.

An expanded beading (article produced by stretching a beading) obtained in the above expansion test is clamped between movable jaws with a gauge length of 5.0 cm to be fixed, and subjected to a tensile test at 25°C at a rate of 300 mm/min. The strength at break is measured as the tensile strength at break.

In order to achieve further improved binding force, and further improved strength and further improved flexibility of the mixture sheet, the TFE-based polymer composition is preferably expandable to 24 times its size.

The TFE-based polymer composition being expandable to 24 times its size means that it does not break in the above expansion test.

The TFE-based polymer composition may be in any form, and is preferably in a powdery form so that it can be mixed with an electrode active material or a solid electrolyte without a large amount of dispersion medium.

The TFE-based polymer composition may be in a form other than powder, such as a dispersion.

The TFE-based polymer composition preferably has an average primary particle size of 100 to 350 nm. With the average primary particle size within the above range, the TFE-based polymer has a high molecular weight, which leads to improved binding force and improved flexibility of the mixture sheet.

The average primary particle size is more preferably 330 nm or smaller, still more preferably 320 nm or smaller, further more preferably 300 nm or smaller, further more preferably 280 nm or smaller, particularly preferably 250 nm or smaller, while more preferably 150 nm or greater, still more preferably 170 nm or greater, further more preferably 200 nm or greater.

The average primary particle size is measured by the following method.

A TFE-based polymer aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

The average primary particle size can be measured by dynamic light scattering. In dynamic light scattering, a TFE-based polymer aqueous dispersion with a solid content concentration adjusted to about 1.0% by mass is prepared. The average primary particle size is determined from total 70 measured values using ELSZ-1000S (available from Otsuka Electronics Co., Ltd.) at 25°C. The refractive index of the solvent (water) is 1.3328 and the viscosity of the solvent (water) is 0.8878 mPa·s.

The TFE-based polymer composition may have an average secondary particle size of 350 μm or greater, preferably 400 μm or greater, more preferably 450 μm or greater, still more preferably 500 μm or greater, further more preferably 550 μm or greater, particularly preferably 600 μm or greater, while preferably 1000 μm or smaller, more preferably 900 μm or smaller, still more preferably 800 μm or smaller, further more preferably 700 μm or smaller.

The average secondary particle size is measured in conformity with JIS K 6891.

In order to achieve excellent handleability, the TFE-based polymer composition may have an average aspect ratio of 2.0 or lower, preferably 1.8 or lower, more preferably 1.7 or lower, still more preferably 1.6 or lower, further more preferably 1.5 or lower, further more preferably 1.4 or lower, even more preferably 1.3 or lower, particularly preferably 1.2 or lower, most preferably 1.1 or lower. The average aspect ratio may also be 1.0 or higher.

The average aspect ratio is determined as follows. A TFE-based polymer composition or a TFE-based polymer aqueous dispersion diluted to a solid content concentration of about 1% by mass is observed using a scanning electron microscope (SEM) and 200 or more randomly extracted particles are imaged. The average of the ratios of the major axes to the minor axes of the particles is determined as the average aspect ratio.

In order to achieve good moldability, and high tensile strength at break of the mixture sheet, the TFE-based polymer composition preferably contains fibrous particles with an aspect ratio of 1.5 or higher at a percentage of 20% to 60% of the total TFE-based polymer particles.

The percentage of the fibrous particles in all the particles can be calculated as follows.

(1) A TFE-based polymer powder containing the fibrous particles is imaged using a scanning electron microscope (SEM). The magnification can be set to, for example, 300x to 1000x.

(2) The captured image is imported into a computer. Using image analysis software such as ImageJ, all particles are classified into the above fibrous particles and particles with an aspect ratio of lower than 1.5.

(3) The percentage of the above fibrous particles is calculated by dividing the number of the above fibrous particles by the number of all particles, i.e., the total number of the above fibrous particles and the particles with an aspect ratio of lower than 1.5.

The fibrous particles with an aspect ratio of 1.5 or higher are formed, for example, when the TFE-based polymer composition is mixed with an electrode active material or a solid electrolyte.

In order to achieve excellent handleability, the TFE-based polymer composition preferably has an apparent density of 0.40 g/mL or higher, more preferably 0.43 g/mL or higher, still more preferably 0.45 g/mL or higher, further more preferably 0.48 g/mL or higher, particularly preferably 0.50 g/mL or higher. The upper limit is not limited, and may be 0.70 g/mL.

The apparent density is determined in conformity with JIS K 6892.

The TFE-based polymer composition can be suitably produced by, for example, a production method including:

(A) preparing an aqueous dispersion of a TFE-based polymer by emulsion polymerization using a hydrocarbon surfactant;
(B) coagulating the aqueous dispersion to obtain a wet powder; and (C) drying (heat-treating) the wet powder.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The hydrocarbon surfactant is preferably a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). Usable is, for example, a hydrocarbon surfactant containing a carboxy group or a group where a hydrogen atom of a carboxy group is replaced by an inorganic cation, from among specific hydrocarbon surfactants described later and other compounds with surface activity.

The hydrocarbon surfactant is also preferably a sulfonic acid-type hydrocarbon surfactant. The sulfonic acid-type hydrocarbon surfactant may be any surfactant that contains a $-SO_3H$ group, a $-OSO_3H$ group, or a group where a hydrogen atom of any of these groups is replaced by an inorganic cation (e.g., metal atom, ammonium). Usable is, for example, a hydrocarbon surfactant containing a $-SO_3H$ group, a $-OSO_3H$ group, or a group where a hydrogen atom of any of these groups is replaced by an inorganic cation, from among specific hydrocarbon surfactants described later and other compounds with surface activity.

In order to achieve good emulsification performance, the hydrocarbon surfactant is preferably water-soluble. The phrase "the hydrocarbon surfactant is water-soluble" means that the maximum concentration of the hydrocarbon surfactant dissolved in water is 100 ppm by mass or higher at 85°C. The maximum concentration in water is preferably 500 ppm by mass or higher, more preferably 1000 ppm by mass or higher, still more preferably 2000 ppm by mass or higher, further more preferably 3000 ppm by mass or higher, further more preferably 5000 ppm by mass or higher, further more preferably 1% by mass or higher, further more preferably 3% by mass or higher, further more preferably 5% by mass or higher, particularly preferably 10% by mass or higher, while it may be 50% by mass or lower.

The step (A) preferably includes a step of performing emulsion polymerization of tetrafluoroethylene alone or emulsion polymerization of tetrafluoroethylene and a modifying monomer copolymerizable with the tetrafluoroethylene, in the presence of a specific hydrocarbon surfactant in an aqueous medium and a step of adding the specific hydrocarbon surfactant continuously in the emulsion polymerization step.

Adding the specific hydrocarbon surfactant continuously means, for example, adding the specific hydrocarbon surfactant not all at once, but adding over time and without interruption or adding in portions. The specific hydrocarbon surfactant is, for example, a hydrocarbon surfactant containing one or more carbonyl groups which are not in a carboxy group or a hydrocarbon surfactant obtained by radically treating or oxidizing the hydrocarbon surfactant containing one or more carbonyl groups which are not in a carboxyl group. The radical treatment may be any treatment that generates radicals in the hydrocarbon surfactant containing one or more carbonyl groups which are not in a carboxy group. Examples include a treatment in which deionized water and the hydrocarbon surfactant are added to a reactor, the reactor is hermetically sealed, the inside of the reactor is replaced with nitrogen, the reactor is heated and pressurized, a polymerization initiator is charged, the contents are stirred for a certain time, and then the reactor is depressurized to the atmospheric pressure, and the reactor is cooled. The oxidation treatment is a treatment in which an oxidizing agent is added to a hydrocarbon surfactant containing one or more carbonyl groups which are not in a carboxy group. Examples of the oxidizing agent include oxygen, ozone, hydrogen peroxide solution, manganese(IV) oxide, potassium permanganate, potassium dichromate, nitric acid, and sulfur dioxide. The above production method enables, even without a conventional fluorine-containing surfactant, the production of a TFE-based polymer having a molecular weight equivalent to a TFE-based polymer obtained by a conventional production method using a fluorine-containing surfactant.

In the production method, the step of continuously adding the specific hydrocarbon surfactant is preferably a step of starting to add the hydrocarbon surfactant to the aqueous medium when the solid content of the TFE-based polymer formed in the aqueous medium is less than 0.60% by mass. The specific hydrocarbon surfactant is preferably started to be added to the aqueous medium when the solid content is 0.5% by mass or less. The specific hydrocarbon surfactant is more preferably started to be added when the solid content is 0.3% by mass or less, still more preferably started to be added when the solid content is 0.2% by mass or less, further more preferably started to be added when the solid content is 0.1% by mass or less, particularly preferably started to be added when the polymerization is initiated. The solid content is a concentration based on the total amount of the aqueous medium and the TFE-based polymer.

In the step of continuously adding the specific hydrocarbon surfactant, the amount of the specific hydrocarbon surfactant added is preferably 0.01 to 10% by mass based on 100% by mass of the aqueous medium. The lower limit thereof is more preferably 0.05% by mass, still more preferably 0.1% by mass, while the upper limit thereof is more

preferably 5% by mass, still more preferably 1% by mass.

In the step of performing emulsion polymerization of tetrafluoroethylene alone or emulsion polymerization of tetrafluoroethylene and a modifying monomer copolymerizable with the tetrafluoroethylene in the presence of a specific hydrocarbon surfactant in an aqueous medium, the amount of the specific hydrocarbon surfactant is preferably large, and is preferably 0.0001 to 10% by mass based on 100% by mass of the aqueous medium. The lower limit thereof is more preferably 0.001% by mass, while the upper limit thereof is more preferably 1% by mass. Less than 0.0001% by mass of the surfactant may cause insufficient dispersibility. More than 10% by mass of the surfactant may fail to give the effects corresponding to its amount; on the contrary, such an amount of the surfactant may cause a reduction in the polymerization rate or even stop the reaction. The amount of the specific hydrocarbon surfactant is appropriately determined depending on the type of monomer used, the molecular weight of the target TFE-based polymer, and the like.

The specific hydrocarbon surfactant preferably includes at least one selected from the group consisting of surfactants represented by the formula: R-X (wherein R is a fluorine-free organic group containing one or more carbonyl groups which are not in a carboxy group and containing 1 to 2000 carbon atoms, X is, $-OSO_3X^1$, $-COOX^1$, or $-SO_3X^1$, wherein $X^1$ is H, a metal atom, $NR^1_4$, imidazolium optionally containing a substituent, pyridinium optionally containing a substituent, or phosphonium optionally containing a substituent, wherein $R^1$s are each H or an organic group (preferably, a fluorine-free organic group) and may be the same as or different from each other) and surfactants (e) described later. R preferably contains 500 or less carbon atoms, more preferably 100 or less carbon atoms, still more preferably 50 or less carbon atoms, further more preferably 30 or less carbon atoms.

The specific hydrocarbon surfactant preferably includes at least one selected from the group consisting of surfactants (a) represented by the following formula (a):

[Chem. 4]

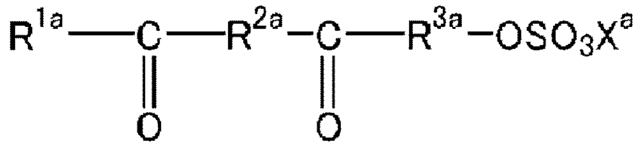

wherein $R^{1a}$ is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; $R^{2a}$ and $R^{3a}$ are each independently a single bond or a divalent linking group; the total number of carbon atoms of $R^{1a}$, $R^{2a}$, and $R^{3a}$ is 6 or more; $X^a$ is H, a metal atom, $NR^{4a}_4$, imidazolium optionally containing a substituent, pyridinium optionally containing a substituent, or phosphonium optionally containing a substituent, wherein $R^{4a}$s are each H or an organic group (preferably a fluorine-free organic group) and may be the same as or different from each other; and any two of $R^{1a}$, $R^{2a}$, and $R^{3a}$ optionally bind to each other to form a ring;

surfactants (b) represented by the following formula (b) :

[Chem. 5]

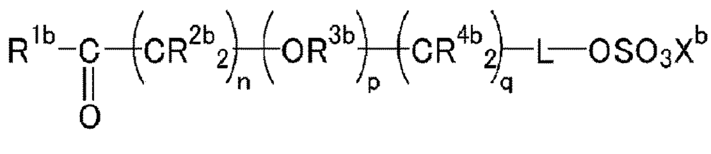

wherein $R^{1b}$ is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; $R^{2b}$ and $R^{4b}$ are each independently H or a substituent; $R^{3b}$ is an alkylene group containing 1 to 10 carbon atoms and optionally containing a substituent; n is an integer of 1 or more; p and q are each independently an integer of 0 or more; $X^b$ is H, a metal atom, $NR^{5b}_4$, imidazolium optionally containing a substituent, pyridinium optionally containing a substituent, or phosphonium optionally containing a substituent, wherein $R^{5b}$s are each H or an organic group (preferably a fluorine-free organic group) and may be the same as or different from each other; and any two of $R^{1b}$, $R^{2b}$, $R^{3b}$, and $R^{4b}$ optionally bind to each other to form a ring; L is a single bond, $-CO_2-B-*$, -OCO-B-*, $-CONR^{6b}-B-*$, $-NR^{6b}CO-B-*$, or -CO- other than the carbonyl groups in $-CO_2-B-$, -OCO-B-, $-CONR^{6b}-B-$, and $-NR^6CO-B-$, wherein

B is a single bond or an alkylene group containing 1 to 10 carbon atoms and optionally containing a substituent, $R^{6b}$ is H or an alkyl group containing 1 to 4 carbon atoms and optionally containing a substituent; and * indicates the side bonded to $-OSO_3X^b$ in the formula;
surfactants (c) represented by the following formula (c):

[Chem. 6]

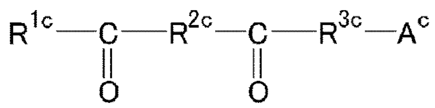

wherein $R^{1c}$ is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; $R^{2c}$ and $R^{3c}$ are each independently a single bond or a divalent linking group; the total number of carbon atoms of $R^{1c}$, $R^{2c}$, and $R^{3c}$ is 5 or more; $A^c$ is $-COOX^c$ or $-SO_3X^c$, wherein $X^c$ is H, a metal atom, $NR^{4c}_4$, imidazolium optionally containing a substituent, pyridinium optionally containing a substituent, or phosphonium optionally containing a substituent, wherein $R^{4c}$s are each H or an organic group (preferably, a fluorine-free organic group) and are the same as or different from each other; and any two of $R^{1c}$, $R^{2c}$, and $R^{3c}$ optionally bind to each other to form a ring;
surfactants (d) represented by the following formula (d):

[Chem. 7]

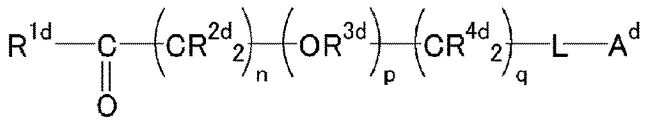

wherein $R^{1d}$ is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; $R^{2d}$ and $R^{4d}$ are each independently H or a substituent; $R^{3d}$ is an alkylene group containing 1 to 10 carbon atoms and optionally containing a substituent; n is an integer of 1 or more; p and q are each independently an integer of 0 or more; $A^d$ is $-SO_3X^d$ or $-COOX^d$, wherein $X^d$ is H, a metal atom, $NR^{5d}_4$, imidazolium optionally containing a substituent, pyridinium optionally containing a substituent, or phosphonium optionally containing a substituent, wherein $R^{5d}$s are each H or an organic group (preferably a fluorine-free organic group) and are the same as or different from each other; any two of $R^{1d}$, $R^{2d}$, $R^{3d}$ and $R^{4d}$ optionally bind to each other to form a ring; L is a single bond, $-CO_2-B-*$, -OCO-B-*, $-CONR^{6d}-B-*$, $-NR^{6d}CO-B-*$, or -CO- other than the carbonyl groups in $-CO_2-B-$, -OCO-B-, $-CONR^{6d}-B-$, and $-NR^{6d}CO-B-$, wherein B is a single bond or an alkylene group containing 1 to 10 carbon atoms and optionally containing a substituent, $R^{6d}$ is H or an alkyl group containing 1 to 4 carbon atoms and optionally containing a substituent; and * indicates the side bonded to $A^d$ in the formula; and
surfactants (e) represented by the following formula (e):

[Chem. 8]

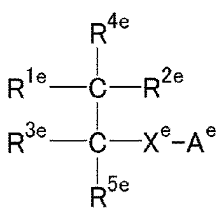

wherein $R^{1e}$ to $R^{5e}$ each represent H or a monovalent substituent, with the proviso that at least one of $R^{1e}$ or $R^{3e}$ represents a group represented by the formula: $-Y^e-R^{6e}$ and at least one of $R^{2e}$ or $R^{5e}$ represents a group represented by the formula: $-X^e-A^e$ or a group represented by the formula: $-Y^e-R^{6e}$;
$X^e$s at respective appearances are the same as or different from each other, and are each a divalent linking group or a

bond;

$A^e$s at respective appearances are the same as or different from each other, and are each -COOM$^e$, -SO$_3$M$^e$, or -OSO$_3$M$^e$, wherein M$^e$ is H, a metal atom, NR$^{7e}_4$, imidazolium optionally containing a substituent, pyridinium optionally containing a substituent, or phosphonium optionally containing a substituent, wherein $R^{7e}$ is H or an organic group (preferably, a fluorine-free organic group); and

$Y^e$s at respective appearances are the same as or different from each other, and are each a divalent linking group selected from the group consisting of -S(=O)$_2$-, -O-, -COO-, -OCO-, -CONR$^{8e}$-, and -NR$^{8e}$CO-, or a bond, wherein $R^{8e}$ is H or an organic group (preferably, a fluorine-free organic group);

$R^{6e}$s at respective appearances are the same as or different from each other, and are each an alkyl group containing 2 or more carbon atoms and optionally containing, between carbon atoms, at least one selected from the group consisting of a carbonyl group, an ester group, an amide group, and a sulfonyl group;

and any two of $R^{1e}$ to $R^{5e}$ optionally bind to each other to form a ring.

The surfactant (a) is described below.

In the formula (a), $R^{1a}$ is a linear or branched alkyl group containing 1 or more carbon atoms or a cyclic alkyl group containing 3 or more carbon atoms.

When containing 3 or more carbon atoms, the alkyl group optionally contains a carbonyl group (-C(=O)-) between two carbon atoms. When containing 2 or more carbon atoms, the alkyl group optionally contains the carbonyl group at an end of the alkyl group. In other words, acyl groups such as an acetyl group represented by $CH_3$-C(=O)-are also included in the alkyl group.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1a}$, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by $CH_3$-C(=O)-$CH_2$- is 3, the number of carbon atoms in the group represented by $CH_3$-C(=O)-$C_2H_4$-C(=O)-$C_2H_4$- is 7, and the number of carbon atoms in the group represented by $CH_3$-C(=O)- is 2.

In the alkyl group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{101a}$ (wherein $R^{101a}$ is an alkyl group).

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula, $R^{2a}$ and $R^{3a}$ are each independently a single bond or a divalent linking group.

Preferably, $R^{2a}$ and $R^{3a}$ are each independently a single bond, or a linear or branched alkylene group containing 1 or more carbon atoms, or a cyclic alkylene group containing 3 or more carbon atoms.

The alkylene group constituting $R^{2a}$ and $R^{3a}$ is preferably free from a carbonyl group.

In the alkylene group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{102a}$ (wherein $R^{102a}$ is an alkyl group).

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of $R^{1a}$, $R^{2a}$, and $R^{3a}$ is 6 or more. The total number of carbon atoms is preferably 8 or more, more preferably 9 or more, still more preferably 10 or more, and preferably 20 or less, more preferably 18 or less, still more preferably 15 or less.

Any two of $R^{1a}$, $R^{2a}$, and $R^{3a}$ optionally bind to each other to form a ring.

In the formula (a), $X^a$ is H, a metal atom, NR$^{4a}_4$, imidazolium optionally containing a substituent, pyridinium optionally containing a substituent, or phosphonium optionally containing a substituent, wherein $R^{4a}$ is H or an organic group (preferably, a fluorine-free organic group). The four $R^{4a}$s may be the same as or different from each other. The

organic group in $R^{4a}$ is preferably an alkyl group. $R^{4a}$ is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li.

$X^a$ is preferably H, an alkali metal (Group 1), an alkaline earth metal (Group 2), or $NR^{4a}_4$, more preferably H, Na, K, Li, or $NH_4$ because they are easily dissolved in water, still more preferably Na, K, or $NH_4$ because they are more easily dissolved in water, particularly preferably Na or $NH_4$, most preferably $NH_4$ because it can be easily removed. When $X^a$ is $NH_4$, the solubility of the surfactant in an aqueous medium is excellent, and the metal component is unlikely to remain in the TFE-based polymer or the final product.

$R^{1a}$ is preferably a linear or branched alkyl group containing 1 to 8 carbon atoms and free from a carbonyl group, a cyclic alkyl group containing 3 to 8 carbon atoms and free from a carbonyl group, a linear or branched alkyl group containing 2 to 45 carbon atoms and containing 1 to 10 carbonyl groups, a cyclic alkyl group containing 3 to 45 carbon atoms and containing a carbonyl group, or an alkyl group containing 3 to 45 carbon atoms and containing a monovalent or divalent heterocycle.

$R^{1a}$ is more preferably a group represented by the following formula:

[Chem. 9]

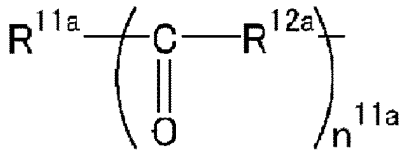

wherein $n^{11a}$ is an integer of 0 to 10; $R^{11a}$ is a linear or branched alkyl group containing 1 to 5 carbon atoms or a cyclic alkyl group containing 3 to 5 carbon atoms; $R^{12a}$ is an alkylene group containing 0 to 3 carbon atoms; and when $n^{11a}$ is an integer of 2 to 10, $R^{12a}$s may be the same as or different from each other.

$n^{11a}$ is preferably an integer of 0 to 5, more preferably an integer of 0 to 3, still more preferably an integer of 1 to 3.

The alkyl group for $R^{11a}$ is preferably free from a carbonyl group.

In the alkyl group for $R^{11a}$, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{103a}$ (wherein $R^{103a}$ is an alkyl group).

In the alkyl group for $R^{11a}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{12a}$ is an alkylene group containing 0 to 3 carbon atoms. The alkylene group preferably contains 1 to 3 carbon atoms.

The alkylene group for $R^{12a}$ may be either linear or branched.

The alkylene group for $R^{12a}$ is preferably free from a carbonyl group. $R^{12a}$ is more preferably an ethylene group ($-C_2H_4-$) or a propylene group ($-C_3H_6-$).

In the alkylene group for $R^{12a}$, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{104a}$ (wherein $R^{104a}$ is an alkyl group).

In the alkylene group for $R^{12a}$, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

$R^{2a}$ and $R^{3a}$ are preferably each independently an alkylene group containing 1 or more carbon atoms and free from a carbonyl group, more preferably an alkylene group containing 1 to 3 carbon atoms and free from a carbonyl group, still more preferably an ethylene group ($-C_2H_4-$) or a propylene group ($-C_3H_6-$).

Examples of the surfactant (a) include the following surfactants. In each formula, $X^a$ is as defined above.

[Chem. 10]

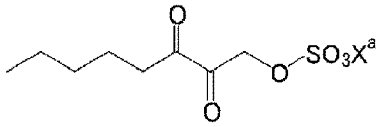
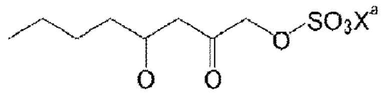
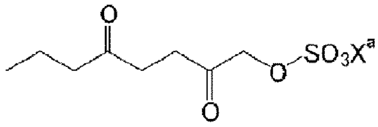
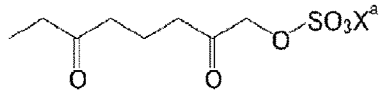
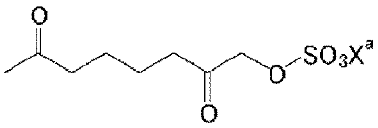
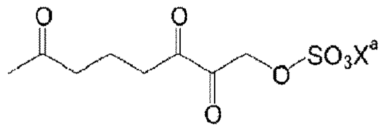
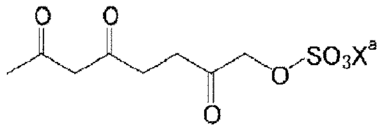
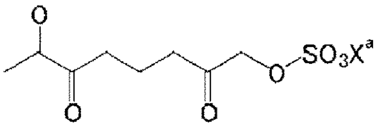
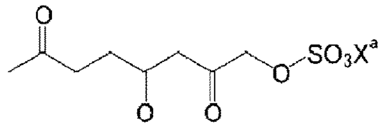

[Chem. 11]

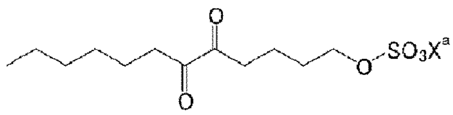
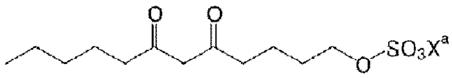
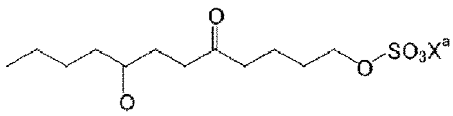
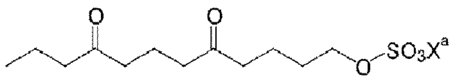
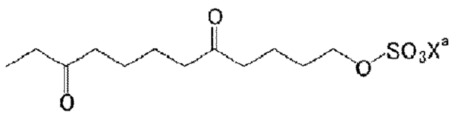
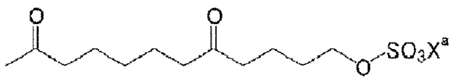
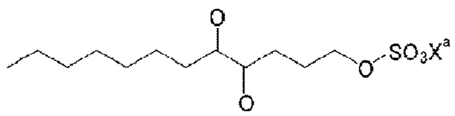
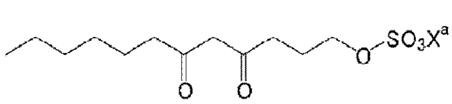
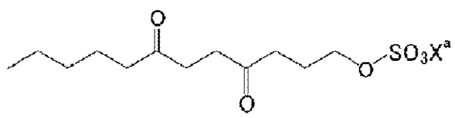
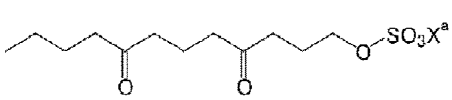
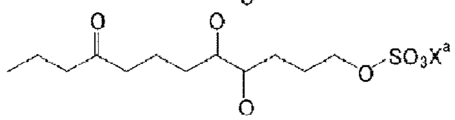
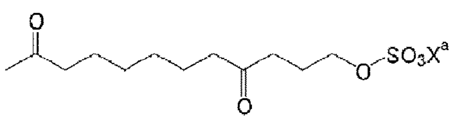

[Chem. 12]

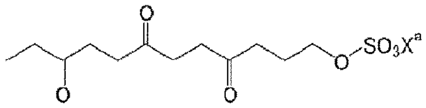
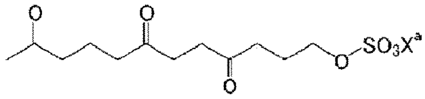
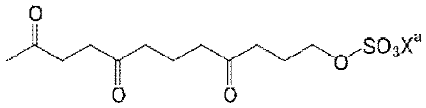
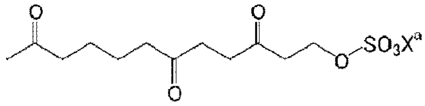
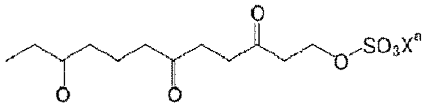
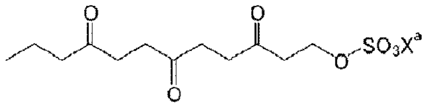
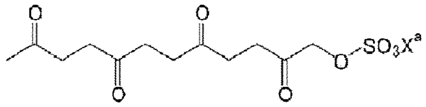
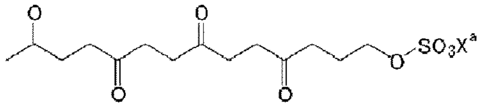

[Chem. 13]

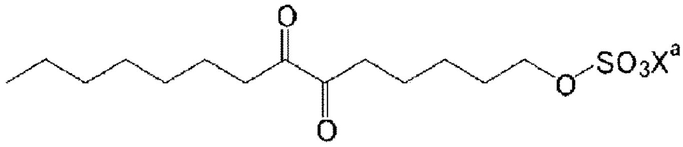

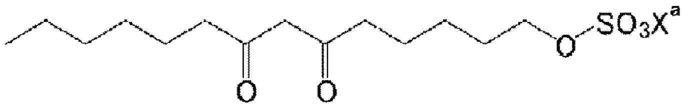

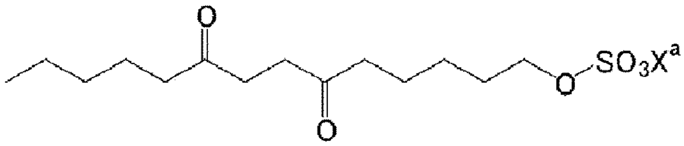

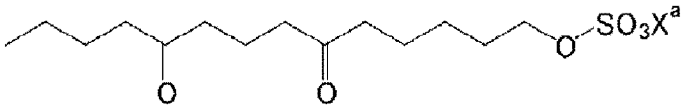

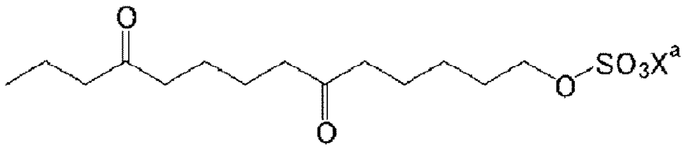

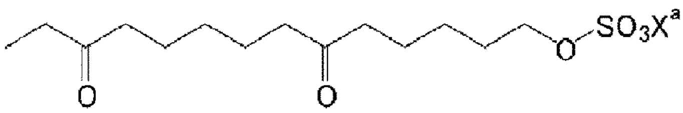

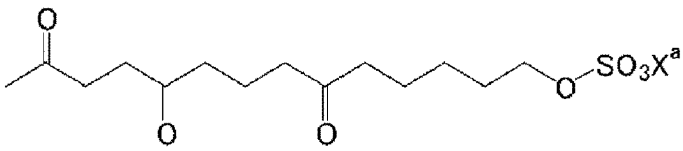

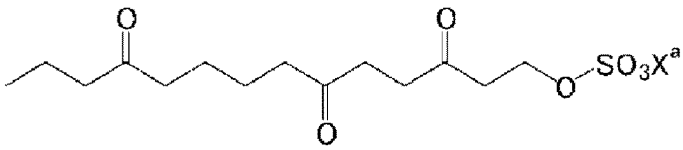

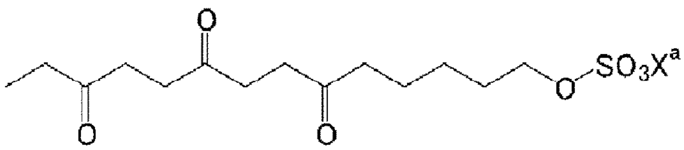

[Chem. 14]

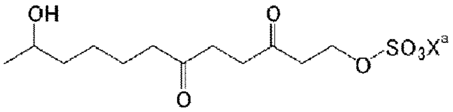

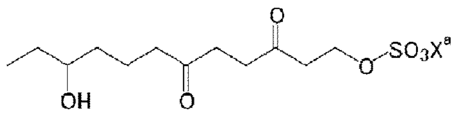

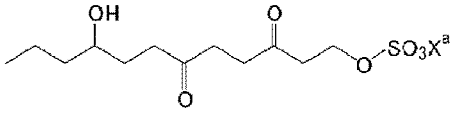

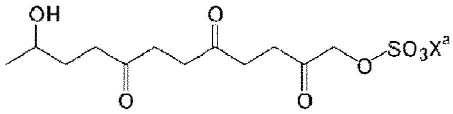

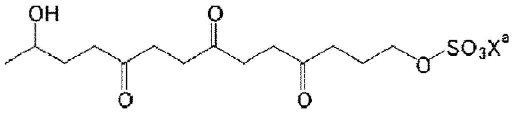

[Chem. 15]

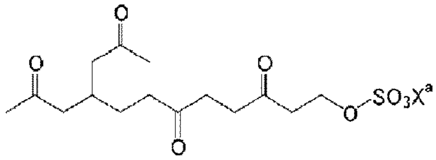

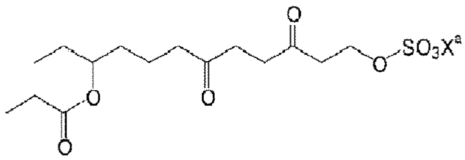

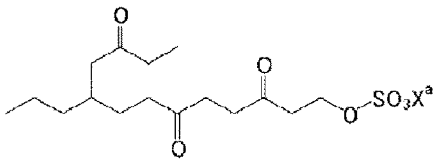

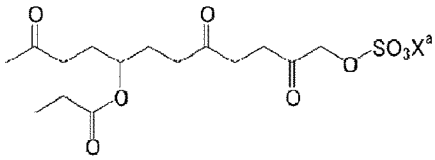

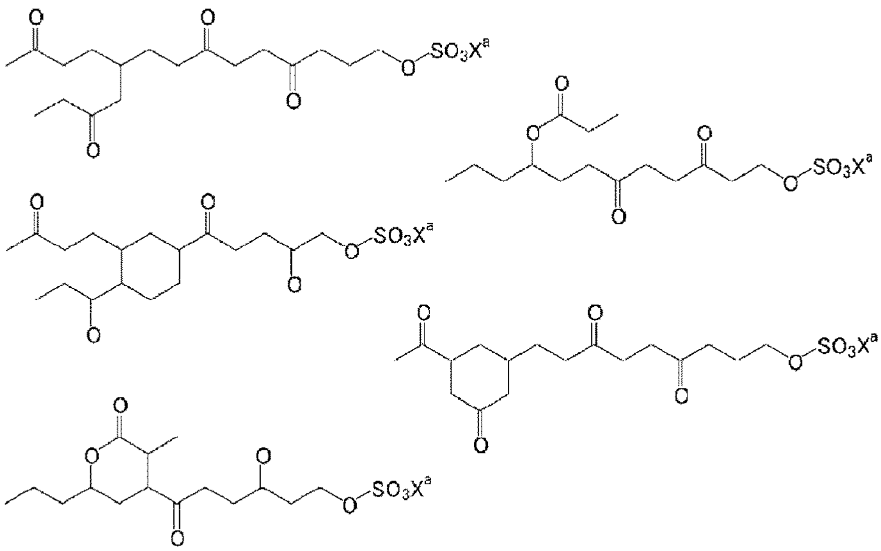

[Chem. 16]

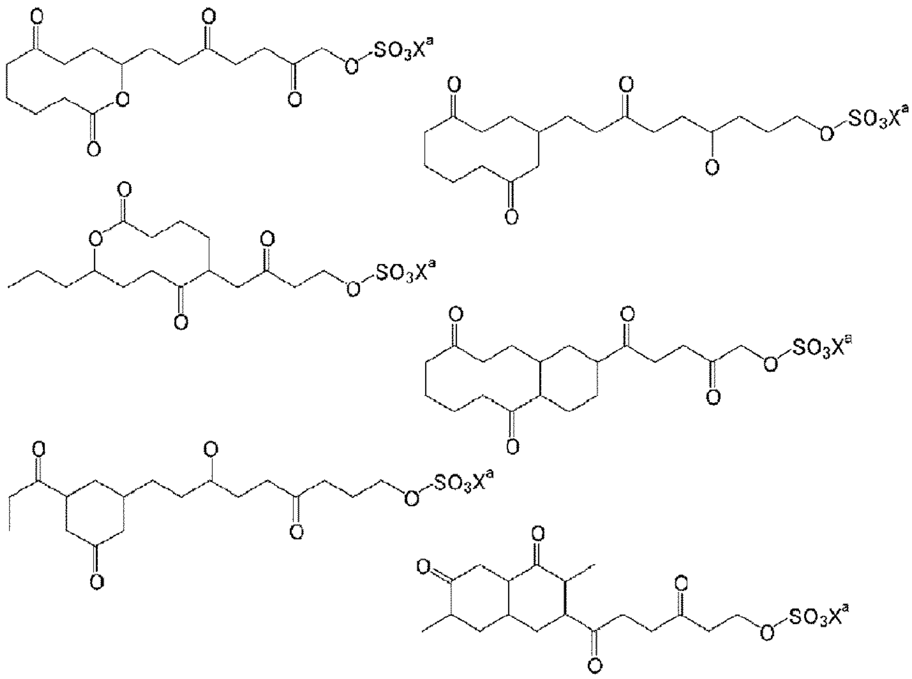

[Chem. 17]

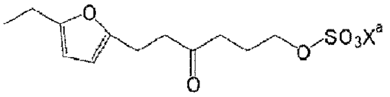
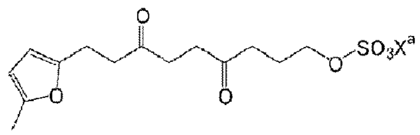
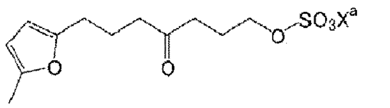
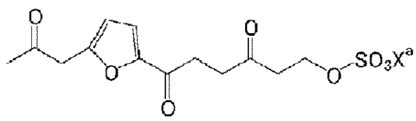
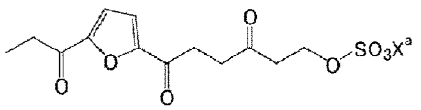
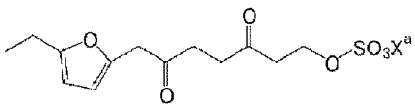
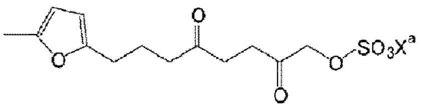
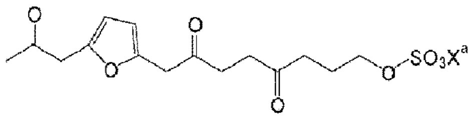
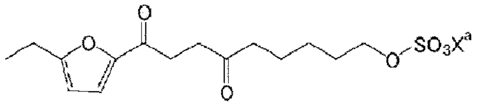

The surfactant (a) can be produced by the production method disclosed in WO 2020/022355.

Next, the surfactant (b) is described below.

In the formula (b), $R^{1b}$ is a linear or branched alkyl group containing 1 or more carbon atoms and optionally containing a substituent or a cyclic alkyl group containing 3 or more carbon atoms and optionally containing a substituent.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1b}$, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for $R^{1b}$ is preferably a halogen atom, a linear or branched alkyl group containing 1 to 10 carbon atoms, or a cyclic alkyl group containing 3 to 10 carbon atoms, or a hydroxy

group, particularly preferably a methyl group or an ethyl group.

The alkyl group for $R^{1b}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

$R^{1b}$ is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further more preferably a linear or branched alkyl group containing 1 to 3 carbon atoms and not containing a substituent, particularly preferably a methyl group ($-CH_3$) or an ethyl group ($-C_2H_5$), most preferably a methyl group ($-CH_3$).

In the formula (b), $R^{2b}$ and $R^{4b}$ are each independently H or a substituent. A plurality of $R^{2b}$s and $R^{4b}$s may be the same as or different from each other.

The substituent for each of $R^{2b}$ and $R^{4b}$ is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for each of $R^{2b}$ and $R^{4b}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

The alkyl group for each of $R^{2b}$ and $R^{4b}$ is preferably a linear or branched alkyl group containing 1 to 10 carbon atoms and free from a carbonyl group or a cyclic alkyl group containing 3 to 10 carbon atoms and free from a carbonyl group, more preferably a linear or branched alkyl group containing 1 to 10 carbon atoms and free from a carbonyl group, still more preferably a linear or branched alkyl group containing 1 to 3 carbon atoms and not containing a substituent, particularly preferably a methyl group ($-CH_3$) or an ethyl group ($-C_2H_5$).

$R^{2b}$ and $R^{4b}$ are preferably each independently H or a linear or branched alkyl group containing 1 to 10 carbon atoms and free from a carbonyl group, more preferably H or a linear or branched alkyl group containing 1 to 3 carbon atoms and not containing a substituent, still more preferably H, a methyl group ($-CH_3$), or an ethyl group ($-C_2H_5$), particularly preferably H.

In the formula (b), $R^{3b}$ is an alkylene group containing 1 to 10 carbon atoms and optionally containing a substituent. When a plurality of $R^{3b}$s are present, they may be the same as or different from each other.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably contains no substituent.

The alkylene group is preferably a linear or branched alkylene group containing 1 to 10 carbon atoms and optionally containing a substituent or a cyclic alkylene group containing 3 to 10 carbon atoms and optionally containing a substituent, preferably a linear or branched alkylene group containing 1 to 10 carbon atoms and free from a carbonyl group or a cyclic alkylene group containing 3 to 10 carbon atoms and free from a carbonyl group, more preferably a linear or branched alkylene group containing 1 to 10 carbon atoms and not containing a substituent, still more preferably a methylene group ($-CH_2-$), an ethylene group ($-C_2H_4-$), an isopropylene group ($-CH(CH_3)CH_2-$), or a propylene group ($-C_3H_6-$).

Any two of $R^{1b}$, $R^{2b}$, $R^{3b}$, and $R^{4b}$ optionally bind to each other to form a ring, but preferably not to form a ring.

In the formula (b), n is an integer of 1 or more. In the formula, n is preferably an integer of 1 to 40, more preferably an integer of 1 to 30, still more preferably an integer of 5 to 25, particularly preferably an integer of 5 to 9 and 11 to 25.

In the formula (b), p and q are each independently an integer of 0 or more. p is preferably an integer of 0 to 10, more preferably 0 or 1. q is preferably an integer of 0 to 10, more preferably an integer of 0 to 5.

The sum of n, p, and q is preferably an integer of 5 or more. The sum of n, p, and q is more preferably an integer of 8 or more. The sum of n, p, and q is also preferably an integer of 60 or less, more preferably an integer of 50 or less, still more preferably an integer of 40 or less.

In the formula (b), $X^b$ is H, a metal atom, $NR^{5b}_4$, imidazolium optionally containing a substituent, pyridinium

optionally containing a substituent, or phosphonium optionally containing a substituent, wherein $R^{5b}$ is H or an organic group (preferably, a fluorine-free organic group). The four $R^{5b}$s may be the same as or different from each other. The organic group in $R^{5b}$ is preferably an alkyl group. $R^{5b}$ is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li. $X^b$ may be a metal atom or $NR^{5b}_4$ (wherein $R^{5b}$ is as defined above).

$X^b$ is preferably H, an alkali metal (Group 1), an alkaline earth metal (Group 2), or $NR^{5b}_4$, more preferably H, Na, K, Li, or $NH_4$ because they are easily dissolved in water, still more preferably Na, K, or $NH_4$ because they are more easily dissolved in water, particularly preferably Na or $NH_4$, most preferably $NH_4$ because it can be easily removed. When $X^b$ is $NH_4$, the solubility of the surfactant in an aqueous medium is excellent, and the metal component is unlikely to remain in the TFE-based polymer or the final product.

In the formula (b), L is a single bond, $-CO_2-B-*$, - OCO-B-*, $-CONR^{6b}-B-*$, $-NR^{6b}CO-B-*$, or -CO- other than the carbonyl groups in $-CO_2-B-$, -OCO-B-, $-CONR^{6b}-B-$, and $-NR^{6}CO-B-$, wherein B is a single bond or an alkylene group containing 1 to 10 carbon atoms and optionally containing a substituent, $R^{6b}$ is H or an alkyl group containing 1 to 4 carbon atoms and optionally containing a substituent. The alkylene group more preferably contains 1 to 5 carbon atoms. $R^{6b}$ is more preferably H or a methyl group; and * indicates the side bonded to $-OSO_3X^b$ in the formula.

L is preferably a single bond.

The surfactant (b) is preferably a compound represented by the following formula:

[Chem. 18]

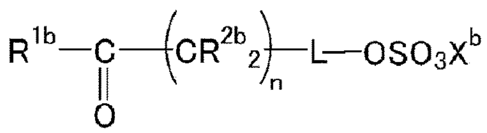

wherein $R^{1b}$, $R^{2b}$, L, n, and $X^b$ are as defined above.

The surfactant (b) preferably has a $^1H$-NMR spectrum in which all peak intensities observed in a chemical shift range of 2.0 to 5.0 ppm give an integral value of 10% or higher.

The surfactant (b) preferably has a $^1H$-NMR spectrum in which all peak intensities observed in a chemical shift range of 2.0 to 5.0 ppm give an integral value within the above range. In this case, the surfactant preferably has a ketone structure in the molecule.

The integral value of the surfactant (b) is more preferably 15 or more, and preferably 95 or less. The integral value is more preferably 80 or less, still more preferably 70 or less.

The integral value is determined using a heavy water solvent at room temperature. The heavy water content is adjusted to 4.79 ppm.

Examples of the surfactant (b) include

$CH_3C(O)CH_2CH_2CH_2CH_2CH_2CH_2CH_2CH_2CH_2OSO_3Na$,

$CH_3C(O)CH_2CH_2CH_2CH_2CH_2CH_2CH_2CH_2OSO_3Na$,

$CH_3C(O)CH_2CH_2CH_2CH_2CH_2CH_2CH_2OSO_3Na$,

$CH_3C(O)CH_2CH_2CH_2CH_2CH_2CH_2OSO_3Na$,

$CH_3C(O)CH_2CH_2CH_2CH_2CH_2OSO_3Na$,

$CH_3C(O)CH_2CH_2CH_2CH_2OSO_3Na$,

$(CH_3)_3CC(O)CH_2CH_2CH_2CH_2CH_2CH_2CH_2CH_2CH_2OSO_3Na$,

$(CH_3)_2CHC(O)CH_2CH_2CH_2CH_2CH_2CH_2CH_2CH_2CH_2OSO_3Na$,

$(CH_2)_5CHC(O)CH_2CH_2CH_2CH_2CH_2CH_2CH_2CH_2CH_2OSO_3Na$,

$CH_3CH_2C(O)CH_2CH_2CH_2CH_2CH_2CH_2CH_2CH_2OSO_3Na$,

$CH_3CH_2CH_2C(O)CH_2CH_2CH_2CH_2CH_2CH_2CH_2OSO_3Na$,

$CH_3CH_2CH_2CH_2C(O)CH_2CH_2CH_2CH_2CH_2CH_2OSO_3Na$,

$CH_3CH_2CH_2CH_2CH_2C(O)CH_2CH_2CH_2CH_2CH_2OSO_3Na$,

$CH_3CH_2CH_2CH_2CH_2CH_2C(O)CH_2CH_2CH_2CH_2OSO_3Na$,

$CH_3CH_2CH_2CH_2CH_2CH_2CH_2C(O)CH_2CH_2CH_2OSO_3Na$,

$CH_3CH_2CH_2CH_2CH_2CH_2CH_2CH_2C(O)CH_2CH_2OSO_3Na$,

$CH_3CH_2CH_2CH_2CH^2CH_2CH_2CH_2CH_2C(O)CH_2OSO_3Na$,

$CH_3C(O)CH_2CH_2CH_2CH_2CH_2CH_2CH_2CH_2CH_2OCH_2CH_2OSO_3Na$,

$CH_3C(O)CH_2CH_2CH_2CH_2CH_2CH_2CH_2CH_2CH_2C(O)NHCH_2OSO_3Na$,

$CH_3C(O)CH_2CH_2CH_2CH_2CH_2CH_2CH_2CH_2CH_2NHC(O)CH_2OSO_3Na$,

$CH_3C(O)CH_2CH_2CH_2CH_2CH_2CH_2CH_2CH_2CH_2C(O)OSO_3Na$,

$CH_3C(O)CH_2CH_2CH_2CH_2CH_2CH_2CH_2CH_2CH_2C(O)OCH_2OSO_3Na$,

$CH_3C(O)CH_2CH_2CH_2CH_2CH_2CH_2CH_2CH_2CH_2OC(O)CH_2OSO_3Na$,

$CH_3C(O)CH_2CH_2CH_2CH_2CH_2CH_2CH_2CH_2CH_2OSO_3H$,

$CH_3C(O)CH_2CH_2CH_2CH_2CH_2CH_2CH_2CH_2CH_2OSO_3Li$,

$CH_3C(O)CH_2CH_2CH_2CH_2CH_2CH_2CH_2CH_2CH_2OSO_3K$,

$CH_3C(O)CH_2CH_2CH_2CH_2CH_2CH_2CH_2CH_2CH_2OSO_3NH_4$,

$CH_3C(O)CH_2CH_2CH_2CH_2CH_2CH_2CH_2CH_2CH(CH_3)_2OSO_3Na$,

$CH_3C(O)CH_2CH_2CH_2CH_2CH_2CH_2CH_2CH_2CH_2CH_2CH_2CH_2CH_2CH_2CH_2CH_2CH_2O\ SO_3Na$,

$CH_3C(O)CH_2CH_2CH_2CH_2CH_2CH_2CH_2CH_2CH_2CH_2CH_2CH_2CH_2CH_2CH_2CH_2OSO_3\ Na$,

$CH_3C(O)CH_2CH_2CH_2CH_2CH_2CH_2CH_2CH_2CH_2CH_2CH_2CH_2CH_2CH_2CH_2OSO_3Na$,

$CH_3C(O)CH_2CH_2CH_2CH_2CH_2CH_2CH_2CH_2CH_2CH_2CH_2CH_2CH_2CH_2OSO_3Na$,

$CH_3C(O)CH_2CH_2CH_2CH_2CH_2CH_2CH_2CH_2CH_2CH_2CH_2CH_2CH_2OSO_3Na$,

$CH_3C(O)CH_2CH_2CH_2CH_2CH_2CH_2CH_2CH_2CH_2CH_2CH_2CH_2OSO_3Na$,

$CH_3C(O)CH_2CH_2CH_2CH_2CH_2CH_2CH_2CH_2CH_2CH_2CH_2OSO_3Na$,

$CH_3C(O)CH_2CH_2CH_2CH_2CH_2CH_2CH_2CH_2CH_2CH_2OSO_3Na$,

$(CH_3)_3CC(O)CH_2CH_2CH_2CH_2CH_2CH_2CH_2CH_2CH_2CH_2CH_2CH_2CH_2CH_2CH_2CH_2\ CH_2OSO_3Na$,

$(CH_3)_2CHC(O)CH_2CH_2CH_2CH_2CH_2CH_2CH_2CH_2CH_2CH_2CH_2CH_2CH_2CH_2CH_2C\ H_2CH_2OSO_3Na$,

$(CH_2)_5CHC(O)CH_2CH_2CH_2CH_2CH_2CH_2CH_2CH_2CH_2CH_2CH_2CH_2CH_2CH_2CH_2C\ H_2CH_2OSO_3Na$,

$CH_3CH_2C(O)CH_2CH_2CH_2CH_2CH_2CH_2CH_2CH_2CH_2CH_2CH_2CH_2CH_2CH_2CH_2O\ SO_3Na$,

$CH_3CH_2CH_2CH_2CH_2C(O)CH_2CH_2CH_2CH_2CH_2CH_2CH_2CH_2CH_2CH_2CH_2CH_2O\ SO_3Na$,

$CH_3CH_2CH_2CH_2CH_2CH_2CH_2CH_2C(O)CH_2CH_2CH_2CH_2CH_2CH_2CH_2CH_2CH_2O\ SO_3Na$,

$CH_3CH_2CH_2CH_2CH_2CH_2CH_2CH_2CH_2CH_2CH_2C(O)CH_2CH_2CH_2CH_2CH_2CH_2O\ SO_3Na$,

$CH_3CH_2CH_2CH_2CH_2CH_2CH_2CH_2CH_2CH_2CH_2CH_2CH_2C(O)CH_2CH_2CH_2CH_2O\ SO_3Na$,

$CH_3CH_2C(O)CH_2CH_2CH_2CH_2CH_2CH_2CH_2CH_2CH_2CH_2CH_2CH_2CH_2CH_2CH_2O\ CH_2CH_2O\text{-}SO_3Na$,

$CH_3CH_2C(O)CH_2CH_2CH_2CH_2CH_2CH_2CH_2CH_2CH_2CH_2CH_2CH_2CH_2CH_2CH_2C\ (O)\ NHCH_2CH_2OSO_3Na$,

$CH_3CH_2C(O)CH_2CH_2CH_2CH_2CH_2CH_2CH_2CH_2CH_2CH_2CH_2CH_2CH_2CH_2CH_2N\ HC(O)\ CH_2CH_2OSO_3Na$,

$CH_3CH_2C(O)CH_2CH_2CH_2CH_2CH_2CH_2CH_2CH_2CH_2CH_2CH_2CH_2CH_2CH_2CH_2C\ (O)\ OCH_2CH_2OSO_3Na$,

$CH_3CH_2C(O)CH_2CH_2CH_2CH_2CH_2CH_2CH_2CH_2CH_2CH_2CH_2CH_2CH_2CH_2CH_2O\ C(O)\ CH_2CH_2OSO_3Na$,

$CH_3CH_2C(O)CH_2CH_2CH_2CH_2CH_2CH_2CH_2CH_2CH_2CH_2CH_2CH_2CH_2CH_2CH_2C\ (O)OSO_3Na$,

$CH_3CH_2C(O)CH_2CH_2CH_2CH_2CH_2CH_2CH_2CH_2CH_2CH_2CH_2CH_2CH_2CH_2CH_2O\ SO_3H$,

$CH_3CH_2C(O)CH_2CH_2CH_2CH_2CH_2CH_2CH_2CH_2CH_2CH_2CH_2CH_2CH_2CH_2CH_2O\ SO_3Li$,

$CH_3CH_2C(O)CH_2CH_2CH_2CH_2CH_2CH_2CH_2CH_2CH_2CH_2CH_2CH_2CH_2CH_2CH_2O\ SO_3K$,

$CH_3CH_2C(O)CH_2CH_2CH_2CH_2CH_2CH_2CH_2CH_2CH_2CH_2CH_2CH_2CH_2CH_2CH_2O\ SO_3NH_4$, and

$CH_3C(O)CH_2CH_2CH_2CH_2CH_2CH_2CH_2CH_2CH_2CH_2CH_2CH_2CH_2CH_2CH_2CH_2CH_2C\ H_2CH_2CH_2CH_2OSO_3Na$.

The surfactant (b) can be produced by the production method disclosed in WO 2020/022355.

Next, the surfactant (c) is described below.

In the formula (c), $R^{1c}$ is a linear or branched alkyl group containing 1 or more carbon atoms or a cyclic alkyl group containing 3 or more carbon atoms.

When containing 3 or more carbon atoms, the alkyl group optionally contains a carbonyl group (-C(=O)-) between two carbon atoms. When containing 2 or more carbon atoms, the alkyl group optionally contains the carbonyl group at an end of the alkyl group. In other words, acyl groups such as an acetyl group represented by $CH_3$-C(=O)-are also included in the alkyl group.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1c}$, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by $CH_3$-C(=O)-$CH_2$- is 3, the number of carbon atoms in the group represented by $CH_3$-C(=O)-$C_2H_4$-C(=O) -$C_2H_4$- is 7, and the number of carbon atoms in the group represented by $CH_3$-C(=O)- is 2.

In the alkyl group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{101c}$ (wherein $R^{101c}$ is an alkyl group).

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula (c), $R^{2c}$ and $R^{3c}$ are each independently a single bond or a divalent linking group.

Preferably, $R^{2c}$ and $R^{3c}$ are each independently a single bond, or a linear or branched alkylene group containing 1 or more carbon atoms, or a cyclic alkylene group containing 3 or more carbon atoms.

The alkylene group constituting $R^{2c}$ and $R^{3c}$ is preferably free from a carbonyl group.

In the alkylene group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{102c}$ (wherein $R^{102c}$ is an alkyl group).

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of $R^{1c}$, $R^{2c}$, and $R^{3c}$ is 5 or more. The total number of carbon atoms is preferably 7 or more, more preferably 9 or more, and preferably 20 or less, more preferably 18 or less, still more preferably 15 or less.

Any two of $R^{1c}$, $R^{2c}$, and $R^{3c}$ optionally bind to each other to form a ring.

In the formula (c), $A^c$ is -$COOX^c$ or -$SO_3X^c$, wherein $X^c$ is H, a metal atom, $NR^{4c}{}_4$, imidazolium optionally containing a substituent, pyridinium optionally containing a substituent, or phosphonium optionally containing a substituent, wherein $R^{4c}$s are each H or an organic group (preferably, a fluorine-free organic group) and are the same as or different from each other. The organic group in $R^{4c}$ is preferably an alkyl group. $R^{4c}$ is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li.

$X^c$ is preferably H, an alkali metal (Group 1), an alkaline earth metal (Group 2), or $NR^{4c}{}_4$, more preferably H, Na, K, Li, or $NH_4$ because they are easily dissolved in water, still more preferably Na, K, or $NH_4$ because they are more easily dissolved in water, particularly preferably Na or $NH_4$, most preferably $NH_4$ because it can be easily removed. When $X^c$ is $NH_4$, the solubility of the surfactant in an aqueous medium is excellent, and the metal component is unlikely to remain in the TFE-based polymer or the final product.

$R^{1c}$ is preferably a linear or branched alkyl group containing 1 to 8 carbon atoms and free from a carbonyl group, a cyclic alkyl group containing 3 to 8 carbon atoms and free from a carbonyl group, a linear or branched alkyl group containing 2 to 45 carbon atoms and containing 1 to 10 carbonyl groups, a cyclic alkyl group containing 3 to 45 carbon atoms and containing a carbonyl group, or an alkyl group containing 3 to 45 carbon atoms and containing a monovalent or divalent heterocycle.

$R^{1c}$ is more preferably a group represented by the following formula:

[Chem. 19]

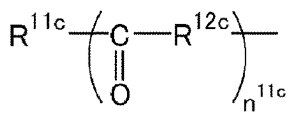

wherein $n^{11c}$ is an integer of 0 to 10; $R^{11c}$ is a linear or branched alkyl group containing 1 to 5 carbon atoms or a cyclic alkyl group containing 3 to 5 carbon atoms; $R^{12c}$ is an alkylene group containing 0 to 3 carbon atoms; and when $n^{11c}$ is an integer of 2 to 10, $R^{12c}$s may be the same as or different from each other.

$n^{11c}$ is preferably an integer of 0 to 5, more preferably an integer of 0 to 3, still more preferably an integer of 1 to 3.

The alkyl group for $R^{11c}$ is preferably free from a carbonyl group.

In the alkyl group for $R^{11c}$, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{103c}$ (wherein $R^{103c}$ is an alkyl group).

In the alkyl group for $R^{11c}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{12c}$ is an alkylene group containing 0 to 3 carbon atoms. The alkylene group preferably contains 1 to 3 carbon atoms.

The alkylene group for $R^{12c}$ may be either linear or branched.

The alkylene group for $R^{12c}$ is preferably free from a carbonyl group. $R^{12c}$ is more preferably an ethylene group ($-C_2H_4-$) or a propylene group ($-C_3H_6-$).

In the alkylene group for $R^{12c}$, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: $-O-C(=O)-R^{104c}$ (wherein $R^{104c}$ is an alkyl group).

In the alkylene group for $R^{12c}$, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

$R^{2c}$ and $R^{3c}$ are preferably each independently an alkylene group containing 1 or more carbon atoms and free from a carbonyl group, more preferably an alkylene group containing 1 to 3 carbon atoms and free from a carbonyl group, still more preferably an ethylene group ($-C_2H_4-$) or a propylene group ($-C_3H_6-$).

Examples of the surfactant (c) include the following surfactants. In each formula, $A^c$ is as defined above.

[Chem. 20]

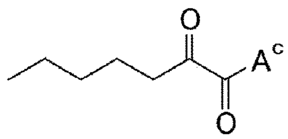
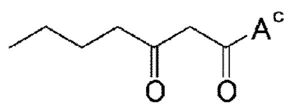
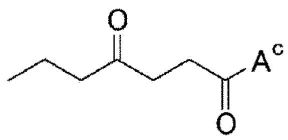
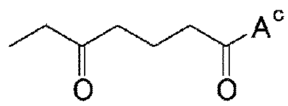
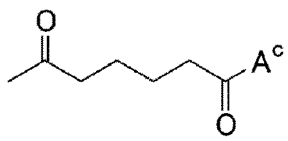
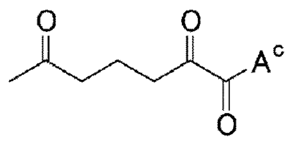
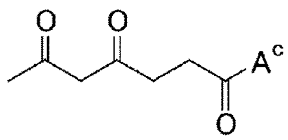
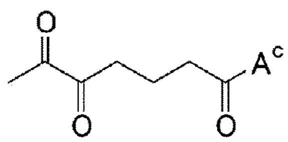
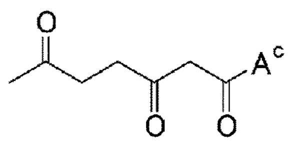

[Chem. 21]

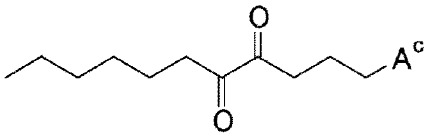

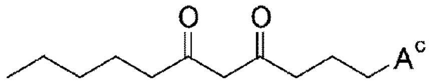

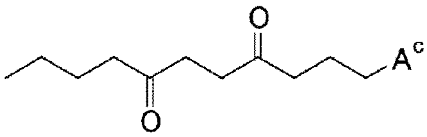

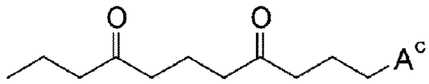

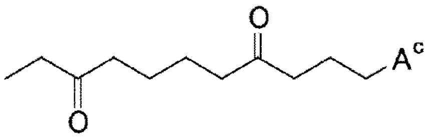

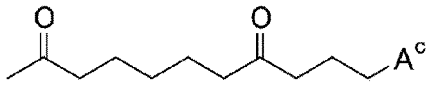

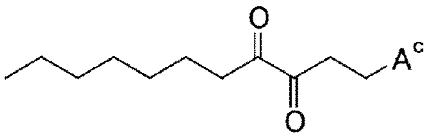

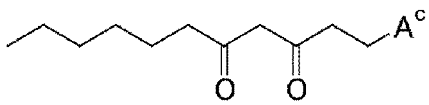

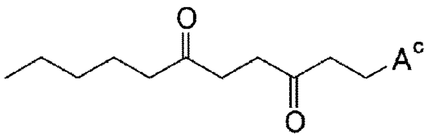

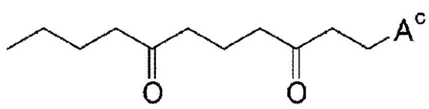

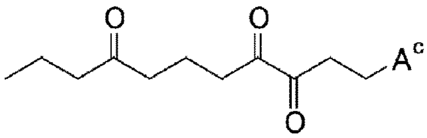

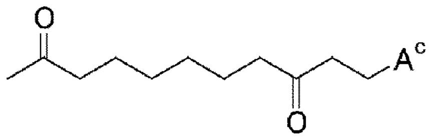

[Chem. 22]

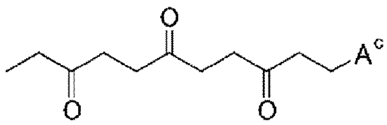

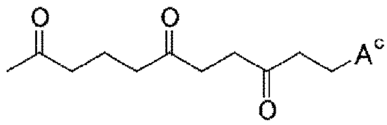

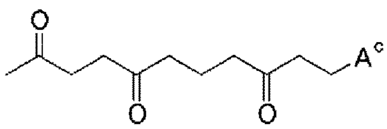

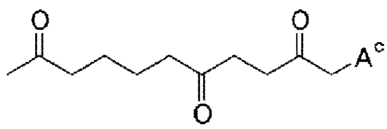

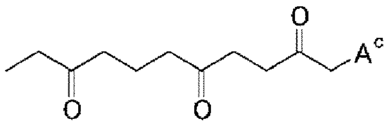

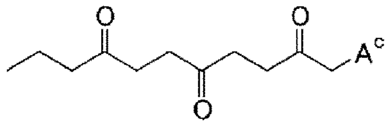

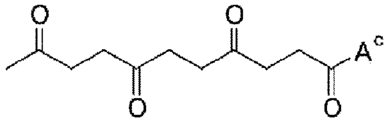

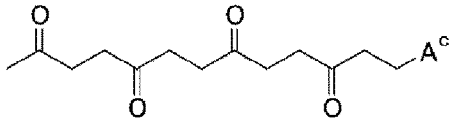

[Chem. 23]

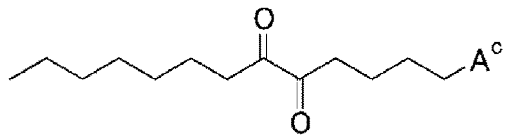

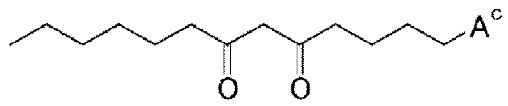

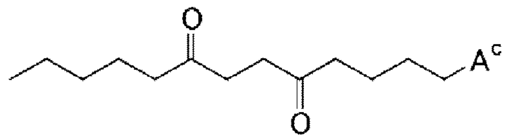

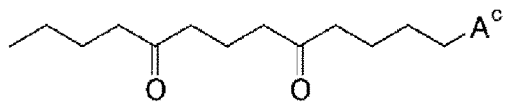

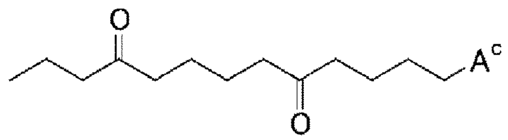

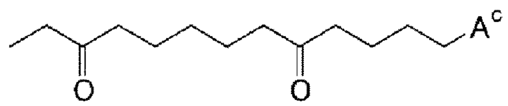

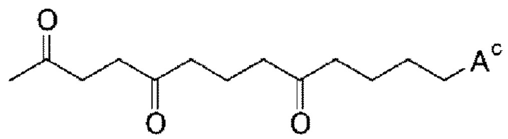

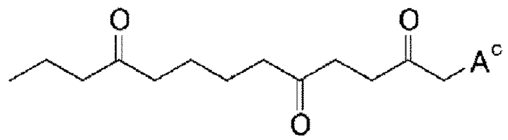

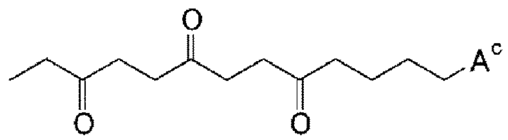

[Chem. 24]

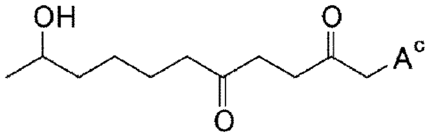
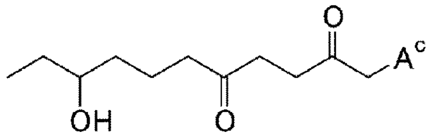
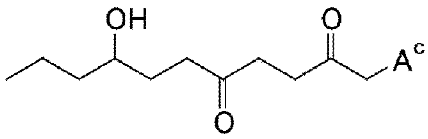
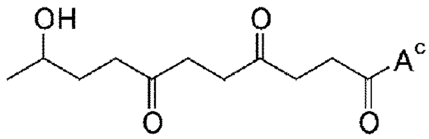
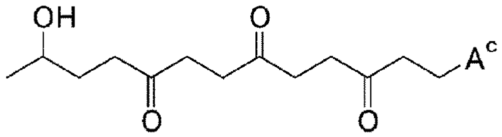

[Chem. 25]

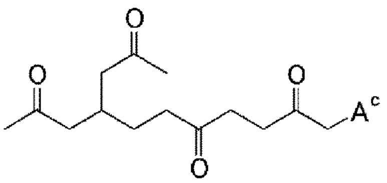
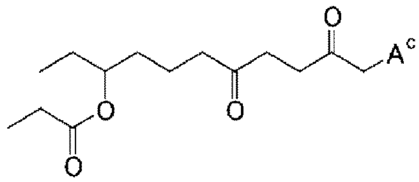
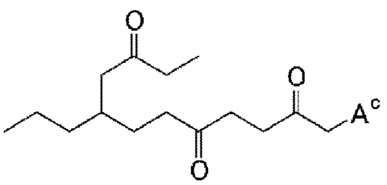
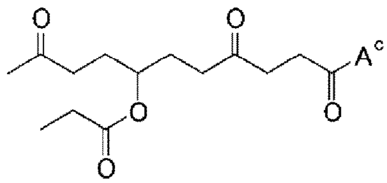
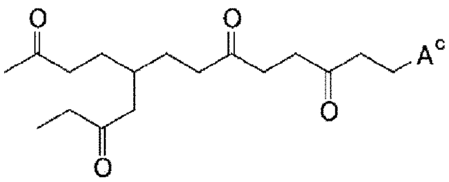
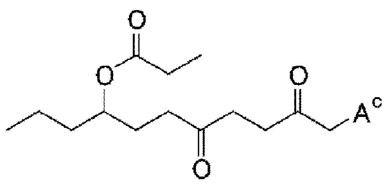
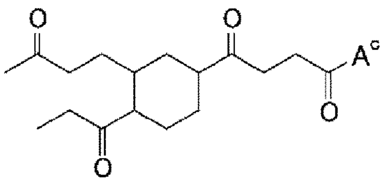
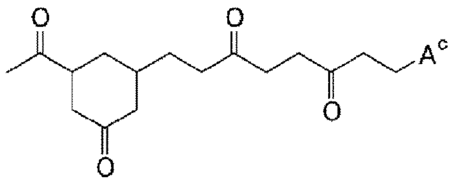
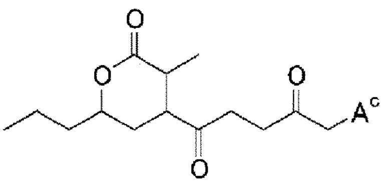

[Chem. 26]

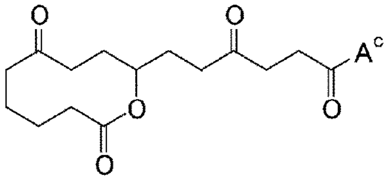
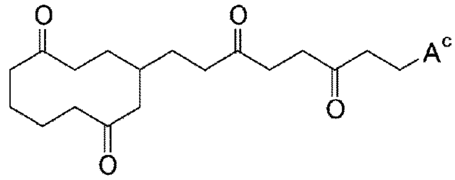
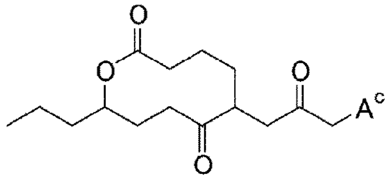
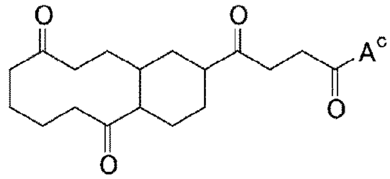
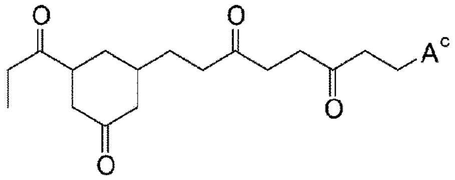
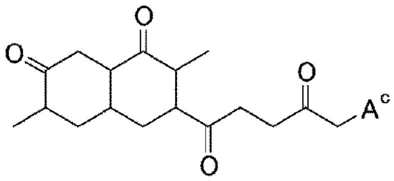

[Chem. 27]

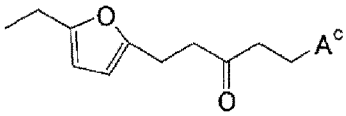
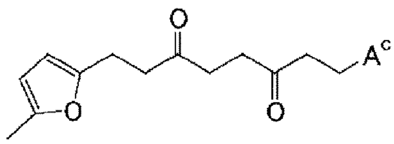
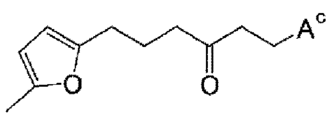
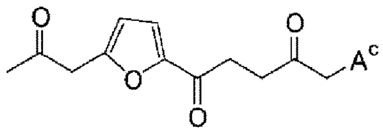
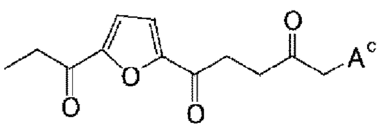
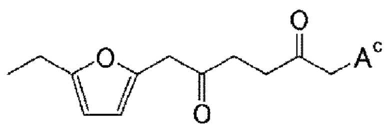
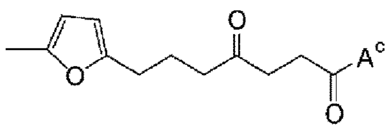
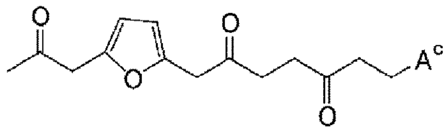
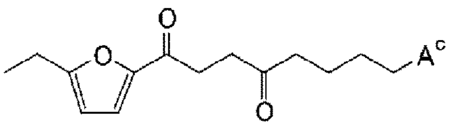

The surfactant (c) can be produced by the production method disclosed in WO 2020/022355.

Next, the surfactant (d) is described below.

In the formula (d), $R^{1d}$ is a linear or branched alkyl group containing 1 or more carbon atoms and optionally containing a substituent or a cyclic alkyl group containing 3 or more carbon atoms and optionally containing a substituent.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1d}$, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for $R^{1d}$ is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for $R^{1d}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

$R^{1d}$ is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further more preferably a linear or branched alkyl group containing 1 to 3 carbon atoms and not containing a substituent, particularly preferably a methyl group ($-CH_3$) or an ethyl group ($-C_2H_5$), most preferably a methyl group ($-CH_3$).

In the formula (d), $R^{2d}$ and $R^{4d}$ are each independently H or a substituent. A plurality of $R^{2d}$s and $R^{4d}$s may be the same as or different from each other.

The substituent for each of $R^{2d}$ and $R^{4d}$ is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for each of $R^{2d}$ and $R^{4d}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

The alkyl group for each of $R^{2d}$ and $R^{4d}$ is preferably a linear or branched alkyl group containing 1 to 10 carbon atoms and free from a carbonyl group or a cyclic alkyl group containing 3 to 10 carbon atoms and free from a carbonyl group, more preferably a linear or branched alkyl group containing 1 to 10 carbon atoms and free from a carbonyl group, still more preferably a linear or branched alkyl group containing 1 to 3 carbon atoms and not containing a substituent, particularly preferably a methyl group ($-CH_3$) or an ethyl group ($-C_2H_5$).

$R^{2d}$ and $R^{4d}$ are preferably each independently H or a linear or branched alkyl group containing 1 to 10 carbon atoms and free from a carbonyl group, more preferably H or a linear or branched alkyl group containing 1 to 3 carbon atoms and not containing a substituent, still more preferably H, a methyl group ($-CH_3$), or an ethyl group ($-C_2H_5$), particularly preferably H.

In the formula (d), $R^{3d}$ is an alkylene group containing 1 to 10 carbon atoms and optionally containing a substituent. When a plurality of $R^{3d}$s are present, they may be the same as or different from each other.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably contains no substituent.

The alkylene group is preferably a linear or branched alkylene group containing 1 to 10 carbon atoms and optionally containing a substituent or a cyclic alkylene group containing 3 to 10 carbon atoms and optionally containing a substituent, preferably a linear or branched alkylene group containing 1 to 10 carbon atoms and free from a carbonyl group or a cyclic alkylene group containing 3 to 10 carbon atoms and free from a carbonyl group, more preferably a linear or branched alkylene group containing 1 to 10 carbon atoms and not containing a substituent, still more preferably a methylene group ($-CH_2-$), an ethylene group ($-C_2H_4-$), an isopropylene group ($-CH(CH_3)CH_2-$), or a propylene group ($-C_3H_6-$).

Any two of $R^{1d}$, $R^{2d}$, $R^{3d}$ and $R^{4d}$ optionally bind to each other to form a ring.

In the formula (d), n is an integer of 1 or more. In the formula, n is preferably an integer of 1 to 40, more preferably an integer of 1 to 30, still more preferably an integer of 5 to 25.

In the formula (d), p and q are each independently an integer of 0 or more. p is preferably an integer of 0 to 10, more preferably 0 or 1. q is preferably an integer of 0 to 10, more preferably an integer of 0 to 5.

The sum of n, p, and q is preferably an integer of 6 or more. The sum of n, p, and q is more preferably an integer of 8 or more. The sum of n, p, and q is also preferably an integer of 60 or less, more preferably an integer of 50 or less, still more

preferably an integer of 40 or less.

In the formula (d), $A^d$ is $-SO_3X^d$ or $-COOX^d$, wherein $X^d$ is H, a metal atom, $NR^{5d}_4$, imidazolium optionally containing a substituent, pyridinium optionally containing a substituent, or phosphonium optionally containing a substituent, wherein $R^{5d}$s are each H or an organic group (preferably a fluorine-free organic group) and are the same as or different from each other. The organic group in $R^{5d}$ is preferably an alkyl group. $R^{5d}$ is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li. $X^d$ may be a metal atom or $NR^{5d}_4$ (wherein $R^{5d}$ is as defined above) .

$X^d$ is preferably H, an alkali metal (Group 1), an alkaline earth metal (Group 2), or $NR^{5d}_4$, more preferably H, Na, K, Li, or $NH_4$ because they are easily dissolved in water, still more preferably Na, K, or $NH_4$ because they are more easily dissolved in water, particularly preferably Na or $NH_4$, most preferably $NH_4$ because it can be easily removed. When $X^d$ is $NH_4$, the solubility of the surfactant in an aqueous medium is excellent, and the metal component is unlikely to remain in the TFE-based polymer or the final product.

In the formula (d), L is a single bond, $-CO_2$-B-*, - OCO-B-*, $-CONR^{6d}$-B-*, $-NR^{6d}$CO-B-*, or -CO- other than the carbonyl groups in $-CO_2$-B-, -OCO-B-, $-CONR^{6d}$-B-, and - $NR^{6d}$CO-B-, wherein B is a single bond or an alkylene group containing 1 to 10 carbon atoms and optionally containing a substituent, $R^{6d}$ is H or an alkyl group containing 1 to 4 carbon atoms and optionally containing a substituent. The alkylene group more preferably contains 1 to 5 carbon atoms. $R^{6d}$ is more preferably H or a methyl group; and * indicates the side bonded to $A^d$ in the formula.

L is preferably a single bond.

The surfactant preferably has a $^1$H-NMR spectrum in which all peak intensities observed in a chemical shift range of 2.0 to 5.0 ppm give an integral value of 10 or higher.

The surfactant preferably has a $^1$H-NMR spectrum in which all peak intensities observed in a chemical shift range of 2.0 to 5.0 ppm give an integral value within the above range. In this case, the surfactant preferably has a ketone structure in the molecule.

The integral value of the surfactant is more preferably 15 or more, and preferably 95 or less. The integral value is more preferably 80 or less, still more preferably 70 or less.

The integral value is determined using a heavy water solvent at room temperature. The heavy water content is adjusted to 4.79 ppm.

Examples of the surfactant (d) include

$CH_3C(O)CH_2CH_2CH_2CH_2CH_2CH_2CH_2CH_2COOK$,

$CH_3C(O)CH_2CH_2CH_2CH_2CH_2CH_2CH_2COONa$,

$CH_3C(O)CH_2CH_2CH_2CH_2CH_2CH_2COONa$,

$CH_3C(O)CH_2CH_2CH_2CH_2CH_2COONa$,

$CH_3C(O)CH_2CH_2CH_2CH_2COONa$,

$CH_3C(O)CH_2CH_2CH_2COONa$,

$CH_3C(O)CH_2CH_2CH_2CH_2CH_2CH_2CH_2CH_2CH_2CH_2CH_2CH_2CH_2COONa$,

$CH_3C(O)CH_2CH_2CH_2CH_2CH_2CH_2CH_2CH_2CH_2CH_2CH_2CH_2CH_2CH_2CH_2CH_2CH_2C H_2COONa$,

$(CH_3)_3CC(O)CH_2CH_2CH_2CH_2CH_2CH_2CH_2CH_2COONa$,

$(CH_3)_2CHC(O)CH_2CH_2CH_2CH_2CH_2CH_2CH_2CH_2COONa$,

$(CH_2)_5CHC(O)CH_2CH_2CH_2CH_2CH_2CH_2CH_2CH_2COONa$,

$CH_3CH_2C(O)CH_2CH_2CH_2CH_2CH_2CH_2CH_2COONa$,

$CH_3CH_2CH_2C(O)CH_2CH_2CH_2CH_2CH_2CH_2COONa$,

$CH_3CH_2CH_2CH_2C(O)CH_2CH_2CH_2CH_2CH_2COONa$,

$CH_3CH_2CH_2CH_2CH_2C(O)CH_2CH_2CH_2CH_2COONa$,

$CH_3CH_2CH_2CH_2CH_2CH_2C(O)CH_2CH_2CH_2COONa$,

$CH_3CH_2CH_2CH_2CH_2CH_2CH_2C(O)CH_2CH_2COONa$,

$CH_3CH_2CH_2CH_2CH_2CH_2CH_2CH_2C(O)CH_2COONa$,

$CH_3C(O)CH_2CH_2CH_2CH_2CH_2CH_2CH_2CH_2OCH_2CH_2COONa$,

$CH_3C(O)CH_2CH_2CH_2CH_2CH_2CH_2CH_2CH_2C(O)NHCH_2COOK$,

$CH_3C(O)CH_2CH_2CH_2CH_2CH_2CH_2CH_{2C}H_2NHC(O)CH_2COOK$,

$CH_3C(O)CH_2CH_2CH_2CH_2CH_2CH_2CH_2CH_2C(O)OCH_2COONa$,

$CH_3C(O)CH_2CH_2CH_2CH_2CH_2CH_2CH_2CH_2OC(O)CH_2COONa$,

$CH_3C(O)CH_2CH_2CH_2CH_2CH_2CH_2CH_2CH_2C(O)COONa$,

$CH_3C(O)CH_2CH_2CH_2CH_2CH_2CH_2CH_2CH_2C(O)COOH$,

$CH_3C(O)CH_2CH_2CH_2CH_2CH_2CH_2CH_2CH_2C(O)COOLi$,

$CH_3C(O)CH_2CH_2CH_2CH_2CH_2CH_2CH_2CH_2C(O)COONH_4$,

$CH_3C(O)CH_2CH_2CH_2CH_2CH_2CH_2CH_2CH_2C(O)COONa$, $CH_3C(O)CH_2CH_2CH_2CH_2CH_2CH_2CH_2C(CH_3)_2COOK$,

$CH_3C(O)CH_2CH_2CH_2CH_2CH_2CH_2CH_2CH_2CH_2SO_3Na$,

$CH_3C(O)CH_2CH_2CH_2CH_2CH_2CH_2CH_2CH_2SO_3Na$,

$CH_3C(O)CH_2CH_2CH_2CH_2CH_2CH_2CH_2SO_3Na$,

$CH_3C(O)CH_2CH_2CH_2CH_2CH_2CH_2SO_3Na$,

$CH_3C(O)CH_2CH_2CH_2CH_2CH_2SO_3Na$,

$CH_3C(O)CH_2CH_2CH_2CH_2SO_3Na$,

$CH_3C(O)CH_2CH_2CH_2CH_2CH_2CH_2CH_2CH_2CH_2CH_2CH_2CH_2CH_2SO_3Na$,

$CH_3C(O)CH_2CH_2CH_2CH_2CH_2CH_2CH_2CH_2CH_2CH_2CH_2CH_2CH_2CH_2CH_2CH_2CH_2C\ H_2SO_3Na$,

$CH_3C(O)CH_2CH_2CH_2CH_2CH_2CH_2CH_2CH_2CH_2CH_2SO_3Na$,

$(CH_3)_3CC(O)CH_2CH_2CH_2CH_2CH_2CH_2CH_2CH_2CH_2SO_3Na$,

$(CH_3)_2CHC(O)CH_2CH_2CH_2CH_2CH_2CH_2CH_2CH_2CH_2SO_3Na$,

$(CH_2)_5CHC(O)CH_2CH_2CH_2CH_2CH_2CH_2CH_2CH_2CH_2SO_3Na$,

$CH_3C(O)CH_2CH_2CH_2CH_2CH_2CH_2CH_2CH_2SO_3Na$,

$CH_3C(O)CH_2CH_2CH_2CH_2CH_2CH_2CH_2SO_3Na$,

$CH_3C(O)CH_2CH_2CH_2CH_2CH_2CH_2SO_3Na$,

$CH_3C(O)CH_2CH_2CH_2CH_2CH_2SO_3Na$,

$CH_3C(O)CH_2CH_2CH_2CH_2SO_3Na$,

$CH_3C(O)CH_2CH_2CH_2SO_3Na$,

$CH_3C(O)CH_2CH_2SO_3Na$,

$CH_3C(O)CH_2SO_3Na$,

$CH_3C(O)CH_2CH_2CH_2CH_2CH_2CH_2CH_2CH_2CH_2OCH_2CH_2CH_2SO_3Na$,

$CH_3C(O)CH_2CH_2CH_2CH_2CH_2CH_2CH_2CH_2CH_2C(O)NHCH_2SO_3Na$,

$CH_3C(O)CH_2CH_2CH_2CH_2CH_2CH_2CH_2CH_2CH_2NHC(O)CH_2SO_3Na$,

$CH_3C(O)CH_2CH_2CH_2CH_2CH_2CH_2CH_2CH_2CH_2C(O)SO_3Na$,

$CH_3C(O)CH_2CH_2CH_2CH_2CH_2CH_2CH_2CH_2CH_2C(O)OCH_2SO_3Na$,

$CH_3C(O)CH_2CH_2CH_2CH_2CH_2CH_2CH_2CH_2CH_2OC(O)CH_2SO_3Na$,

$CH_3C(O)CH_2CH_2CH_2CH_2CH_2CH_2CH_2CH_2CH_2SO_3H$,

$CH_3C(O)CH_2CH_2CH_2CH_2CH_2CH_2CH_2CH_2CH_2SO_3K$,

$CH_3C(O)CH_2CH_2CH_2CH_2CH_2CH_2CH_2CH_2CH_2SO_3Li$,

$CH_3C(O)CH_2CH_2CH_2CH_2CH_2CH_2CH_2CH_2CH_2SO_3NH_4$, and

$CH_3C(O)CH_2CH_2CH_2CH_2CH_2CH_2CH_2CH_2C(CH_3)_2SO_3Na$.

The surfactant (d) can be produced by the production method disclosed in WO 2020/022355.

Next, the surfactant (e) is described below.

In the formula (e), $R^{1e}$ to $R^{5e}$ each represent H or a monovalent substituent, with the proviso that at least one of $R^{1e}$ or $R^{3e}$ represents a group represented by the formula: $-Y^e-R^{6e}$ and at least one of $R^{2e}$ or $R^{5e}$ represents a group represented by the formula: $-X^e-A^e$ or a group represented by the formula: $-Y^e-R^{6e}$. Any two of $R^{1e}$ to $R^{5e}$ optionally bind to each other to form a ring.

The substituent which may be contained in the alkyl group for $R^{1e}$ is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for $R^{1e}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

$R^{1e}$ is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further more preferably a linear or branched alkyl group containing 1 to 3 carbon atoms and not containing a substituent, particularly preferably a methyl group ($-CH_3$) or an ethyl group ($-C_2H_5$), most preferably a methyl group ($-CH_3$).

The monovalent substituent is preferably a group represented by the formula: $-Y^e-R^{6e}$, a group represented by the formula: $-X^e-A^e$, -H, and an alkyl group containing 1 to 20 carbon atoms and optionally containing a substituent, $-NH_2$,

-NHR$^{9e}$ (wherein R$^{9e}$ is an organic group (preferably, a fluorine-free organic group), -OH, -COOR$^{9e}$ (wherein R$^{9e}$ is an organic group (preferably, a fluorine-free organic group)) or -OR$^{9e}$ (R$^{9e}$ is an organic group (preferably, a fluorine-free organic group)). The alkyl group preferably contains 1 to 10 carbon atoms.

R$^{9e}$ is preferably an alkyl group containing 1 to 10 carbon atoms or an alkylcarbonyl group containing 1 to 10 carbon atoms, more preferably an alkyl group containing 1 to 4 carbon atoms or an alkylcarbonyl group containing 1 to 4 carbon atoms.

In the formula, X$^{e}$s at respective appearances are the same as or different from each other and are each a divalent linking group or a bond.

When R$^{6e}$ contains none of a carbonyl group, an ester group, an amide group, and a sulfonyl group, X$^{e}$ is preferably a divalent linking group containing at least one selected from the group consisting of a carbonyl group, an ester group, an amide group, and a sulfonyl group.

X$^{e}$ is preferably a divalent linking group containing at least one bond selected from the group consisting of - CO-, -S(=O)$_2$-, -O-, -COO-, -OCO-, -S(=O)$_2$-O-, -O-S(=O)$_2$-, - CONR$^{8e}$-, and -NR$^{8e}$CO-, a C1-C10 alkylene group, or a bond. R$^{8e}$ represents H or an organic group (preferably, a fluorine-free organic group).

The organic group in R$^{8e}$ is preferably an alkyl group. R$^{8e}$ is preferably H or an organic group containing 1 to 10 carbon atoms, more preferably H or an organic group containing 1 to 4 carbon atoms, still more preferably H or an alkyl group containing 1 to 4 carbon atoms, further more preferably H.

In the formula (e), A$^{e}$s at respective appearances are the same as or different from each other and are each -COOM$^{e}$, -SO$_3$M$^{e}$, or -OSO$_3$M$^{e}$, wherein M$^{e}$ is H, a metal atom, NR$^{7e}{}_4$, imidazolium optionally containing a substituent, pyridinium optionally containing a substituent, or phosphonium optionally containing a substituent, wherein R$^{7e}$ is H or an organic group (preferably, a fluorine-free organic group); and the four R$^{7e}$s may be the same as or different from each other. In a preferred embodiment, in the formula (e), A$^{e}$ is -COOM$^{e}$.

The organic group in R$^{7e}$ is preferably an alkyl group. R$^{7e}$ is preferably H or an organic group containing 1 to 10 carbon atoms, more preferably H or an organic group containing 1 to 4 carbon atoms, still more preferably H or an alkyl group containing 1 to 4 carbon atoms.

Examples of the metal atom include alkali metals (Group 1) and alkaline earth metals (Group 2), and preferred is Na, K, or Li.

M$^{e}$ is preferably H, a metal atom, or NR$^{7e}{}_4$, more preferably H, an alkali metal (Group 1), an alkaline earth metal (Group 2), or NR$^{7e}{}_4$, still more preferably H, Na, K, Li, or $NH_4$, further more preferably Na, K, or $NH_4$, particularly preferably Na or $NH_4$, most preferably $NH_4$.

In the formula (e), Y$^{e}$s at respective appearances are the same as or different from each other and are each a divalent linking group selected from the group consisting of -S(=O)$_2$-, -O-, -COO-, -OCO-, -CONR$^{8e}$-, and -NR$^{8e}$CO-, or a bond, wherein R$^{8e}$ is H or an organic group (preferably, a fluorine-free organic group).

Y$^{e}$ is preferably a bond or a divalent linking group selected from the group consisting of -O-, -COO-, -OCO-, -CONR$^{8e}$-, and -NR$^{8e}$CO-, more preferably a divalent linking group selected from the group consisting of a bond, -COO-, and -OCO-.

The organic group in R$^{8e}$ is preferably an alkyl group. R$^{8e}$ is preferably H or an organic group containing 1 to 10 carbon atoms, more preferably H or an organic group containing 1 to 4 carbon atoms, still more preferably H or an alkyl group containing 1 to 4 carbon atoms, further more preferably H.

In the formula (e), R$^{6e}$s at respective appearances are the same as or different from each other and are each an alkyl group containing 2 or more carbon atoms and optionally containing, between carbon atoms, at least one selected from the group consisting of a carbonyl group, an ester group, an amide group, and a sulfonyl group. The organic group (preferably, a fluorine-free organic group) represented by R$^{6e}$ preferably contains 2 to 20 carbon atoms, more preferably 2 to 10 carbon atoms.

The alkyl group for R$^{6e}$ can contain, between carbon atoms, one or two or more of at least one selected from the group consisting of a carbonyl group, an ester group, an amide group, and a sulfonyl group, but the alkyl group contains no such groups at ends. In the alkyl group for R$^{6e}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R$^{6e}$ is preferably

a group represented by the formula: -R$^{10e}$-CO-R$^{11e}$,
a group represented by the formula: -R$^{10e}$-COO-R$^{11e}$,
a group represented by the formula: -R$^{11e}$,
a group represented by the formula: -R$^{10e}$-NR$^{8e}$CO-R$^{11e}$, or
a group represented by the formula: -R$^{10e}$-CONR$^{8e}$-R$^{11e}$,
wherein R$^{8e}$ is H or an organic group (preferably, a fluorine-free organic group); R$^{10e}$ is an alkylene group; and R$^{11e}$ is

an alkyl group optionally containing a substituent.
$R^{6e}$ is more preferably a group represented by the formula: $-R^{10e}-CO-R^{11e}$.

The organic group in $R^{8e}$ is preferably an alkyl group. $R^{8e}$ is preferably H or an organic group containing 1 to 10 carbon atoms, more preferably H or an organic group containing 1 to 4 carbon atoms, still more preferably H or an alkyl group containing 1 to 4 carbon atoms, further more preferably H.

The alkylene group for $R^{10e}$ preferably contains 1 or more, more preferably 3 or more carbon atoms, and preferably 20 or less, more preferably 12 or less, still more preferably 10 or less, particularly preferably 8 or less carbon atoms. Further, the alkylene group for $R^{10e}$ preferably contains 1 to 20, more preferably 1 to 10, still more preferably 3 to 10 carbon atoms.

The alkyl group for $R^{11e}$ may contain 1 to 20 carbon atoms, and preferably contains 1 to 15, more preferably 1 to 12, still more preferably 1 to 10, further more preferably 1 to 8, even more preferably 1 to 6, still much more preferably 1 to 3, particularly preferably 1 or 2, most preferably 1 carbon atom. The alkyl group for $R^{11e}$ preferably consists only of primary carbons, secondary carbons, and tertiary carbons, particularly preferably consists only of primary carbons and secondary carbons. In other words, $R^{11e}$ is preferably a methyl group, an ethyl group, an n-propyl group, or an isopropyl group, most preferably a methyl group.

In a preferred embodiment, in the formula (e), at least one of $R^{2e}$ or $R^{5e}$ is a group represented by the formula: $-X^e-A^e$, and $A^e$ is $-COOM^e$.

The surfactant (e) is preferably a compound represented by the following formula (e-1), a compound represented by the following formula (e-2), or a compound represented by the following formula (e-3), more preferably a compound represented by the formula (e-1) or a compound represented by the formula (e-2):

Formula (e-1):

[Chem. 28]

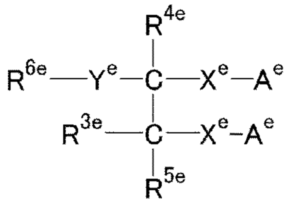

wherein $R^{3e}$ to $R^{6e}$, $X^e$, $A^e$, and $Y^e$ are as defined above;

Formula (e-2):

[Chem. 29]

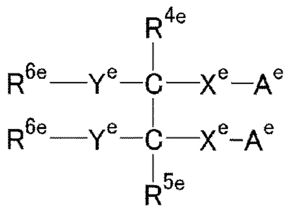

wherein $R^{4e}$ to $R^{6e}$, $X^e$, $A^e$, and $Y^e$ are as defined above;

Formula (e-3):

[Chem. 30]

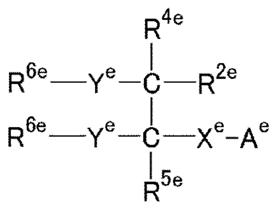

wherein $R^{2e}$, $R^{4e}$ to $R^{6e}$, $X^e$, $A^e$, and $Y^e$ are as defined above.

The group represented by the formula: $-X^e-A^e$ is preferably

$-COOM^e$,

$-R^{12e}COOM^e$,

$-SO_3M^e$,

$-OSO_3M^e$,

$-R^{12e}SO_3M^e$,

$-R^{12e}OSO_3M^e$,

$-OCO-R^{12e}-COOM^e$,

$-OCO-R^{12e}-SO_2M^e$,

$-OCO-R^{12e}-OSO_3M^e$,

$-COO-R^{12e}-COOM^e$,

$-COO-R^{12e}-SO_3M^e$,

$-COO-R^{12e}-OSO_3M^e$,

$-CONR^{8e}-R^{12e}-COOM^e$,

$-CONR^{8e}-R^{12e}-SO_3M^e$,

$-CONR^{8e}-R^{12e}-OSO_3M^e$,

$-NR^{8e}CO-R^{12e}-COOM^e$,

$-NR^{8e}CO-R^{12e}-SO_3M^e$,

$-NR^{8e}CO-R^{12e}-OSO_3M^e$,

$-OS(=O)_2-R^{12e}-COOM^e$,

$-OS(=O)_2-R^{12e}-SO_3M^e$, or

$-OS(=O)_2-R^{12e}-OSO_3M^e$

(wherein $R^{8e}$ and $M^e$ are as defined above; and $R^{12e}$ is an alkylene group containing 1 to 10 carbon atoms).

In the alkylene group for $R^{12e}$, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The group represented by the formula: $-Y^e-R^{6e}$ is preferably

a group represented by the formula: $-R^{10e}-CO-R^{11e}$,
a group represented by the formula: $-OCO-R^{10e}-CO-R^{11e}$,
a group represented by the formula: $-COO-R^{10e}-CO-R^{11e}$,
a group represented by the formula: $-OCO-R^{10e}-COO-R^{11e}$,
a group represented by the formula: $-COO-R^{11e}$,
a group represented by the formula: $-NR^{8e}CO-R^{10e}-COR^{11e}$, or

a group represented by the formula: $-CONR^{8e}-R^{10e}-NR^{8e}CO-R^{11e}$

(wherein $R^{8e}$, $R^{10e}$, and $R^{11e}$ are as defined above).

In the formulas, $R^{4e}$ and $R^{5e}$ are each independently preferably H or an alkyl group containing 1 to 4 carbon atoms.

In the alkyl group for $R^{4e}$ and $R^{5e}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{3e}$ in the formula (e-1) is preferably H or an alkyl group containing 1 to 20 carbon atoms and optionally containing a substituent, more preferably H or an alkyl group containing 1 to 20 carbon atoms and containing no substituent, still more preferably H.

In the alkyl group for $R^{3e}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{2e}$ in the formula (e-3) is preferably H, OH, or an alkyl group containing 1 to 20 carbon atoms and optionally containing a substituent, more preferably H, OH, or an alkyl group containing 1 to 20 carbon atoms and containing no substituent, still more preferably H or OH.

In the alkyl group for $R^{2e}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The surfactant (e) can be produced by a known production method.

It is also preferable that the specific hydrocarbon surfactant is a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). Usable is, for example, a hydrocarbon surfactant containing a carboxy group or a group where a hydrogen atom of a carboxy group is replaced by an inorganic cation, from among specific hydrocarbon surfactants described above.

In the carboxylic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The carboxylic acid-type hydrocarbon surfactant is preferably one containing a carboxy group (-COOH) or a group where a hydrogen atom of a carboxy group is replaced by an inorganic cation (e.g., metal atom, ammonium), among at least one selected from the group consisting of the surfactant (c) represented by the formula (c) and the surfactant (d) represented by the formula (d).

The specific hydrocarbon surfactant is also preferably a sulfonic acid-type hydrocarbon surfactant. The sulfonic acid-type hydrocarbon surfactant may be any surfactant that contains a $-SO_3H$ group, a $-OSO_3H$ group, or a group where a hydrogen atom of any of these groups is replaced by an inorganic cation (e.g., metal atom, ammonium). Usable is, for example, a hydrocarbon surfactant containing a $-SO_3H$ group, a $-OSO_3H$ group, or a group where a hydrogen atom of any of these groups is replaced by an inorganic cation, from among specific hydrocarbon surfactants described above.

In the sulfonic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The TFE-based polymer composition of the disclosure can be efficiently produced by using at least one of the specific hydrocarbon surfactants. The TFE-based polymer composition of the disclosure may be produced by simultaneously using two or more of the specific hydrocarbon surfactants, or may be produced by simultaneously using a different compound with surface activity in addition to any of the specific hydrocarbon surfactants, as long as the compound is volatile or may remain in a molded article or the like of the TFE-based polymer.

The different compound with surface activity used may be any of those disclosed in JP 2013-542308 T, JP 2013-542309 T, and JP 2013-542310 T, for example.

Examples of the different compound with surface activity include surfactants including a hydrophilic moiety and a hydrophobic moiety on the same molecule, such as hydrocarbon surfactants (other than the specific hydrocarbon surfactants). These may be cationic, nonionic, or anionic.

In the compound, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Cationic surfactants usually have a positively charged hydrophilic moiety such as alkylated ammonium halide

(e.g., alkylated ammonium bromide) and a hydrophobic moiety such as long chain fatty acids.

In the cationic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Anionic surfactants usually have a hydrophilic moiety such as a carboxylate, a sulfonate, or a sulfate and a hydrophobic moiety that is a long chain hydrocarbon moiety such as alkyl.

In the anionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Nonionic surfactants are usually free from charged groups, but have a hydrophobic moiety that is a long-chain hydrocarbon. The hydrophilic moiety of nonionic surfactants contains a water-soluble functional group such as an ethylene ether chain derived from polymerization with ethylene oxide.

In the nonionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Examples of nonionic surfactants:
polyoxyethylene alkyl ether, polyoxyethylene alkyl phenyl ether, polyoxyethylene alkyl ester, sorbitan alkyl ester, polyoxyethylene sorbitan alkyl ester, glycerol ester, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, and polyoxyethylene behenyl ether.

Specific examples of polyoxyethylene alkyl phenyl ethers: polyoxyethylene nonylphenyl ether, and polyoxyethylene octylphenyl ether.

Specific examples of polyoxyethylene alkyl esters: polyethylene glycol monolaurate, polyethylene glycol monooleate, and polyethylene glycol monostearate.

Specific examples of sorbitan alkyl esters: polyoxyethylene sorbitan monolaurate, polyoxyethylene sorbitan monopalmitate, polyoxyethylene sorbitan monostearate, and polyoxyethylene sorbitan monooleate.

Specific examples of polyoxyethylene sorbitan alkyl esters: polyoxyethylene sorbitan monolaurate, polyoxyethylene sorbitan monopalmitate, and polyoxyethylene sorbitan monostearate.

Specific examples of glycerol esters: glycerol monomyristate, glycerol monostearate, and glycerol monooleate.

Specific examples of the derivatives: polyoxyethylene alkylamine, polyoxyethylene alkylphenyl-formaldehyde condensate, and polyoxyethylene alkyl ether phosphate.

The ethers and esters may have an HLB value of 10 to 18.

Examples of nonionic surfactants include Triton® X series (X15, X45, X100, etc.), Tergitol® 15-S series, Tergitol® TMN series (TMN-6, TMN-10, TMN-100, etc.), and Tergitol® L series, which are available from Dow Chemical Company, and Pluronic® R series (31R1, 17R2, 10R5, 25R4 (m to 22, n to 23) and Iconol® TDA series (TDA-6, TDA-9, TDA-10), which are available from BASF.

Examples of the anionic hydrocarbon surfactant include Versatic® 10 available from Resolution Performance Products and Avanel S series (S-70, S-74, etc.) available from BASF.

The different compound with surface activity may also be an anionic surfactant represented by R-L-M (wherein R is a linear or branched alkyl group containing 1 or more carbon atoms and optionally containing a substituent, or a cyclic alkyl group containing 3 or more carbon atoms and optionally containing a substituent, and optionally contains a monovalent or divalent heterocycle or optionally forms a ring when containing 3 or more carbon atoms; L is - $ArSO_3^-$, $-SO_3^-$, $-SO_4^-$, $-PO_3^-$ or $-COO^-$, and, M is, H, a metal atom, $NR^5_4$ where $R^5$s may be the same as or different from each other and are each H or an organic group (preferably a fluorine-free organic group), imidazolium optionally containing a substituent, pyridinium optionally containing a substituent, or phosphonium optionally containing a substituent; and $-ArSO_3^-$ is an aryl sulfonate. $R^5$ is preferably H or an organic group containing 1 to 10 carbon atoms, more preferably H or an organic group containing 1 to 4 carbon atoms.

Specific examples thereof include a compound represented by $CH_3-(CH_2)_n-L-M$ (wherein n is an integer of 6 to 17, and L and M are the same as described above) as typified by lauryl acid.

Mixtures of those in which R is an alkyl group containing 12 to 16 carbon atoms and L-M is sulfate or sodium dodecyl sulfate (SDS) can also be used.

The different compound with surface activity may also be an anionic surfactant represented by $R^6(-L-M)_2$ (wherein $R^6$ is a linear or branched alkylene group containing 1 or more carbon atoms and optionally containing a substituent, or a cyclic alkylene group containing 3 or more carbon atoms and optionally containing a substituent, and optionally contains a monovalent or divalent heterocycle or optionally forms a ring when containing 3 or more carbon atoms; L is $-ArSO_3^-$, $-SO_3^-$, $-SO_4^-$, $-PO_3^-$ or $-COO^-$, and M is H, a metal atom, $NR^5_4$, imidazolium optionally containing a substituent, pyridinium optionally containing a substituent, or phosphonium optionally containing a substituent, where $R^5$ is H or an organic group (preferably a fluorine-free organic group), and $-ArSO_3^-$ is an aryl sulfonate).

The different compound with surface activity may also be an anionic surfactant represented by $R^7(-L-M)_3$ (wherein $R^7$ is a linear or branched alkylidine group containing 1 or more carbon atoms and optionally containing a substituent, or a cyclic alkylidine group containing 3 or more carbon atoms and optionally containing a substituent, and optionally contains a monovalent or divalent heterocycle or optionally forms a ring when containing 3 or more carbon atoms; L is $-ArSO_3^-$, $-SO_3^-$, $-SO_4^-$, $-PO_3^-$ or $-COO^-$, and, M is H, a metal atom, $NR^5_4$, imidazolium optionally containing a substituent, pyridinium optionally containing a substituent, or phosphonium optionally containing a substituent, $R^5$ is H or an organic group (preferably a fluorine-free organic group); and $-ArSO_3^-$ is an aryl sulfonate).

Examples of the siloxane hydrocarbon surfactant include those described in Silicone Surfactants, R. M. Hill, Marcel Dekker, Inc., ISBN: 0-8247-00104. The structure of the siloxane surfactant includes defined hydrophobic and hydrophilic moieties. The hydrophobic moiety contains one or more dihydrocarbyl siloxane units, where the substituents on the silicone atoms are completely hydrocarbon.

In the sense that the carbon atoms of the hydrocarbyl groups are fully replaced by hydrogen atoms where they can be replaced by halogen such as fluorine, these siloxane surfactants can also be regarded as hydrocarbon surfactants, i.e. the monovalent substituents on the carbon atoms of the hydrocarbyl groups are hydrogen.

In the siloxane surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The hydrophilic moiety of the siloxane hydrocarbon surfactant may contain one or more polar moieties, including ionic groups such as a sulfate, a sulfonate, a phosphonate, a phosphate, a carboxylate, a carbonate, a sulfosuccinate, a taurate (in the form of a free acid, salt, or ester), a phosphine oxide, a betaine, a betaine copolyol, and a quaternary ammonium salt. The ionic hydrophobic moiety can also contain an ionically functionalized siloxane graft.

Examples of such a siloxane hydrocarbon surfactant include polydimethylsiloxane-graft-(meth)acrylic acid salts, polydimethylsiloxane-graft-polyacrylate salts, and polydimethylsiloxane-grafted quaternary amines.

The polar moieties of the hydrophilic moiety of the siloxane surfactant may contain nonionic groups formed by polyethers, such as polyethylene oxide (PEO), and mixed polyethylene oxide/polypropylene oxide polyethers (PEO/PPO); mono- and disaccharides; and water-soluble heterocycles such as pyrrolidinone. The ratio of ethylene oxide to propylene oxide (EO/PO) may be varied in mixed polyethylene oxide/polypropylene oxide polyethers.

The hydrophilic moiety of the siloxane hydrocarbon surfactant can also contain a combination of an ionic moiety and a nonionic moiety. Such moieties include, for example, ionically end-functionalized or randomly functionalized polyether or polyol. Preferred for carrying out the disclosure is a siloxane having a nonionic moiety, i.e., a nonionic siloxane hydrocarbon surfactant.

The arrangement of the hydrophobic and hydrophilic moieties of the structure of a siloxane hydrocarbon surfactant may take the form of a diblock polymer (AB), triblock polymer (ABA), wherein the "B" represents the siloxane portion of the molecule, or a multi-block polymer. Alternatively, the siloxane surfactant may contain a graft polymer.

The siloxane hydrocarbon surfactants also include those disclosed in U.S. Pat. No. 6,841,616.

Examples of siloxane-based anionic hydrocarbon surfactants include Noveon® available from Lubrizol Advanced Materials, Inc. and SilSense™ PE-100 silicone and SilSense™ CA-1 silicone available from Consumer Specialties.

Examples of the anionic hydrocarbon surfactant also include a sulfosuccinate surfactant Lankropol® K8300 available from Akzo Nobel Surface Chemistry LLC.

Examples of the sulfosuccinate surfactant include sodium diisodecyl sulfosuccinate (Emulsogen® SB10 by Clariant) and sodium diisotridecyl sulfosuccinate (Polirol® TR/LNA by Cesapinia Chemicals).

Examples of the different compound with surface activity also include PolyFox® surfactants (e.g., PolyFox™ PF-156A or PolyFox™ PF-136A) available from Omnova Solutions, Inc.

The different compound with surface activity is preferably an anionic hydrocarbon surfactant. The anionic hydrocarbon surfactant may be one described above. For example, the following compound can be suitably used.

An example of the anionic hydrocarbon surfactant is a compound ($\alpha$) represented by the following formula ($\alpha$):

$$R^{100}\text{-COOM} \qquad (\alpha)$$

wherein $R^{100}$ is a monovalent organic group (preferably a fluorine-free organic group) containing 1 or more carbon atoms; and M is H, a metal atom, $NR^{101}_4$, imidazolium optionally containing a substituent, pyridinium optionally containing a substituent, or phosphonium optionally containing a substituent, wherein $R^{101}$s are each H or an organic group (preferably a fluorine-free organic group) and may be the same as or different from each other. The organic group for $R^{101}$ is preferably an alkyl group. $R^{101}$ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in $R^{100}$ is preferably 2 or more, more preferably 3 or more. From the viewpoint of watersolubility, the number of carbon atoms in $R^{100}$ is preferably 29 or less, more preferably 23 or less.

Examples of the metal atom as M include alkali metals (Group 1) and alkaline earth metals (Group 2), and preferred is Na, K, or Li. M is preferably H, a metal atom, or $NR^{101}_4$, more preferably H, an alkali metal (Group 1), an alkaline earth metal (Group 2), or $NR^{101}_4$, still more preferably H, Na, K, Li, or $NH_4$, further more preferably Na, K, or $NH_4$, particularly preferably Na or $NH_4$, most preferably $NH_4$.

The compound ($\alpha$) may also be an anionic surfactant represented by $R^{102}$-COOM (wherein $R^{102}$ is a linear or branched alkyl, alkenyl, alkylene, or alkenylene group containing 1 or more carbon atoms and optionally containing a substituent or a cyclic alkyl, alkenyl, alkylene, or alkenylene group containing 3 or more carbon atoms and optionally containing a substituent, which optionally contains an ether bond; when containing 3 or more carbon atoms, $R^{102}$ optionally contains a monovalent or divalent heterocycle or optionally forms a ring; and M is as defined above).

Specific examples include a compound represented by $CH_3-(CH_2)_n-COOM$ wherein n is an integer of 2 to 28 and M is as defined above.

The compound ($\alpha$) may be free from a carbonyl group (other than the carbonyl group in the carboxy group) from the viewpoint of emulsion stability.

A preferred example of the carbonyl group-free hydrocarbon-containing surfactant is a compound represented by the following formula (A1):

$$R^{103}\text{-COO-M} \qquad \text{(A1)}$$

wherein $R^{103}$ is an alkyl, alkenyl, alkylene, or alkenylene group containing 6 to 17 carbon atoms, which optionally contains an ether bond; and M is H, a metal atom, $NR^{101}_4$, imidazolium optionally containing a substituent, pyridinium optionally containing a substituent, or phosphonium optionally containing a substituent, wherein $R^{101}$s are the same as or different from each other and each are H or an organic group (preferably, a fluorine-free organic group).

In the formula (A1), $R^{103}$ is preferably an alkyl or alkenyl group (which may contain an ether group). The alkyl or alkenyl group for $R^{103}$ may be linear or branched. The number of carbon atoms in $R^{103}$ may be, but is not limited to, 2 to 29.

When the alkyl group is linear, the number of carbon atoms in $R^{103}$ is preferably 3 to 29, more preferably 5 to 23. When the alkyl group is branched, the number of carbon atoms in $R^{103}$ is preferably 5 to 35, more preferably 11 to 23.

When the alkenyl group is linear, the number of carbon atoms in $R^{103}$ is preferably 2 to 29, more preferably 9 to 23. When the alkenyl group is branched, the number of carbon atoms in $R^{103}$ is preferably 2 to 29, more preferably 9 to 23.

Examples of the alkyl and alkenyl groups include methyl, ethyl, isobutyl, t-butyl, and vinyl groups.

Examples of the compound ($\alpha$) include butyric acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)-linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienic acid, oleic acid, elaidic acid, vaccenic acid, gadoleic acid, eicosenoic acid, erucic acid, nervonic acid, linoleic acid, eicosadienoic acid, docosadienoic acid, linolenic acid, pinolenic acid, $\alpha$-eleostearic acid, $\beta$-eleostearic acid, mead acid, dihomo-$\gamma$-linolenic acid, eicosatrienoic acid, stearidonic acid, arachidonic acid, eicosatetraenoic acid, adrenic acid, bosseopentaenoic acid, eicosapentaenoic acid, osbondic acid, sardonic acid, tetracosapentaenoic acid, docosahexaenoic acid, and herring acid, and salts thereof.

Particularly, preferred is at least one selected from the group consisting of lauric acid, capric acid, myristic acid, pentadecylic acid, palmitic acid, and salts thereof.

Non-limiting examples of the salts include those in which the hydrogen atom of the carboxy group is a metal atom, $NR^{11}_4$, imidazolium optionally containing a substituent, pyridinium optionally containing a substituent, or phosphonium optionally containing a substituent as M in the above-described formula.

The anionic hydrocarbon surfactant may also be a compound ($\beta$) represented by the following formula ($\beta$):

$$R^{100}\text{-}SO_3M \qquad (\beta)$$

wherein $R^{100}$ is a monovalent organic group (preferably a fluorine-free organic group) containing 1 or more carbon atoms; and M is H, a metal atom, $NR^{101}_4$, imidazolium optionally containing a substituent, pyridinium optionally containing a substituent, or phosphonium optionally containing a substituent, wherein $R^{101}$s are each H or an organic group (preferably a fluorine-free organic group) and may be the same as or different from each other. The organic group for $R^{101}$ is preferably an alkyl group. $R^{101}$ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in $R^{100}$ is preferably 2 or more, more preferably 3 or more. From the viewpoint of watersolubility, the number of carbon atoms in $R^{100}$ is preferably 29 or less, more preferably 23 or less.

Examples of the metal atom as M include alkali metals (Group 1) and alkaline earth metals (Group 2), and

preferred is Na, K, or Li. M is preferably H, a metal atom, or $NR^{101}_4$, more preferably H, an alkali metal (Group 1), an alkaline earth metal (Group 2), or $NR^{101}_4$, still more preferably H, Na, K, Li, or $NH_4$, further more preferably Na, K, or $NH_4$, particularly preferably Na or $NH_4$, most preferably $NH_4$.

The compound (β) may also be an anionic surfactant represented by $R^{102}$-$SO_3M$ (wherein $R^{102}$ is a linear or branched alkyl, alkenyl, alkylene, or alkenylene group containing 1 or more carbon atoms and optionally containing a substituent, or a cyclic alkyl, alkenyl, alkylene, or alkenylene group containing 3 or more carbon atoms and optionally containing a substituent, each of which optionally contains an ether bond; when containing 3 or more carbon atoms, $R^{102}$ optionally contains a monovalent or divalent heterocycle or optionally forms a ring; and M is as defined above).

Specific examples include a compound represented by $CH_3$-$(CH_2)_n$-$SO_3M$ (wherein n is an integer of 2 to 28 and M is as defined above).

The compound (β) may be free from a carbonyl group (other than the carbonyl group in the carboxy group) from the viewpoint of emulsion stability.

An example of the carbonyl group-free hydrocarbon-containing surfactant is a compound represented by the following formula (B1):

$R^{103}$-$SO_3$-M (B1)

wherein $R^{103}$ is an alkyl, alkenyl, alkylene, or alkenylene group containing 6 to 17 carbon atoms, which optionally contains an ether bond; and M is H, a metal atom, $NR^{101}_4$, imidazolium optionally containing a substituent, pyridinium optionally containing a substituent, or phosphonium optionally containing a substituent, wherein $R^{101}$s are the same as or different from each other and each are H or an organic group (preferably, a fluorine-free organic group).

In the formula (B1), $R^{103}$ is preferably an alkyl or alkenyl group (which may contain an ether group). The alkyl or alkenyl group for $R^{103}$ may be linear or branched. The number of carbon atoms in $R^{103}$ may be, but is not limited to, 2 to 29.

When the alkyl group is linear, the number of carbon atoms in $R^{103}$ is preferably 3 to 29, more preferably 5 to 23. When the alkyl group is branched, the number of carbon atoms in $R^{103}$ is preferably 5 to 35, more preferably 11 to 23.

When the alkenyl group is linear, the number of carbon atoms in $R^{103}$ is preferably 2 to 29, more preferably 9 to 23. When the alkenyl group is branched, the number of carbon atoms in $R^{103}$ is preferably 2 to 29, more preferably 9 to 23.

Examples of the alkyl and alkenyl groups include methyl, ethyl, isobutyl, t-butyl, and vinyl groups.

Examples of the compound (β) include sulfonic acids such as aliphatic sulfonic acids, unsaturated aliphatic sulfonic acids, and aromatic sulfonic acids, sulfate esters such as aliphatic sulfate esters, unsaturated aliphatic sulfate esters, and aromatic sulfate esters, and their salts.

Examples of the sulfonic acids include 1-hexanesulfonic acid, 1-octanesulfonic acid, 1-decanesulfonic acid, 1-dodecanesulfonic acid, perfluorobutanesulfonic acid, linear alkylbenzene sulfonic acid, toluene sulfonic acid, cumensulfonic acid, octylbenzene sulfonic acid, DBS, naphthalene sulfonic acid, naphthalene disulfonic acid, naphthalene trisulfonic acid, and butyl naphthalene sulfonic acid. Examples of the sulfate esters include sodium alkyl sulfate esters, alpha sulfo fatty acid ester salts, alkyl sulfate ester salts, polyoxyethylene alkyl ether sulfate ester salts, alpha olefin sulfonate salts, lauryl sulfate, myristyl sulfate, laureth sulfate, and polyoxyethyelne alkyl phenol sulfonate.

The compound (β) preferably includes at least one selected from the group consisting of saturated aliphatic sulfate esters, aromatic sulfate esters, and their salts, more preferably at least one selected from the group consisting of sodium alkyl sulfate esters, alpha sulfo fatty acid ester salts, alkyl sulfate ester salts, polyoxyethylene alkyl ether sulfate ester salts, alpha olefin sulfonate salts, lauryl sulfate, myristyl sulfate, laureth sulfate, polyoxyethyelne alkyl phenol sulfonate, and their salts.

Non-limiting examples of the salts include those in which the hydrogen atom of the sulfonic acid group is a metal atom, $NR^{11}_4$, imidazolium optionally containing a substituent, pyridinium optionally containing a substituent, or phosphonium optionally containing a substituent as M in the above-described formula.

The anionic hydrocarbon surfactant may also be a surfactant (1-0A) represented by the following formula (1-0A):

[Chem. 31]

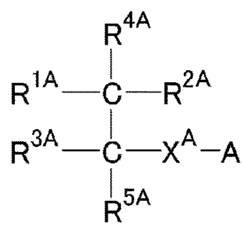

wherein $R^{1A}$ to $R^{5A}$ are each H, a monovalent hydrocarbon group optionally containing an ester group between carbon

atoms, or a group represented by the formula: $-X^A-A$, with at least one of $R^{2A}$ or $R^{5A}$ being a group represented by the formula: $-X^2-A$;

$X^A$s at respective appearances are the same as or different from each other and are each a divalent hydrocarbon group or a bond;

As at respective appearances are the same as or different from each other and are each -COOM (wherein M is H, a metal atom, $NR^7_4$, imidazolium optionally containing a substituent, pyridinium optionally containing a substituent, or phosphonium optionally containing a substituent, wherein $R^7$s are each H or an organic group (preferably a fluorine-free organic group)); and

Any two of $R^{1A}$ to $R^{5A}$ optionally bind to each other to form a ring.

In the formula (1-0A), the number of carbon atoms in the monovalent hydrocarbon group optionally containing an ester group between carbon atoms for each of $R^{1A}$ to $R^{5A}$ is preferably 1 to 50, more preferably 5 to 20. Any two of $R^{1A}$ to $R^{5A}$ optionally bind to each other to form a ring. The monovalent hydrocarbon group optionally containing an ester group between carbon atoms is preferably an alkyl group.

In the formula, the number of carbon atoms in the divalent hydrocarbon group for $X^A$ is preferably 1 to 50, more preferably 5 to 20. Examples of the divalent hydrocarbon group include an alkylene group and an alkanediyl group. Preferred is an alkylene group.

In the formula (1-0A), either $R^{2A}$ or $R^{5A}$ is preferably a group represented by the formula: $-X^A-A$. More preferably, $R^{2A}$ is a group represented by the formula: $-X^2-A$.

In a preferred embodiment, in the formula (1-0A), $R^{2A}$ is a group represented by the formula: $-X^A-A$, and $R^{1A}$, $R^{3A}$, $R^{4A}$, and $R^{5A}$ are each H. In this case, $X^A$ is preferably a bond or an alkylene group containing 1 to 5 carbon atoms.

In a preferred embodiment, in the formula (1-0A), $R^{2A}$ is a group represented by the formula: $-X^A-A$, $R^{1A}$ and $R^{3A}$ are each a group represented by $-Y^A-R^6$, $Y^A$s at respective appearances are the same as or different from each other and are each -COO-, -OCO-, or a bond, and $R^6$s at respective appearances are the same as or different from each other and are each an alkyl group containing 2 or more carbon atoms. In this case, $R^{4A}$ and $R^{5A}$ are each preferably H.

Examples of the hydrocarbon surfactant represented by the formula (1-0A) include glutaric acid and a salt thereof, adipic acid and a salt thereof, pimelic acid and a salt thereof, suberic acid and a salt thereof, azelaic acid and a salt thereof, and sebacic acid and a salt thereof.

An aliphatic carboxylic acid-type hydrocarbon surfactant represented by the formula (1-0A) may be a double-chain, double-hydrophilic-group synthetic surfactant, and examples thereof include gemini surfactants including Gemsurf (Chukyo Yushi Co., Ltd.) such as Gemsurf $\alpha$142 (number of carbon atoms: 12, lauryl group), Gemsurf $\alpha$102 (number of carbon atoms: 10), and Gemsurf $\alpha$182 (number of carbon atoms: 14).

The anionic hydrocarbon surfactant may also be a compound I represented by the following formula I:

$$R\text{-}(XZ)_n \qquad (I)$$

wherein R is a hydrophobic hydrocarbon moiety containing one or more saturated or unsaturated, acyclic or cyclic aliphatic groups, where the percentage of total $CH_3$ groups relative to the sum of $CH_3$, $CH_2$, and CH groups in one or more aliphatic groups is at least about 70% and the hydrophobic moiety contains no siloxane unit; Xs may be the same as or different from each other and each represent an ionic hydrophilic moiety; and Zs may be the same as or different from each other and each represent one or more counter ions of the ionic hydrophilic moiety; and n is 1 to 3.

The compound I exhibits low reactivity with a polymerization initiator and/or a propagating fluoropolymer radical in emulsion polymerization of a fluoromonomer.

The compound I preferably includes a substituted moiety represented by the following formula:

[Chem. 32]

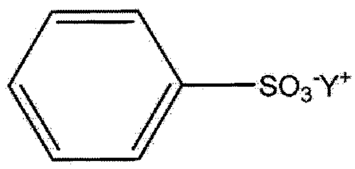

wherein $Y^+$ is hydrogen, ammonium, quaternary ammonium, a nitrogen heterocycle, an alkali metal, or an alkaline earth metal.

The compound I is preferably a compound II represented by the following formula II:

[Chem. 33]

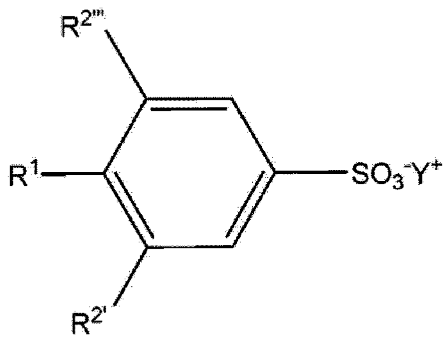

II

wherein $R^{2'}$ and $R^{2'''}$ are the same as or different from each other and are each a saturated or unsaturated, acyclic or cyclic aliphatic group containing 4 to 16 carbon atoms, where the percentage of total $CH_3$ groups relative to the sum of $CH_3$, $CH_2$, and CH groups in $R^{2'}$ and $R^{2'''}$ groups is at least about 70% or $R^{2'}$ and $R^{2'''}$ optionally bind to each other to form a saturated or unsaturated aliphatic ring optionally containing an ether or ester bond with the percentage of total $CH_3$ groups relative to the sum of $CH_3$, $CH_2$, and CH groups in the ring being at least about 70%; $R^1$ is hydrogen, methoxy, ethoxy, or phenoxy; and $Y^+$ is hydrogen, ammonium, quaternary ammonium, a nitrogen heterocycle, an alkali metal, or an alkaline earth metal.

The following compounds are preferred as the compound II, for example.

[Chem. 34]

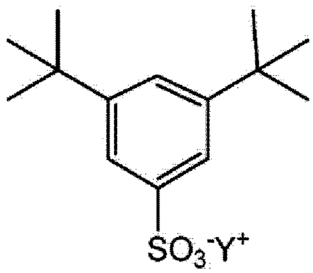

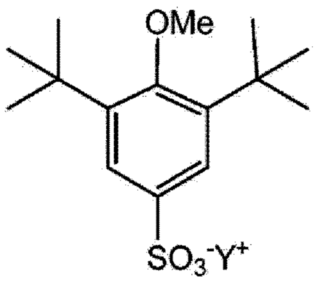

In the formulas, $Y^+$ may be hydrogen, ammonium, or an alkali metal.

The compound I is also preferably a compound III represented by the following formula III:

[Chem. 35]

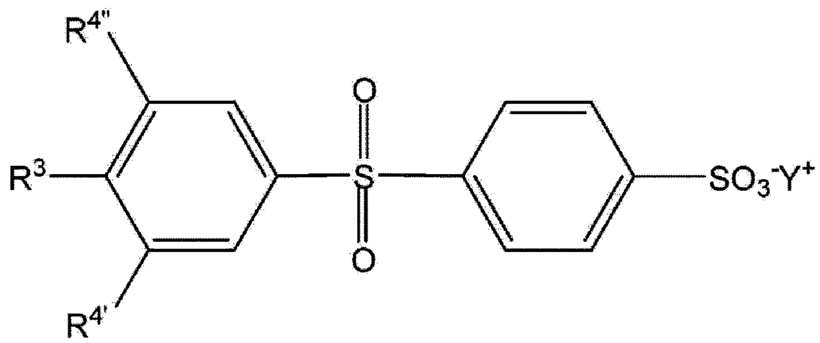

I I I

wherein $R^3$, $R^{4'}$, and $R^{4''}$ are the same as or different from each other and are each hydrogen or a saturated or unsaturated, acyclic or cyclic aliphatic group containing 4 to 16 carbon atoms, where the percentage of total $CH_3$ groups relative to the sum of $CH_3$, $CH_2$, and CH groups in $R^3$, $R^{4'}$, and $R^{4''}$ groups is at least about 70%, at least one of $R^3$, $R^{4'}$, and $R^{4''}$ is not hydrogen, when $R^{4'}$ and $R^{4''}$ are each hydrogen, $R^3$ is not hydrogen, and when $R^3$ is hydrogen, $R^{4'}$, and $R^{4''}$ are each not hydrogen; and $Y^+$ is hydrogen, ammonium, quaternary ammonium, a nitrogen heterocycle, an alkali metal, or an alkaline earth metal.

The compound III is preferably the following compound, for example.

[Chem. 36]

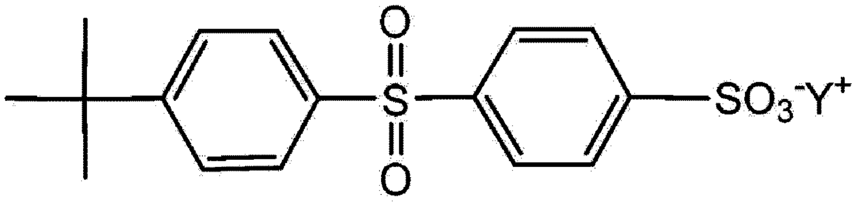

In the formula, $Y^+$ may be hydrogen, ammonium, or an alkali metal.

In the production method of the disclosure, two or more hydrocarbon surfactants may be used together.

The TFE-based polymer composition of the disclosure can be obtained by a production method including a polymerization step of polymerizing tetrafluoroethylene alone or polymerizing tetrafluoroethylene and a modifying monomer copolymerizable with tetrafluoroethylene in an aqueous medium having a pH of 4.0 or more in the presence of a hydrocarbon surfactant and a polymerization initiator to obtain a TFE-based polymer even in a case where the specific hydrocarbon surfactant is not used.

Conventionally, the pH of the aqueous medium used in the polymerization was less than 4.0 because the polymerization step for producing a TFE-based polymer used an acidic polymerization initiator. As a result of diligent studies by the disclosers, surprisingly, it has been found that by setting the pH of the aqueous medium used for polymerization to 4.0 or more, the stability of polymerization is improved and a TFE-based polymer having a high molecular weight can be produced.

The production method includes polymerizing tetrafluoroethylene alone or tetrafluoroethylene and a modifying monomer copolymerizable with tetrafluoroethylene in an aqueous medium having a pH of 4.0 or more. The pH may be 4.0 or more, preferably more than 4.0, more preferably 4.5 or more, still more preferably 5.0 or more, further more preferably 5.5 or more, even more preferably 6.0 or more, particularly preferably 6.5 or more, particularly preferably 7.0 or more, particularly preferably 7.5 or more, particularly preferably 8.0 or more. The upper limit of the pH is not limited, but may be, for example, 13.0 or less. From the viewpoint of corrosion of the polymerization tank, it is preferably 12.0 or less, more preferably 11.5 or less, still more preferably 11.0 or less.

The pH can be measured with a pH meter.

In the production method, the method of adjusting the pH of the aqueous medium to 4.0 or more is not limited, but the pH can be made 4.0 or more by using, for example, an alkaline aqueous solution, an alkaline aqueous dispersion, or a pH adjuster. Still, the method is not limited.

Further, even in a case where a polymerization initiator that shows acidity when dissolved in an aqueous medium is used, the pH can be adjusted to 4.0 or more by further adding an alkaline compound such as sodium hydroxide. The alkaline compound may be any compound which dissolves in water and ionizes to produce $OH^-$, and non-limiting examples thereof include a hydroxide of an alkali metal such as sodium hydroxide or potassium hydroxide; a hydroxide of alkaline

earth metals; ammonia; and amines. The polymerization step may include a step of adding an alkaline compound to an aqueous medium.

In the production method, the pH of the aqueous medium may be 4.0 or more during the entire period of the polymerization step. Further, the pH may be 4.0 or more in the middle of the polymerization step, or the pH may be 4.0 or more in the latter half of the polymerization step. Further, the pH may be 4.0 or more in the middle and the latter half of the polymerization step.

For example, in the polymerization step, the pH of the aqueous medium is preferably 4.0 or more when the polymer solid concentration is 3% by mass or more. In other words, preferably, the production method includes a polymerization step of polymerizing tetrafluoroethylene alone or polymerizing tetrafluoroethylene and a modifying monomer copolymerizable with tetrafluoroethylene in an aqueous medium in the presence of a hydrocarbon surfactant and a polymerization initiator to obtain a TFE-based polymer, and the aqueous medium preferably has a pH of 4.0 or more when the polymer solid concentration is 3% by mass or more. The aqueous medium more preferably has a pH of 4.0 or more when the polymer solid concentration is 5% by mass or more, still more preferably has a pH of 4.0 or more when the polymer solid concentration is 8% by mass or more, further more preferably has a pH of 4.0 or more when the polymer solid concentration is 10% by mass or more, even more preferably has a pH of 4.0 or more when the polymer solid concentration is 15% by mass or more, particularly preferably has a pH of 4.0 or more when the polymer solid concentration is 18% by mass or more, more preferably has a pH of 4.0 or more when the polymer solid concentration is 20% by mass or more, still more preferably has a pH of 4.0 or more when the polymer solid concentration is 25% by mass or more.

In the polymerization step, the pH of the aqueous medium is preferably maintained at 4.0 or more from the time when the polymer solid concentration becomes 25% by mass to the completion of polymerization, more preferably maintained at 4.0 or more from the time when the polymer solid concentration becomes 20% by mass to the completion of polymerization, still more preferably maintained at 4.0 or more from the time when the polymer solid concentration becomes 18% by mass to the completion of polymerization, further more preferably maintained at 4.0 or more from the time when the polymer solid concentration becomes 15% by mass to the completion of polymerization, even more preferably maintained at 4.0 or more from the time when the polymer solid concentration becomes 10% by mass to the completion of polymerization, particularly preferably maintained at 4.0 or more from the time when the polymer solid concentration becomes 8% by mass to the completion of polymerization, more preferably maintained at 4.0 or more from the time when the polymer solid concentration becomes 5% by mass to the completion of polymerization, and still more preferably maintained at 4.0 or more from the time when the polymer solid concentration becomes 3% by mass to the completion of polymerization.

In the polymerization step, the pH of the aqueous medium is also preferably 4.0 or more when the polymer solid concentration is less than 15% by mass. In the polymerization step, the pH of the aqueous medium is more preferably 4.0 or more when the polymer solid concentration is 3% by mass or more and less than 15% by mass, the pH of the aqueous medium is more preferably 4.0 or more when the polymer solid concentration is 5% by mass or more and less than 15% by mass, the pH of the aqueous medium is still more preferably 4.0 or more when the polymer solid concentration is 8% by mass or more and less than 15% by mass, and the pH of the aqueous medium is further preferably 4.0 or more when the polymer solid concentration is 10% by mass or more and less than 15% by mass.

In the polymerization step, the pH of the aqueous medium is preferably maintained at 4.0 or more while the polymer solid concentration is 10% by mass or more and up to 15% by mass, the pH of the aqueous medium is more preferably maintained at 4.0 or more while the polymer solid concentration is at 8% by mass or more and up to 15% by mass, and the pH of the aqueous medium is still more preferably maintained at 4.0 or more while the polymer solid concentration is 5% by mass or more and up to 15% by mass.

In any case, the pH of the aqueous medium is preferably more than 4.0, more preferably 4.5 or more, still more preferably 5.0 or more, further more preferably 5.5 or more, even more preferably 6.0 or more, particularly preferably 6.5 or more, more preferably 7.0 or more, still more preferably 7.5 or more, further more preferably 8.0 or more.

In the polymerization step, the pH of the aqueous medium is preferably 4.0 or more for at least 60% (preferably at least 70%, more preferably at least 80%, still more preferably at least 90%, further more preferably at least 95%, even more preferably at least 99%, particularly preferably 100%) of the period from the time of the initiation of the polymerization to the time when the polymer solid concentration is 3% by mass (preferably 5% by mass, more preferably 8% by mass, still more preferably 10% by mass, further more preferably 15% by mass, even more preferably 18% by mass, yet still further preferably 20% by mass, particularly preferably 25% by mass) .

In the polymerization step, the pH of the aqueous medium is preferably 4.0 or more for at least 60% (preferably at least 70%, more preferably at least 80%, still more preferably at least 90%, further more preferably at least 95%, even more preferably at least 99%, particularly preferably 100%) of the period from the time when the polymer solid concentration is 10% by mass (preferably 8% by mass, more preferably 5% by mass, still more preferably 3% by mass, further more preferably from the time of polymerization initiation) to the time when the polymer solid concentration is 15% by mass.

In the polymerization step, the pH of the aqueous medium is preferably 4.0 or more for at least 60% (preferably at least 70%, more preferably at least 80%, still more preferably at least 90%, further more preferably at least 95%, even more

preferably at least 99%, particularly preferably 100%) of the period from the time when the polymer solid concentration is 15% by mass to the time when the polymer solid concentration is 18% by mass (preferably 20% by mass, more preferably 25% by mass).

In the polymerization step, the pH of the aqueous medium is preferably 4.0 or more for at least 60% (preferably at least 70%, more preferably at least 80%, still more preferably at least 90%, further more preferably at least 95%, more preferably at least 99%, particularly preferably 100%) of the period from the time when the polymer solid concentration is 25% by mass (preferably 20% by mass, more preferably 18% by mass, still more preferably 15% by mass, further more preferably 10% by mass, even more preferably 8% by mass, particularly preferably 5% by mass, more preferably 3% by mass, still more preferably from the time of polymerization initiation) to the completion of polymerization.

In any case, the pH of the aqueous medium is preferably more than 4.0, more preferably 4.5 or more, still more preferably 5.0 or more, further more preferably 5.5 or more, even more preferably 6.0 or more, particularly preferably 6.5 or more, more preferably 7.0 or more, still more preferably 7.5 or more, further more preferably 8.0 or more.

In the production method, the hydrocarbon surfactant is a fluorine-free hydrocarbon surfactant, preferably an anionic hydrocarbon surfactant, more preferably a carboxylic acid-type hydrocarbon surfactant. The anionic hydrocarbon surfactant and the carboxylic acid-type hydrocarbon surfactant suitably used may be, for example, but not limited to, the compound ($\alpha$) exemplified in the different compounds with surface activity.

In the production method, the hydrocarbon surfactant is a fluorine-free hydrocarbon surfactant, preferably an anionic hydrocarbon surfactant, also preferably a sulfonic acid-type hydrocarbon surfactant. The anionic hydrocarbon surfactant and the sulfonic acid-type hydrocarbon surfactant are not limited. For example, the compound ($\beta$) exemplified in the different compounds with surface activity can be suitably used.

The TFE-based polymer composition of the disclosure can be obtained by a production method including a polymerization step of polymerizing tetrafluoroethylene alone or polymerizing tetrafluoroethylene and a modifying monomer copolymerizable with tetrafluoroethylene in an aqueous medium in the presence of an anionic hydrocarbon surfactant and a polymerization initiator to obtain a TFE-based polymer even in a case where the specific hydrocarbon surfactant is not used, in which the hydrocarbon surfactant contains a salt of the hydrocarbon surfactant. In other words, at least a part of the anionic hydrocarbon surfactant in the polymerization step is in the form of a salt.

As a result of diligent studies by the disclosers and others, surprisingly, it has been found that an anionic hydrocarbon surfactant containing a salt of the anionic hydrocarbon surfactant improves the stability of polymerization and a TFE-based polymer having a high molecular weight can be produced.

This is presumably attributable to the fact that the anionic surfactant containing a salt has better water solubility to exhibit emulsifying performance more easily.

The anionic hydrocarbon surfactant will be described later.

It can be confirmed by measuring the conductivity that the anionic hydrocarbon surfactant contains a salt of the hydrocarbon surfactant.

In the production method, the anionic hydrocarbon surfactant preferably has a salt concentration of 50% by mass or more, more preferably 60% by mass or more, still more preferably 70% by mass or more, further more preferably 80% by mass or more, even more preferably 90% by mass or more, particularly preferably 95% by mass or more, based on the total mass of the anionic hydrocarbon surfactant.

The ratio of the salt can be measured based on the solution concentration and the conductivity.

In the production method, the hydrocarbon surfactant is more preferably a carboxylic acid-type hydrocarbon surfactant. The hydrocarbon surfactant is free from fluorine.

In the salt of an anionic hydrocarbon surfactant, the cation that replaces the hydrogen atom of the acid (excluding hydrogen atom) is, for example, a metal atom, $NR^y_4$ ($R^y$s may be the same as or different from each other and are each H or an organic group (preferably a fluorine-free organic group)), imidazolium optionally containing a substituent, pyridinium optionally containing a substituent, or phosphonium optionally containing a substituent. $R^Y$ is preferably H or an alkyl group, more preferably H or an alkyl group containing 1 to 10 carbon atoms, still more preferably H or an alkyl group containing 1 to 4 carbon atoms.

The cation in the salt of the anionic hydrocarbon surfactant is preferably a metal atom or $NR^y_4$, more preferably $NR^y_4$, still more preferably $NH_4$.

Since the conductivity varies greatly depending on the temperature, the conductivity is measured using a thermostatic bath while keeping the sample liquid temperature at 25°C and the cell temperature of the pH meter at the same temperature.

In the production method, the polymerization step is preferably performed substantially in the absence of the hydrocarbon surfactant in the form of an organic acid. Polymerization substantially in the absence of the hydrocarbon surfactant in the form of an organic acid further improves the stability of the polymerization, and a high-molecular-weight TFE-based polymer can be obtained.

Substantially in the absence of the hydrocarbon surfactant in the form of an organic acid, the concentration of the organic acid is preferably 1.0% by mass or less, more preferably 0.5% by mass or less, still more preferably 0.1% by mass

or less, even more preferably 0.05% by mass or less, particularly preferably 0.01% by mass or less, based on the mass of the resulting aqueous dispersion.

As used herein, the term "organic acid" means an organic compound that exhibits acidity. Examples of the organic acid include a carboxylic acid containing a -COOH group, and a sulfonic acid containing a -$SO_3H$ group, and preferred is a carboxylic acid from the viewpoint that the pH of an aqueous solution containing the organic acid can be easily adjusted.

Further, "form of an organic acid" is a form in which H is not free from the acidic group contained in the organic acid (for example, -COOH group, -$SO_3H$ group).

In the production method, the hydrocarbon surfactant is an anionic hydrocarbon surfactant.

In the polymerization step, the amount of the hydrocarbon surfactant at the initiation of the polymerization is preferably more than 50 ppm based on the aqueous medium. The amount of the hydrocarbon surfactant at the initiation of the polymerization is preferably 60 ppm or more, more preferably 70 ppm or more, still more preferably 80 ppm or more, further more preferably 100 ppm or more. The upper limit thereof is preferably, but not limited to, 10000 ppm, more preferably 5000 ppm, for example. When the amount of the hydrocarbon surfactant at the initiation of polymerization is in the above range, it is possible to obtain an aqueous dispersion having a smaller average primary particle size and superior stability.

It can be said that the polymerization started when the gas TFE in the reactor became a TFE-based polymer and the pressure drop in the reactor occurred. U.S. Pat. No. 3,391,099 (Punderson) discloses a dispersion polymerization of tetrafluoroethylene in an aqueous medium comprising two separate steps of a polymerization process comprising: first the formation of a polymer nucleus as a nucleation site, and then the growth step comprising polymerization of the established particles. The polymerization is usually started when both the monomer to be polymerized and the polymerization initiator are charged in the reactor. Further, in the disclosure, an additive related to the formation of a nucleation site is referred to as a nucleating agent.

The polymerization step preferably includes an addition step of adding a composition containing a hydrocarbon surfactant after the initiation of the polymerization. The addition step further improves the stability of polymerization, and a higher-molecular-weight TFE-based polymer can be obtained.

The hydrocarbon surfactant may be, for example, in the form of a solid (for example, powder of a hydrocarbon surfactant) or in the form of a liquid.

The composition may be any one containing a hydrocarbon surfactant, may be composed of only a hydrocarbon surfactant, or may be a solution or dispersion of a hydrocarbon surfactant containing a hydrocarbon surfactant and a liquid medium. Therefore, the addition step can also be said to be a step of adding a hydrocarbon surfactant alone or a composition containing the hydrocarbon surfactant after the initiation of polymerization.

The hydrocarbon surfactant is not limited to one type, and may be a mixture of two or more types.

The liquid medium may be either an aqueous medium or an organic solvent, or may be a combination of an aqueous medium and an organic solvent.

Specific examples of the composition include an aqueous solution in which a hydrocarbon surfactant is dissolved in an aqueous medium and an aqueous dispersion in which a hydrocarbon surfactant is dispersed in an aqueous medium.

The hydrocarbon surfactant added in the addition step is preferably 0.0001 to 10% by mass based on the aqueous medium. It is more preferably 0.001% by mass or more, still more preferably 0.01% by mass or more, particularly preferably 0.05% by mass or more based on the aqueous medium. Further, it is more preferably 5% by mass or less, still more preferably 3% by mass or less, particularly preferably 1% by mass or less based on the aqueous medium.

Since the stability of polymerization is improved and a higher-molecular-weight TFE-based polymer can be obtained, the composition is preferably an aqueous solution containing a hydrocarbon surfactant and having a pH of 5.0 or more.

The pH of the aqueous solution is more preferably 6.0 or more, still more preferably 6.5 or more, further more preferably 7.0 or more, even more preferably 7.5 or more, particularly preferably 8.0 or more. The upper limit of pH is not limited, and may be 12.0 or less, or 11.0 or less.

The hydrocarbon surfactant in the addition step is preferably an anionic hydrocarbon surfactant, more preferably a carboxylic acid-type hydrocarbon surfactant.

The anionic hydrocarbon surfactant and the carboxylic acid-type hydrocarbon surfactant suitably used may be, for example, but not limited to, the compound ($\alpha$) exemplified in the different compounds with surface activity.

The carboxylic acid-type hydrocarbon surfactant used in the polymerization step and the addition step preferably includes at least one selected from the group consisting of: a surfactant containing a carboxy group (-COOH) or a group obtained by replacing the hydrogen atom of the carboxy group by an inorganic cation (e.g., metal atom, ammonium) among the surfactant (e), the anionic surfactant represented by $R^6(-L-M)_2$ described above, and the anionic surfactant represented by $R^7(-L-M)_3$ described above; the compound ($\alpha$); the surfactant (1-0A); and those obtained by radically treating or oxidizing these surfactants. The carboxylic acid-type hydrocarbon surfactant may be used alone or in a mixture of two or more.

The compound ($\alpha$) includes not only the anionic hydrocarbon surfactant represented by the formula: $R^{102}$-COOM (wherein $R^{102}$ and M are as defined above) (preferably, the compound represented by the formula (A1)), but also those containing a carboxy group (-COOH) or a group in which the hydrogen atom of the carboxy group is replaced by an inorganic cation (e.g., metal atom, ammonium) among the anionic surfactant represented by the formula: R-L-M (wherein R, L, and M are as defined above), the surfactant (c), and the surfactant (d).

The carboxylic acid-type hydrocarbon surfactant is preferably the compound ($\alpha$), more preferably includes at least one selected from the group consisting of a compound represented by the formula (A1), a compound represented by the formula (c) wherein $A^c$ is -$COOX^c$, a compound represented by the formula (d) wherein $A^d$ is -$COOX^d$, a compound represented by the formula (e) wherein $A^e$ is - $COOM^e$, a compound represented by the formula (1-0A) wherein A is -COOM, and those obtained by radically treating or oxidizing these surfactants, still more preferably includes at least one selected from the group consisting of a compound represented by the formula (A1) and a compound obtained by radically treating or oxidizing the compound.

In particular, preferred is at least one selected from the group consisting of lauric acid, capric acid, myristic acid, pentadecylic acid, palmitic acid, salts thereof, and those obtained by radically treating or oxidizing these compounds. Non-limiting examples of the salts include those in which the hydrogen atom of the carboxy group is a metal atom, $NR^{101}_4$, imidazolium optionally containing a substituent, pyridinium optionally containing a substituent, or phosphonium optionally containing a substituent as M in the above-described formula.

In the production method, tetrafluoroethylene is preferably polymerized substantially in the absence of a fluorine-containing surfactant.

The phrase "substantially in the absence of a fluorine-containing surfactant" in the production method means that the amount of a fluorine-containing surfactant in the aqueous medium is 10 ppm by mass or less, preferably 1 ppm by mass or less, more preferably 100 ppb by mass or less, still more preferably 10 ppb by mass or less, further more preferably less than 10 ppb by mass, further more preferably 1 ppb or less, particularly preferably less than 1 ppb by mass.

The phrase "substantially in the absence of a fluorine-containing surfactant" also means that no fluorine-containing surfactant is intentionally added.

Examples of the fluorine-containing surfactant include fluorine-containing anionic surfactants.

The fluorine-containing anionic surfactant may be, for example, a fluorine atom-containing surfactant containing 20 or less carbon atoms in total in the portion excluding the anionic group.

The fluorine-containing surfactant may also be a surfactant containing fluorine and having a molecular weight of 1000 or less, preferably 800 or less in the anionic moiety.

The "anionic moiety" means the portion of the fluorine-containing surfactant excluding the cation. For example, in the case of $F(CF_2)_{n1}COOM$ represented by the formula (I) described later, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P is the ratio between the concentration of the fluorine-containing surfactant in octanol and the concentration of the fluorine-containing surfactant in water in a phase-separated octanol/water (1:1) liquid mixture containing the fluorine-containing surfactant).

Log POW is determined as follows. Specifically, HPLC is performed on standard substances (heptanoic acid, octanoic acid, nonanoic acid, and decanoic acid) each having a known octanol/water partition coefficient using TOSOH ODS-120T ($\phi$4.6 mm $\times$ 250 mm, Tosoh Corp.) as a column and acetonitrile/0.6% by mass HClO4 aqueous solution (= 1/1 (vol/vol%)) as an eluent at a flow rate of 1.0 ml/min, a sample amount of 300 $\mu$L, and a column temperature of 40°C with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those disclosed in US 2007/0015864 A, US 2007/0015865 A, US 2007/0015866 A, US 2007/0276103 A, US 2007/0117914 A, US 2007/142541 A, US 2008/0015319 A, US 3250808 B, US 3271341 B, JP 2003-119204 A, WO 2005/042593, WO 2008/060461, WO 2007/046377, WO 2007/119526, WO 2007/046482, WO 2007/046345, US 2014/0228531 A, WO 2013/189824, and WO 2013/189826.

Examples of the fluorine-containing anionic surfactant include a compound represented by the following formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group containing 3 to 20 carbon atoms in which some or all of Hs are replaced by F; the alkylene group optionally containing one or more ether bonds in which some of Hs are replaced by Cl; and $Y^0$ is an anionic group.

The anionic group for $Y^0$ may be -COOM, -$SO_2M$, or - $SO_3M$, and may be -COOM or -$SO_3M$.

M is H, a metal atom, $NR^7_4$, imidazolium optionally containing a substituent, pyridinium optionally containing a substituent, or phosphonium optionally containing a substituent, wherein $R^7$ is H or an organic group.
Examples of the metal atom include an alkali metal (Group 1) and an alkaline earth metal (Group 2), such as Na, K, and Li.
$R^7$ may be H or a $C_{1-10}$ organic group, may be H or a $C_{1-4}$ organic group, or may be H or a $C_{1-4}$ alkyl group.
M may be H, a metal atom, or $NR^7_4$, may be H, an alkali metal (Group 1), an alkaline earth metal (Group 2), or $NR^7_4$, or may be H, Na, K, Li, or $NH_4$.
In $Rf^{n0}$, 50% or more of H atoms may be replaced by fluorine.
Examples of the compound represented by the general formula ($N^0$) include:

a compound represented by the following formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and $Y^0$ is as defined above;
a compound represented by the following formula ($N^2$):

$$Rf^{n1}\text{-O-}(CF\ (CF_3)CF_2O)_{m2}CFX^{n1}\text{-}Y^0 \qquad (N^2)$$

wherein $Rf^{n1}$ is a perfluoroalkyl group containing 1 to 5 carbon atoms; m2 is an integer of 0 to 3; $X^{n1}$ is F or $CF_3$; and $Y^0$ is as defined above;
a compound represented by the following formula ($N^3$):

$$Rf^{n2}(CH_2)_{m3}\text{-}\ (Rf^{n3})_q\text{-}Y^0 \qquad (N^3)$$

wherein $Rf^{n2}$ is a partially or fully fluorinated alkyl group containing 1 to 13 carbon atoms and optionally containing an ether bond; m3 is an integer of 1 to 3; $Rf^{n3}$ is a linear or branched perfluoroalkylene group containing 1 to 3 carbon atoms; q is 0 or 1; and $Y^0$ is as defined above;
a compound represented by the following formula ($N^4$):

$$Rf^{n4}\text{-O-}(CY^{n1}Y^{n2})_pCF_2\text{-}Y^0 \qquad (N^4)$$

wherein $Rf^{n4}$ is a linear or branched partially or fully fluorinated alkyl group containing 1 to 12 carbon atoms and optionally containing an ether bond; and $Y^{n1}$ and $Y^{n2}$ are the same as or different from each other and are each H or F; p is 0 or 1; and $Y^0$ is as defined above; and
a compound represented by the following formula ($N^5$):

[Chem. 37]

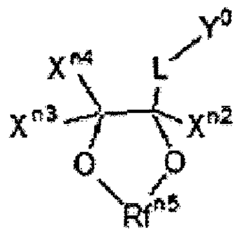

($N^5$)

wherein $X^{n2}$, $X^{n3}$, and $X^{n4}$ may be the same as or different from each other and are each H, F, or a linear or branched partially or fully fluorinated alkyl group containing 1 to 6 carbon atoms and optionally containing an ether bond; $Rf^{n5}$ is a linear or branched partially or fully fluorinated alkylene group containing 1 to 3 carbon atoms and optionally containing an ether bond; L is a linking group; and $Y^0$ is as defined above, with the proviso that the total carbon number of $X^{n2}$, $X^{n3}$, $X^{n4}$, and $Rf^{n5}$ is 18 or less.

More specific examples of the compound represented by the above formula ($N^0$) include a perfluorocarboxylic acid (I) represented by the following formula (I), an ω-H perfluorocarboxylic acid (II) represented by the following formula (II), a perfluoropolyethercarboxylic acid (III) represented by the following formula (III), a perfluoroalkylalkylenecarboxylic acid (IV) represented by the following formula (IV), a perfluoroalkoxyfluorocarboxylic acid (V) represented by the following formula (V), a perfluoroalkylsulfonic acid (VI) represented by the following formula (VI), an ω-H perfluorosulfonic acid (VII)

represented by the following formula (VII), a perfluoroalkylalkylene sulfonic acid (VIII) represented by the following formula (VIII), an alkylalkylene carboxylic acid (IX) represented by the following formula (IX), a fluorocarboxylic acid (X) represented by the following formula (X), an alkoxyfluorosulfonic acid (XI) represented by the following formula (XI), and a compound (XII) represented by the following formula (XII).

The perfluorocarboxylic acid (I) is represented by the following formula (I):

$$F(CF_2)_{n1}COOM \qquad (I)$$

wherein n1 is an integer of 3 to 14; and M is H, a metal atom, $NR^7_4$, imidazolium optionally containing a substituent, pyridinium optionally containing a substituent, or phosphonium optionally containing a substituent, wherein $R^7$ is H or an organic group.

The ω-H perfluorocarboxylic acid (II) is represented by the following formula (II):

$$H(CF_2)_{n2}COOM \qquad (II)$$

wherein n2 is an integer of 4 to 15; and M is as defined above.

The perfluoropolyethercarboxylic acid (III) is represented by the following formula (III):

$$Rf^1\text{-O-}(CF(CF_3)CF_2O)_{n3}CF(CF_3)COOM \qquad (III)$$

wherein $Rf^1$ is a perfluoroalkyl group containing 1 to 5 carbon atoms; n3 is an integer of 0 to 3; and M is as defined above.

The perfluoroalkylalkylenecarboxylic acid (IV) is represented by the following formula (IV):

$$Rf^2(CH_2)_{n4}Rf^3COOM \qquad (IV)$$

wherein $Rf^2$ is a perfluoroalkyl group containing 1 to 5 carbon atoms; $Rf^3$ is a linear or branched perfluoroalkylene group containing 1 to 3 carbon atoms; n4 is an integer of 1 to 3; and M is as defined above.

The alkoxyfluorocarboxylic acid (V) is represented by the following formula (V):

$$Rf^4\text{-O-}CY^1Y^2CF_2\text{-COOM} \qquad (V)$$

wherein $Rf^4$ is a linear or branched partially or fully fluorinated alkyl group containing 1 to 12 carbon atoms and optionally containing an ether bond; $Y^1$ and $Y^2$ are the same as or different from each other and are each H or F; and M is as defined above.)

The perfluoroalkylsulfonic acid (VI) is represented by the following formula (VI):

$$F(CF_2)_{n5}SO_3M \qquad (VI)$$

wherein n5 is an integer of 3 to 14; and M is as defined above.

The ω-H perfluorosulfonic acid (VII) is represented by the following formula (VII):

$$H(CF_2)_{n6}SO_3M \qquad (VII)$$

wherein n6 is an integer of 4 to 14; and M is as defined above.

The perfluoroalkylalkylenesulfonic acid (VIII) is represented by the following formula (VIII):

$$Rf^5(CH_2)_{n7}SO_3M \qquad (VIII)$$

wherein $Rf^5$ is a perfluoroalkyl group containing 1 to 13 carbon atoms; n7 is an integer of 1 to 3; and M is as defined above.

The alkylalkylenecarboxylic acid (IX) is represented by the following formula (IX):

$$Rf^6(CH_2)_{n8}COOM \qquad (IX)$$

wherein $Rf^6$ is a linear or branched partially or fully fluorinated alkyl group containing 1 to 13 carbon atoms and optionally containing an ether bond; n8 is an integer of 1 to 3; and M is as defined above.

The fluorocarboxylic acid (X) is represented by the following formula (X):

$$Rf^7\text{-O-}Rf^8\text{-O-}CF_2\text{-COOM} \qquad (X)$$

wherein $Rf^7$ is a linear or branched partially or fully fluorinated alkyl group containing 1 to 6 carbon atoms and optionally containing an ether bond; $Rf^8$ is a linear or branched partially or fully fluorinated alkyl group containing 1 to 6 carbon atoms; and M is as defined above.

The alkoxyfluorosulfonic acid (XI) is represented by the following formula (XI):

$$Rf^9\text{-O-}CY^1Y^2CF_2\text{-}SO_3M \qquad (XI)$$

wherein $Rf^9$ is a linear or branched partially or fully fluorinated alkyl group containing 1 to 12 carbon atoms, optionally containing an ether bond, and optionally containing chlorine; $Y^1$ and $Y^2$ are the same as or different from each other and are each H or F; and M is as defined above.

The compound (XII) is represented by the following formula (XII):

[Chem. 38]

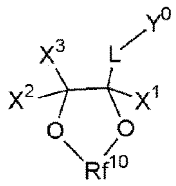

(X I I)

wherein $X^1$, $X^2$, and $X^3$ may be the same as or different from each other and are each H, F, or a linear or branched partially or fully fluorinated alkyl group containing 1 to 6 carbon atoms and optionally containing an ether bond; $Rf^{10}$ is a perfluoroalkylene group containing 1 to 3 carbon atoms; L is a linking group; and $Y^0$ is an anionic group.

$Y^0$ may be -COOM, $-SO_2M$, or $-SO_3M$, and may be $-SO_3M$ or COOM, where M is as defined above.

Examples of L include a single bond and a partially or fully fluorinated alkylene group containing 1 to 10 carbon atoms and optionally containing an ether bond.

As described above, examples of the fluorine-containing anionic surfactant include a carboxylic acidbased fluorine-containing surfactant and a sulfonic acidbased fluorine-containing surfactant.

The TFE-based polymer composition of the disclosure can be suitably produced by a production method including an addition step of adding at least one selected from the group consisting of a radical scavenger and a decomposer of a polymerization initiator. The addition step is performed during the step of performing the emulsion polymerization described above in an aqueous medium. The radical concentration during polymerization can be adjusted by adding a radical scavenger or a decomposer of a polymerization initiator. A radical scavenger is preferable from the viewpoint of reducing the radical concentration.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further more preferably 5.0 or greater, particularly preferably 10 or greater.

The radical scavenger in the disclosure preferably includes, for example, at least one selected from the group consisting of aromatic hydroxy compounds, aromatic amines, N,N-diethylhydroxylamine, quinone compounds, terpenes, thiocyanates, and cupric chloride ($CuCl_2$).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and

naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate ($NH_4SCN$), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to reduce the standard specific gravity, the amount of the radical scavenger added is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), further more preferably 15% (molar basis), even more preferably 20% (molar basis), particularly preferably 25% (molar basis), particularly preferably 30% (molar basis), particularly preferably 35% (molar basis). The upper limit thereof is more preferably 400% (molar basis), still more preferably 300% (molar basis), further more preferably 200% (molar basis), even more preferably 100% (molar basis).

The decomposer of a polymerization initiator may be any compound that can decompose the polymerization initiator used, and preferably includes, for example, at least one selected from the group consisting of sulfites, bisulfites, bromates, diimine, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

The amount of the decomposer of a polymerization initiator added is in the range of 25 to 300% by mass based on the amount of the oxidizing agent combined as a polymerization initiator (redox initiator described later). The amount thereof is preferably 25 to 150% by mass, still more preferably 50 to 100% by mass.

In order to reduce the standard specific gravity, the amount of the decomposer of a polymerization initiator added is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), still more preferably 13% (molar basis), further more preferably 15% (molar basis). The upper limit thereof is more preferably 400% (molar basis), still more preferably 300% (molar basis), further more preferably 200% (molar basis), even more preferably 100% (molar basis).

At least one selected from the group consisting of a radical scavenger and a decomposer of a polymerization initiator is preferably added when the concentration of the TFE-based polymer formed in the aqueous medium is 5% by mass or more. More preferably, it is added when the concentration thereof is 10% by mass or more.

Further, it is preferably added when the concentration of the TFE-based polymer formed in the aqueous medium is 40% by mass or less. It is more preferably added when the concentration thereof is 35% by mass or less, still more preferably when the concentration thereof is 30% by mass or less.

The addition step may be a step of continuously adding at least one selected from the group consisting of a radical scavenger and a decomposer of a polymerization initiator.

Continuously adding at least one selected from the group consisting of a radical scavenger and a decomposer of a polymerization initiator means, for example, adding the at least one selected from the group consisting of a radical scavenger and a decomposer of a polymerization initiator not all at once but over time without interruption or in portions.

The polymerization step may include polymerization of tetrafluoroethylene further in the presence of a nucleating agent.

The nucleating agent preferably includes at least one selected from the group consisting of, for example, fluoropolyether, a nonionic surfactant, and a chain transfer agent.

In this case, the polymerization step is preferably a step of polymerizing tetrafluoroethylene in an aqueous medium in the presence of a hydrocarbon surfactant and the nucleating agent to obtain a TFE-based polymer.

As the fluoropolyether, perfluoropolyether is preferable.

The fluoropolyether preferably has a repeating unit represented by the formulas (1a) to (1d):

$$(\text{-CFCF}_3\text{-CF}_2\text{-O-})_n \qquad (1a)$$

$$(\text{-CF}_2\text{-CF}_2\text{-CF}_2\text{-O-})_n \qquad (1b)$$

$$(\text{-CF}_2\text{-CF}_2\text{-O-})_n\text{-}(\text{-CF}_2\text{-O-})_m \qquad (1c)$$

$$(\text{-CF}_2\text{-CFCF}_3\text{-O-})_n\text{-}(\text{-CF}_2\text{-O-})_n, \qquad (1d)$$

wherein m and n are integers of 1 or more.

The fluoropolyether is preferably fluoropolyetheric acid or a salt thereof, and the fluoropolyetheric acid is preferably a carboxylic acid, a sulfonic acid, a sulfonamide, or a phosphonic acid, more preferably a carboxylic acid.

Among the fluoropolyetheric acid or a salt thereof, a salt of fluoropolyetheric acid is preferable, an ammonium salt of fluoropolyetheric acid is more preferable, and an ammonium salt of fluoropolyethercarboxylic acid is still more preferable.

The fluoropolyetheric acid or a salt thereof can have any chain structure in which oxygen atoms in the main chain of the molecule are separated by saturated fluorocarbon groups containing 1 to 3 carbon atoms. Two or more types of fluorocarbon groups can be present in the molecule.

The fluoropolyether acid or its salt is preferably a compound represented by the following formula:

$$CF_3\text{-}CF_2\text{-}CF_2\text{-}O(\text{-}CFCF_3\text{-}CF_2\text{-}O\text{-})_nCFCF_3\text{-}COOH,$$

$$CF_3\text{-}CF_2\text{-}CF_2\text{-}O(\text{-}CF_2\text{-}CF_2\text{-}CF_2\text{-}O\text{-})_n\text{-}CF_2\text{-}CF_2OOH,$$

or

$$HOOC\text{-}CF_2\text{-}O(\text{-}CF_2\text{-}CF_2\text{-}O\text{-})_n\text{-}(\text{-}CF_2\text{-}O\text{-})_mCF_2COOH,$$

wherein m and n are the same as above,
or a salt thereof.

These structures are described in J. Appl. Polymer Sci., 57, 797 (1995) examined by Kasai. As disclosed herein, such fluoropolyethers can have a carboxylic acid group or a salt thereof at one end or both ends. Similarly, such fluoropolyethers may have a sulfonic acid or phosphonic acid group or a salt thereof at one end or both ends. In addition, fluoropolyethers having acid functional groups at both ends may have different groups at each end. Regarding monofunctional fluoropolyether, the other end of the molecule is usually perfluorinated, but may contain a hydrogen or chlorine atom.

Fluoropolyethers having acid groups at one or both ends contains at least two ether oxygens, preferably at least four ether oxygens, still more preferably at least six ether oxygens. Preferably, at least one fluorocarbon group separating ether oxygens, more preferably at least two of such fluorocarbon groups contain 2 or 3 carbon atoms. Still more preferably, at least 50% of the fluorocarbon groups separating ether oxygens contains 2 or 3 carbon atoms. Also preferably, the fluoropolyether contains at least 15 carbon atoms in total, and for example, a preferable minimum value of n or n + m in the repeating unit structure is preferably at least 5. Two or more fluoropolyethers having an acid group at one end or both ends can be used in the method according to the disclosure. Typically, fluoropolyethers may contain a plurality of compounds in varying proportions within the molecular weight range relative to the average molecular weight, unless special care is taken in the production of a single specific fluoropolyether compound.

The fluoropolyether preferably has a number-average molecular weight of 800 g/mol or more. The fluoropolyether acid or the salt thereof preferably has a number-average molecular weight of less than 6000 g/mol, because the fluoropolyether acid or the salt thereof may be difficult to disperse in an aqueous medium. The fluoropolyether acid or the salt thereof more preferably has a number-average molecular weight of 800 to 3500 g/mol, still more preferably 1000 to 2500 g/mol.

The amount of the fluoropolyether is preferably 5 to 3000 ppm, more preferably 5 to 2000 ppm based on the aqueous medium. The lower limit thereof is still more preferably 10 ppm and the upper limit thereof is still more preferably 100 ppm.

Examples of the nonionic surfactant as the nucleating agent include the nonionic surfactant described above, and preferred is a fluorine-free nonionic surfactant. Examples of the nonionic surfactant include a compound represented by the following general formula (i):

$$R^3\text{-}O\text{-}A^1\text{-}H \qquad (i)$$

wherein $R^3$ is a linear or branched primary or secondary alkyl group containing 8 to 18 carbon atoms, and $A^1$ is a polyoxyalkylene chain.

$R^3$ preferably contains 10 to 16, more preferably 12 to 16 carbon atoms. When $R^3$ contains 18 or less carbon atoms, the aqueous dispersion tends to have good dispersion stability. When $R^3$ contains more than 18 carbon atoms, it is difficult to handle due to its high flowing temperature. When $R^3$ contains less than 8 carbon atoms, the surface tension of the aqueous dispersion becomes high, so that the permeability and wettability are likely to decrease.

The polyoxyalkylene chain may be composed of oxyethylene and oxypropylene. The polyoxyalkylene chain is composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average repeating number of oxypropylene groups is more than 0, the oxyethylene groups and oxypropylene

groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when $A^1$ has 0.5 to 1.5 oxypropylene groups on average, good low foaming properties can be achieved, which is preferable.

More preferably, $R^3$ is (R' ) (R")HC-, where R' and R'' are the same or different linear, branched, or cyclic alkyl groups, and the total number of carbon atoms is at least 5, preferably 7 to 17. Preferably, at least one of R' or R'' is a branched or cyclic hydrocarbon group.

Specific examples of the polyoxyethylene alkyl ether include $C_{13}H_{27}$-O-$(C_2H_4O)_{10}$-H, $C_{12}H_{25}$-O-$(C_2H_4O)_{10}$-H, $C_{10}H_{21}CH(CH_3)CH_2$-O-$(C_2H_4O)_9$-H, $C_{13}H_{27}$-O-$(C_2H_4O)_9$-$(CH(CH_3)CH_2O)$-H, $C_{16}H_{33}$-O-$(C_2H_4O)_{10}$-H, and $HC(C_5H_{11})(C_7H_{15})$-O-$(C_2H_4O)_9$-H. Examples of commercially available products of the polyoxyethylene alkyl ethers include Genapol X080 (product name, available from Clariant), NOIGEN TDS series (available from DKS Co., Ltd.) exemplified by NOIGEN TDS-80 (trade name), LEOCOL TD series (available from Lion Corp.) exemplified by LEOCOL TD-90 (trade name), LIONOL® TD series (available from Lion Corp.), T-Det A series (available from Harcros Chemicals Inc.) exemplified by T-Det A 138 (trade name), and TERGITOL® 15 S series (available from Dow).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all product names, available from Dow Chemical Co., Ltd.).

The hydrophobic group of the nonionic surfactant may be any of an alkylphenol group, a linear alkyl group, and a branched alkyl group.

Examples of the polyoxyethylene alkylphenyl ether-based nonionic compound include, for example, a compound represented by the following general formula (ii):

$$R^4\text{-}C_6H_4\text{-O-}A^2\text{-H} \qquad \text{(ii)}$$

wherein $R^4$ is a linear or branched primary or secondary alkyl group containing 4 to 12 carbon atoms, and $A^2$ is a polyoxyalkylene chain. Specific examples of the polyoxyethylene alkylphenyl ether-based nonionic compound include Triton® X-100 (trade name, available from Dow Chemical Co., Ltd.).

Examples of the nonionic surfactant also include polyol compounds. Specific examples thereof include those described in WO 2011/014715.

Typical examples of the polyol compound include compounds having one or more sugar units as polyol unit. The sugar units may have been modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitans. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as the polyol compound include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars have been modified in that one or more of the hydrogen atoms of a hydroxy group (and/or hydroxyalkyl group) bonded to the carbon ring atoms has been replaced by the long chain residues such that an ether or ester bond is created between the long chain residue and the sugar moiety.

The sugar-based polyol may contain a single sugar unit or a plurality of sugar units. The single sugar unit or the plurality of sugar units may be modified with long chain moieties as described above. Specific examples of sugar-based polyol compound include glycosides, sugar esters, sorbitan esters, and mixtures and combinations thereof.

A preferred type of polyol compounds are alkyl or modified alkyl glucosides. These types of surfactants contain at least one glucose moiety. Examples thereof include compounds represented by the formula:

[Chem. 39]

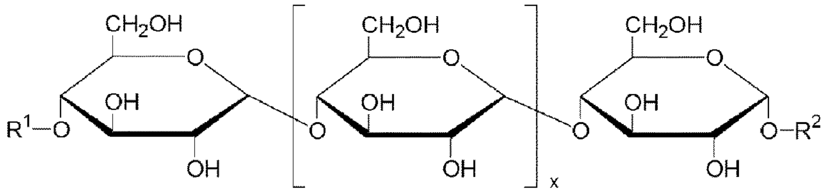

wherein x represents 0, 1, 2, 3, 4, or 5 and $R^1$ and $R^2$ each independently represent H or a long chain unit containing at least 6 carbon atoms, with the proviso that at least one of $R^1$ or $R^2$ is not H. Typical examples of $R^1$ and $R^2$ include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof.

It is understood that the above formula represents specific examples of alkyl polyglucosides showing glucose in its pyranose form but other sugars or the same sugars but in different enantiomeric or diastereomeric forms may also be used.

Alkyl glucosides are available, for example, by acidcatalyzed reactions of glucose, starch, or n-butyl glucoside with aliphatic alcohols which typically yield a mixture of various alkyl glucosides (Alkyl polyglycylside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic® R series, tridecyl alcohol alkoxylates supplied from BASF Corporation as Iconol® TDA series, and hydrocarbon-containing siloxane surfactants, preferably hydrocarbon surfactants. In the sense that the hydrocarbyl groups are fully replaced by hydrogen atoms where they can be replaced by halogen such as fluorine, these siloxane surfactants can also be regarded as hydrocarbon surfactants, i.e. the monovalent substituents on the hydrocarbyl groups are hydrogen.

In the production method, in addition to the specific hydrocarbon surfactant and other compounds with surface activity used as necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. The stabilizing aids may be used alone or in combination of two or more. The stabilizing aid is more preferably paraffin wax. The paraffin wax may be in the form of liquid, semi-solid, or solid at room temperature, and is preferably a saturated hydrocarbon containing 12 or more carbon atoms. The paraffin wax usually preferably has a melting point of 40°C to 65°C, more preferably 50°C to 65°C.

The amount of the stabilizing aid used is preferably 0.1 to 12% by mass, and more preferably 0.1 to 8% by mass, based on the mass of the aqueous medium used. It is desirable that the stabilizing aid is sufficiently hydrophobic so that the stabilizing aid is completely separated from the TFE-based polymer aqueous emulsion after emulsion polymerization of TFE, and does not serve as a contaminating component.

In the production method, the emulsion polymerization may be performed by charging a polymerization reactor with an aqueous medium, the hydrocarbon surfactant, a monomer, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomers, the polymerization initiator, a chain transfer agent, and the surfactant may additionally be added depending on the purpose. The hydrocarbon surfactant may be added after the polymerization reaction is initiated.

In the emulsion polymerization, the polymerization temperature and the polymerization pressure are determined as appropriate in accordance with the types of the monomers used, the molecular weight of the target TFE-based polymer, and the reaction rate. Usually, the polymerization temperature is 5°C to 150°C, preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

In particular, from the viewpoint of improving the yield, the polymerization pressure is preferably 1.0 MPaG or higher, more preferably 1.2 MPaG or higher, still more preferably 1.5 MPaG or higher, further more preferably 1.8 MPaG or higher, particularly preferably 2.0 MPaG or higher.

In the emulsion polymerization, the hydrocarbon surfactant is preferably added when the concentration of the TFE-based polymer formed in the aqueous medium is less than 0.60% by mass. The hydrocarbon surfactant is more

preferably added when the concentration is 0.50% by mass or less, still more preferably 0.36% by mass or less, further more preferably 0.30% by mass or less, even more preferably 0.20% by mass or less, particularly preferably 0.10% by mass or less. Most preferably, the hydrocarbon surfactant is added along with the initiation of polymerization. The concentration is the concentration with respect to the total of the aqueous medium and the TFE-based polymer.

In the emulsion polymerization, the amount of the hydrocarbon surfactant at the initiation of the polymerization is preferably 1 ppm or more based on the aqueous medium. The amount of the hydrocarbon surfactant at the initiation of the polymerization is preferably 10 ppm or more, more preferably 50 ppm or more, still more preferably 100 ppm or more, further more preferably 200 ppm or more. The upper limit thereof is preferably, but not limited to, 100000 ppm, more preferably 50000 ppm, for example. When the amount of the hydrocarbon surfactant at the initiation of polymerization is in the above range, it is possible to obtain an aqueous dispersion having a smaller average primary particle size and superior stability.

The polymerization initiator may be any initiator capable of generating radicals within the polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined depending on the types of the monomers, the molecular weight of the target TFE-based polymer, and the reaction rate.

The polymerization initiator to be used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The oil-soluble radical polymerization initiator is preferably free from fluorine atoms.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, t-butyl permaleate, and t-butyl hydroperoxide. The initiator may also contain a reducing agent such as a sulfite or a sulfurous acid salt. The amount thereof used may be 0.1 to 20 times the amount of the peroxide.

For example, in the case of polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continually or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator used is preferably an oxidizing agent or a reducing agent capable of adjusting the pH of the

redox initiator aqueous solution to 4.0 or more. The redox initiator aqueous solution means a 0.50% by mass aqueous solution of an oxidizing agent or a 0.50% by mass aqueous solution of a reducing agent.

That is, at least one of the 0.50% by mass aqueous solution of the oxidizing agent and the 0.50% by mass aqueous solution of the reducing agent may have a pH of 4.0 or more, and it is preferable that both the 0.50% by mass aqueous solution of the oxidizing agent and the 0.50% by mass aqueous solution of the reducing agent have a pH of 4.0 or more.

The pH of the redox initiator aqueous solution (0.50% by mass aqueous solution of oxidizing agent and 0.50% by mass aqueous solution of reducing agent) is more preferably 5.0 or more, still more preferably 5.5 or more, particularly preferably 6.0 or more.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/ammonium oxalate, potassium bromate/ammonium sulfite, manganese triacetate/ammonium oxalate, and ammonium cerium nitrate/ammonium oxalate, preferably at least one selected from the group consisting of potassium permanganate/ammonium oxalate, potassium bromate/ammonium sulfite, and ammonium cerium nitrate/ammonium oxalate.

Use of a redox initiator in the polymerization step can increase the molecular weight of the resulting TFE-based polymer. Therefore, the SSG can be made small and the TFE-based polymer is stretchable.

Use of a redox initiator in the polymerization step can also increase the number of TFE-based polymer particles generated in the aqueous dispersion. The yield of the resulting TFE-based polymer can also be increased.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

When a redox initiator is used as the polymerization initiator, the amount of the oxidizing agent added to the aqueous medium is preferably 5 to 10000 ppm, more preferably 10 to 1000 ppm, and the amount of the reducing agent added is preferably 5 to 10000 ppm, more preferably from 10 to 1000 ppm.

When a redox initiator is used in the polymerization step, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

The polymerization initiator may be added in any amount. For example, it may be added in an amount that does not significantly decrease the polymerization rate (e.g., concentration of several parts per million relative to water) or more at once in the initial stage of polymerization or successively or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces. More specifically, the amount of the polymerization initiator added is preferably 1 ppm or more, more preferably 10 ppm or more, still more preferably 50 ppm or more based on the aqueous medium. The amount of the polymerization initiator added is preferably 100000 ppm or less, more preferably 10000 ppm or less, still more preferably 5000 ppm or less.

The aqueous medium is a reaction medium in which polymerization is allowed to occur, and means a liquid that contains water. The aqueous medium may be any medium that contains water, and may be one containing water and, for example, a fluorine-free organic solvent such as an alcohol, ether, or ketone and/or a fluorine-containing organic solvent having a boiling point of 40°C or lower.

In the emulsion polymerization, a known chain transfer agent may be further added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, isobutane, methanol, ethanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a

fluoromonomer in an aqueous medium substantially in the absence of oxygen and in the presence of a bromine compound or an iodine compound (iodine transfer polymerization). Representative examples of the bromine compound or the iodine compound to be used include compounds represented by the following formula:

$$R^aI_xBr_y$$

wherein x and y are each an integer of 0 to 2 and satisfy $1 \leq x + y \leq 2$; and $R^a$ is a saturated or unsaturated fluorohydrocarbon or chlorofluorohydrocarbon group containing 1 to 16 carbon atoms, or a hydrocarbon group containing 1 to 3 carbon atoms, each of which optionally contains an oxygen atom. Use of a bromine compound or an iodine compound allows iodine or bromine to be introduced into the polymer to serve as a crosslinking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Of these, 1,4-diiodoperfluorobutane, 1,6-diiodoperfluorohexane, and 2-iodoperfluoropropane are preferably used from the viewpoints of polymerization reactivity, crosslinkability, availability, and the like.

The amount of the chain transfer agent used is usually 1 to 50000 ppm, preferably 1 to 20000 ppm, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

A TFE-based polymer aqueous dispersion can be obtained by the above production method. The TFE-based polymer aqueous dispersion normally contains a TFE-based polymer, the compound (1) and/or the compound (2), and the aqueous medium. The TFE-based polymer aqueous dispersion may have any solid content concentration. For example, the solid content concentration may be 1.0 to 70% by mass. The solid content concentration is preferably 8.0% by mass or higher, more preferably 10.0% by mass or higher, while preferably 60.0% by mass or lower, more preferably 50.0% by mass or lower.

In the production method, the amount attached is preferably 3.0% by mass or less, more preferably 2.0% by mass or less, more preferably 1.0% by mass or less, still more preferably 0.8% by mass or less, further more preferably 0.7% by mass or less, particularly preferably 0.6% by mass or less, relative to the TFE-based polymer finally obtained.

The coagulation in the step (B) can be performed by a known method.

In the case of the TFE-based polymer aqueous dispersion, coagulation is normally performed by diluting the aqueous dispersion obtained by polymerization, such as polymer latex, to a polymer concentration of 10 to 25% by mass (preferably a polymer concentration of 10 to 20% by mass) using water, optionally adjusting the pH to a neutral or alkaline pH, and stirring the dilution in a container equipped with a stirrer more vigorously than the stirring during the reaction. In the coagulation, stirring may be performed with addition of a coagulant such as a water-soluble organic compound (e.g., methanol, acetone), an inorganic salt (e.g., potassium nitrate, ammonium carbonate), or an inorganic acid (e.g., hydrochloric acid, sulfuric acid, nitric acid). The coagulation may be performed continuously using a device such as an inline mixer.

The coagulation method preferably includes at least one selected from the group consisting of coagulation by stirring, ultrasonic coagulation, coagulation using ultrafine bubbles, coagulation using an alkali, coagulation using an acid, coagulation using an oxidizing agent, coagulation using an organic solvent, and coagulation using a radical generator. In the production method of the disclosure, a non melt-processible TFE-based polymer is also preferably coagulated by stirring the aqueous dispersion as well as using at least one coagulation method selected from the group consisting of ultrasonic coagulation, coagulation using ultrafine bubbles, coagulation using an alkali, coagulation using an acid, coagulation using an oxidizing agent, coagulation using an organic solvent, and coagulation using a radical generator.

As described later, heat treatment at a relatively low temperature may fail to sufficiently reduce the amount of a fluorine-containing compound containing a hydrophilic group in the wet powder. In such a case, a non melt-processible TFE-based polymer which can be extrusion-molded at a stable extrusion pressure may not be obtained. In contrast, heat treatment at too high a temperature provides a non melt-processible TFE-based polymer whose extrusion pressure is too high, though it can reduce the amount of a fluorine-containing compound containing a hydrophilic group in the wet powder. A combination of heat treatment at a relatively low temperature and coagulation by the above method can successfully achieve both sufficient removal of a fluorine-containing compound containing a hydrophilic group and stabilization of low

pressure extrusion.

The temperature of the aqueous dispersion for coagulating a non melt-processible TFE-based polymer may be 3°C to 95°C. It may be 5°C or higher or 10°C or higher, while it may be 85°C or lower, 75°C or lower, or 60°C or lower.

In the coagulation by stirring, the aqueous dispersion is stirred strongly enough to coagulate the non melt-processible TFE-based polymer particles. Stirring can be performed, for example, using a container equipped with a stirrer. The coagulation by stirring may be performed continuously using a device such as an inline mixer.

In the ultrasonic coagulation, the aqueous dispersion is irradiated with ultrasonic waves strong enough to coagulate the non melt-processible TFE-based polymer particles.

The ultrasonic output is preferably 100 W or higher, more preferably 200 W or higher, still more preferably 300 W or higher, even more preferably 400 W or higher, particularly preferably 500 W or higher, while preferably 3000 W or lower, more preferably 1000 W or lower, still more preferably 800 W or lower.

The ultrasonic frequency is preferably 15 kHz or higher, more preferably 20 kHz or higher, still more preferably 25 kHz or higher, even more preferably 30 kHz or higher, particularly preferably 40 kHz or higher, while preferably 100 kHz or lower, more preferably 80 kHz or lower, still more preferably 50 kHz or lower.

The duration of ultrasonic irradiation is preferably 60 seconds or longer, more preferably 300 seconds or longer, while preferably 20 minutes or shorter.

Ultrasonic irradiation can be performed using a commercially available ultrasonic generator. Examples of ultrasonic irradiation devices include commercially available ultrasonic transmitting devices (e.g., ultrasonic homogenizer), ultrasonic transmitters, circulating ultrasonic irradiators, ultrasonic transducers, and ultrasonic cleaners.

Examples of specific methods for ultrasonic irradiation include irradiation performed by immersing a nozzle portion of an ultrasonic homogenizer in the aqueous dispersion, irradiation performed by immersing a throw-in ultrasonic transducer in a container into which the TFE-based polymer aqueous dispersion has been introduced, irradiation performed by introducing a container containing the TFE-based polymer aqueous dispersion into an ultrasonic cleaner preliminarily filled with an aqueous medium or the like, irradiation performed by introducing the TFE-based polymer dispersion into an ultrasonic cleaner or ultrasonic transmitter produced in the shape of a tank, and ultrasonic irradiation performed by introducing the TFE-based polymer aqueous dispersion into a tank equipped with a rod-shaped ultrasonic irradiator. Also preferred is ultrasonic irradiation of the aqueous dispersion with stirring of the aqueous dispersion.

In the coagulation using ultrafine bubbles, ultrafine bubbles in an amount enough to coagulate the non melt-processible TFE-based polymer particles are generated in the aqueous dispersion. Ultrafine bubbles refer to bubbles with a diameter of 1 μm or smaller. Ultrafine bubbles can be generated by irradiating the aqueous dispersion with ultrasonic waves to cause cavitation. Also preferred is stirring of the aqueous dispersion in which ultrafine bubbles have been generated.

The duration of treatment with ultrafine bubbles is preferably 60 seconds or longer, more preferably 300 seconds or longer, while preferably 20 minutes or shorter.

In the coagulation using an alkali, an alkali such as sodium hydroxide, potassium hydroxide, lithium hydroxide, or ammonia can be used. Ammonium hydrogen carbonate or ammonium carbonate is preferred as ammonia. The alkali preferably includes at least one selected from the group consisting of sodium hydroxide, potassium hydroxide, lithium hydroxide, and ammonia, more preferably sodium hydroxide. Also preferred is stirring of the aqueous dispersion containing the alkali.

When coagulation using an alkali is performed on the aqueous dispersion containing a fluorine-containing compound containing an anionic group as a fluorine-containing compound containing a hydrophilic group, the anionic group in the fluorine-containing compound is converted to a salt form, thereby increasing the water solubility of the fluorine-containing compound. Accordingly, the fluorine-containing compound is advantageously easily removed from the wet powder obtained by the coagulation by cleaning. The fluorine-containing compound containing a salt-form anionic group remaining in the wet powder after cleaning is difficult to volatilize, and therefore tends to be difficult to remove by heat treatment of the wet powder. Here, cleaning the wet powder with an acid prior to the heat treatment enables even more smooth reduction of the amount of the fluorine-containing compound. Accordingly, in a preferred embodiment, the wet powder obtained by coagulation using an alkali is cleaned with an acid, and the resulting wet powder is heat-treated.

In the coagulation using an acid, an organic acid or an inorganic acid can be used. The acid is preferably an inorganic acid because it is less likely to remain after heat treatment. In particular, the acid preferably includes at least one selected from the group consisting of nitric acid, sulfuric acid, fuming sulfuric acid, perchloric acid, and hydrochloric acid, more preferably includes at least one selected from the group consisting of nitric acid, sulfuric acid, and hydrochloric acid. Examples of the organic acid include succinic acid, oxalic acid, citric acid, and trifluoroacetic acid. The amount of the acid is not limited and may be determined as appropriate according to the pH of the aqueous dispersion or the like. Also preferred is stirring of the aqueous dispersion containing the acid.

In the coagulation using an oxidizing agent, at least one selected from the group consisting of inorganic acids and salts thereof can be used. Examples of inorganic acids include nitrous acid, nitric acid, sulfurous acid, sulfuric acid, persulfuric acid, hydrochloric acid, hypochlorous acid, chlorous acid, chloric acid, perchloric acid, hydrofluoric acid, bromic

acid, iodic acid, phosphoric acid, boric acid, chromic acid, dichromic acid, and permanganic acid. Examples of salts of inorganic acids include sodium salt, potassium salt, ammonium salt, magnesium salt, calcium salt, aluminum salt, and silver salt. The oxidizing agent preferably includes at least one selected from the group consisting of nitric acid and its salts, and perchloric acid and its salts, more preferably includes at least one selected from the group consisting of nitrates and perchlorates, particularly preferably includes at least one selected from the group consisting of sodium nitrate, potassium nitrate, ammonium nitrate, and ammonium perchlorate. Two or more oxidizing agents may be used in combination. For example, an inorganic acid may be used in combination with an inorganic acid salt. Nitric acid may be used in combination with a nitrate (e.g., sodium nitrate, ammonium nitrate). Also preferred is stirring of the aqueous dispersion containing the oxidizing agent.

The amount of the oxidizing agent is preferably 0.01 to 20% by mass relative to the non melt-processible TFE-based polymer in the aqueous dispersion. The amount is more preferably 0.1% by mass or more, still more preferably 0.3% by mass or more, while more preferably 10% by mass or less, still more preferably 5% by mass or less. In one embodiment, the non melt-processible TFE-based polymer is coagulated by adding the oxidizing agent to the aqueous dispersion and stirring the aqueous dispersion.

In the coagulation using an organic solvent, the following organic solvents, for example, can be used:

alcohols;
carboxylic acids such as acetic acid, propionic acid, ethoxyacetic acid, and valeric acid;
esters such as methyl acetate, ethyl acetate, propyl acetate, butyl acetate, methyl propionate, ethyl propionate, propyl propionate, and dimethyl carbonate;
ketones such as methyl ethyl ketone, methyl isobutyl ketone, cyclohexanone, diacetone alcohol, and 3-methyl-2-cyclopentenone;
aromatic hydrocarbons such as benzene, toluene, and xylene; and
ethers such as diethyl ether, tetrahydrofuran, dioxane, diethylene glycol diethyl ether, and 1,2-dimethoxyethane.

The organic solvent is preferably an alcohol. The alcohol may be any of monovalent, divalent, and trivalent alcohols. The alcohol is preferably a monovalent alcohol. The number of carbon atoms of the alcohol is preferably 2 to 7, more preferably 3 or more and 5 or less, still more preferably 4 or less. The organic solvent preferably includes at least one selected from the group consisting of methanol, 1-propanol, 2-propanol, 2-butanol, and 1-pentanol, more preferably at least one selected from the group consisting of 1-propanol, 2-propanol, 2-butanol, and 1-pentanol, still more preferably at least one selected from the group consisting of 1-propanol, 2-butanol, and 1-pentanol.

The organic solvent is preferably added in an amount equivalent to 1.0% by mass or more relative to the non melt-processible TFE-based polymer in the aqueous dispersion. The amount of the organic solvent used for coagulation is more preferably 5.0% by mass or more, still more preferably 10% by mass or more, particularly preferably 20% by mass or more, while preferably an amount equivalent to not more than 50 times, more preferably not more than 10 times, still more preferably not more than 5 times the weight of the non melt-processible TFE-based polymer. Also preferred is stirring of the aqueous dispersion containing the organic solvent.

In the coagulation using a radical generator, a water-soluble radical generator can be suitably used. Examples of the radical generator include organic peroxides, inorganic peroxides, organic azo compounds, and combinations of oxidizing agents and reducing agents. The radical generator preferably includes at least one selected from inorganic peroxides, organic peroxides, and combinations of oxidizing agents and reducing agents. In one embodiment, the non melt-processible TFE-based polymer is coagulated by adding the radical generator to the aqueous dispersion and heating the aqueous dispersion to a temperature equal to or higher than the decomposition temperature of the radical generator. Also preferred is stirring of the aqueous dispersion containing the radical generator.

The inorganic peroxides are preferably water-soluble inorganic peroxides. Examples of the inorganic peroxides include hydrogen peroxide, perchlorates, perborates, perphosphates, percarbonates, and persulfates. Preferred is a persulfate. The persulfate preferably includes at least one selected from the group consisting of ammonium persulfate, sodium persulfate, and potassium persulfate, more preferably ammonium persulfate.

The organic peroxides are preferably water-soluble organic peroxides. Examples of the organic peroxides include peroxydicarbonates such as disuccinic acid peroxide and digultaric acid peroxide.

A combination of an oxidizing agent and a reducing agent can be used as a radical generator. In use of a combination of an oxidizing agent and a reducing agent, radicals can be generated from the radical generator by a redox reaction between the oxidizing agent and the reducing agent, thus lowering the temperature during the heat treatment.

Examples of the oxidizing agent include a persulfate, an organic peroxide, potassium permanganate, manganese triacetate, and ammonium cerium nitrate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. In order to accelerate the decomposition speed of the oxidizing agent, addition of a copper salt or an iron salt is also preferred. An example of copper salts is copper(II) sulfate and an

example of iron salts is iron(II) sulfate.

The temperature of heating the aqueous dispersion containing a radical generator may be any temperature that is not lower than the temperature at which the radical generator is decomposed to generate radicals (decomposition temperature). Still, the temperature is preferably 35°C or higher, more preferably 40°C or higher, still more preferably 45°C or higher, particularly preferably 50°C or higher, while preferably 120°C or lower, more preferably 110°C or lower, still more preferably 100°C or lower, particularly preferably 90°C or lower.

In the production method of the disclosure, the coagulum produced by the coagulation of the non melt-processible TFE-based polymer is collected, whereby a wet powder was obtained, preferably followed by cleaning of the wet powder. The cleaning may be performed once, or twice or more.

The cleaning method preferably includes at least one selected from the group consisting of cleaning by stirring, ultrasonic cleaning, cleaning using ultrafine bubbles, cleaning using an alkali, cleaning using an acid, and cleaning using a radical generator.

As described later, heat treatment at a relatively low temperature may fail to sufficiently reduce the amount of a fluorine-containing compound containing a hydrophilic group in the wet powder. In such a case, a non melt-processible TFE-based polymer which can be extrusion-molded at a stable extrusion pressure may not be obtained. In contrast, heat treatment at too high a temperature provides a non melt-processible TFE-based polymer whose extrusion pressure is too high, though it can reduce the amount of a fluorine-containing compound containing a hydrophilic group in the wet powder. A combination of heat treatment at a relatively low temperature and cleaning by the above method can successfully achieve both sufficient removal of a fluorine-containing compound containing a hydrophilic group and stabilization of low pressure extrusion. A combination of heat treatment at a relatively low temperature, coagulation by the above method, and cleaning by the above method can more easily and successfully achieve both sufficient removal of a fluorine-containing compound containing a hydrophilic group and stabilization of low pressure extrusion.

The temperature for cleaning of the wet powder may be 3°C to 95°C. The temperature for cleaning of the wet powder may be 5°C or higher or 10°C or higher. The temperature for cleaning of the wet powder may be 85°C or lower, 75°C or lower, or 60°C or lower.

In the cleaning by stirring, the wet powder is put into water and the water is stirred. Stirring can be performed, for example, using a container equipped with a stirrer. The cleaning is preferably performed multiple times. When the cleaning is performed multiple times, the last cleaning is preferably performed at 30°C or lower.

In the ultrasonic cleaning, the wet powder is put into a liquid and the liquid is ultrasonicated. Examples of the liquid include water and an alcohol. The alcohol preferably includes at least one selected from the group consisting of methanol, 1-propanol, 2-propanol, 2-butanol, and 1-pentanol, more preferably methanol.

The ultrasonic output is preferably 100 W or higher, more preferably 200 W or higher, still more preferably 300 W or higher, even more preferably 400 W or higher, particularly preferably 500 W or higher, while preferably 3000 W or lower, more preferably 1000 W or lower, still more preferably 800 W or lower.

The ultrasonic frequency is preferably 15 kHz or higher, more preferably 20 kHz or higher, still more preferably 25 kHz or higher, even more preferably 30 kHz or higher, particularly preferably 40 kHz or higher, while preferably 100 kHz or lower, more preferably 80 kHz or lower, still more preferably 50 kHz or lower.

The duration of ultrasonic irradiation is preferably 60 seconds or longer, more preferably 300 seconds or longer, while preferably 180 minutes or shorter, more preferably 150 minutes or shorter, still more preferably 120 minutes or shorter, particularly preferably 20 minutes or shorter.

Ultrasonic irradiation can be performed using a commercially available ultrasonic generator. Examples of ultrasonic irradiation devices include commercially available ultrasonic transmitting devices (e.g., ultrasonic homogenizer), ultrasonic transmitters, circulating ultrasonic irradiators, ultrasonic transducers, and ultrasonic cleaners.

Examples of specific methods for ultrasonic irradiation of a powder and a liquid include irradiation performed by immersing a nozzle portion of an ultrasonic homogenizer in the liquid, irradiation performed by immersing a throw-in ultrasonic transducer in a container into which the liquid has been introduced, irradiation performed by introducing a container containing the liquid into an ultrasonic cleaner preliminarily filled with an aqueous medium or the like, irradiation performed by introducing the liquid into an ultrasonic cleaner or ultrasonic transmitter produced in the shape of a tank, and ultrasonic irradiation performed by introducing the liquid into a tank equipped with a rod-shaped ultrasonic irradiator.

In the cleaning using ultrafine bubbles, the wet powder is put into water and ultrafine bubbles are generated in the water. Ultrafine bubbles refer to bubbles with a diameter of 1 μm or smaller. Ultrafine bubbles can be generated by irradiating water with ultrasonic waves to cause cavitation.

The duration of the cleaning using ultrafine bubbles is preferably 60 seconds or longer, more preferably 300 seconds or longer, while preferably 20 minutes or shorter.

In the cleaning using an alkali, an alkali such as sodium hydroxide, potassium hydroxide, lithium hydroxide, or ammonia can be used. Ammonium hydrogen carbonate or ammonium carbonate is preferred as ammonia. The alkali preferably includes at least one selected from the group consisting of sodium hydroxide, potassium hydroxide, lithium hydroxide, and ammonia, more preferably sodium hydroxide.

When cleaning using an alkali is performed on the wet powder containing a fluorine-containing compound containing an anionic group as a fluorine-containing compound containing a hydrophilic group, the anionic group in the fluorine-containing compound is converted to a salt form, thereby increasing the water solubility of the fluorine-containing compound. Accordingly, the fluorine-containing compound is advantageously easily removed from the obtained wet powder by cleaning. The fluorine-containing compound containing a salt-form anionic group remaining in the wet powder after cleaning is difficult to volatilize, and therefore tends to be difficult to remove by heat treatment of the wet powder. Here, cleaning the wet powder with an acid prior to the heat treatment enables even more smooth reduction of the amount of the fluorine-containing compound. Accordingly, in a preferred embodiment, the wet powder is cleaned using an alkali and then cleaned with an acid, followed by heat treatment of the resulting wet powder.

In the cleaning using an acid, an organic acid or an inorganic acid can be used. The acid is preferably an inorganic acid because it is less likely to remain after heat treatment. In particular, the acid preferably includes at least one selected from the group consisting of nitric acid, sulfuric acid, fuming sulfuric acid, perchloric acid, and hydrochloric acid, more preferably includes at least one selected from the group consisting of nitric acid, sulfuric acid, and hydrochloric acid. Examples of the organic acid include succinic acid, oxalic acid, citric acid, and trifluoroacetic acid. The amount of the acid is not limited and may be determined as appropriate according to the pH of the water containing the powder or the like. In one embodiment, cleaning is performed by putting the wet powder and an acid into water and stirring the water.

In the cleaning using a radical generator, a water-soluble radical generator can be suitably used. Examples of the radical generator include organic peroxides, inorganic peroxides, organic azo compounds, and combinations of oxidizing agents and reducing agents. The radical generator preferably includes at least one selected from inorganic peroxides, organic peroxides, and combinations of oxidizing agents and reducing agents. In one embodiment, cleaning is performed by putting the wet powder and a radical generator into water, heating the water to a temperature equal to or higher than the decomposition temperature of the radical generator, and stirring the water.

As the radical generator used for the cleaning, the radical generator used in the coagulation using a radical generator can be used.

The temperature of heating the water may be any temperature that is not lower than the temperature at which the radical generator is decomposed to generate radicals (decomposition temperature). Still, the temperature is preferably 35°C or higher, more preferably 40°C or higher, still more preferably 45°C or higher, particularly preferably 50°C or higher, while preferably 120°C or lower, more preferably 110°C or lower, still more preferably 100°C or lower, particularly preferably 90°C or lower.

In the production method of the disclosure, after cleaning of the wet powder, the resulting powder is preferably subjected to heat treatment. The heat treatment can be performed as the step (C).

The water content of the wet powder to be heated is preferably 10% by mass or higher, more preferably 20% by mass or higher, still more preferably 30% by mass or higher, while preferably 150% by mass or lower, more preferably 100% by mass or lower relative to the wet powder.

The heat treatment temperature is preferably 10°C to 280°C. The heat treatment temperature may be 100°C or higher, 120°C or higher, 130°C or higher, 140°C or higher, 150°C or higher, or 160°C or higher. The heat treatment temperature may be 230°C or lower, 210°C or lower, 200°C or lower, 190°C or lower, 185°C or lower, or 180°C or lower. In the production method of the disclosure, the heat treatment is preferably performed at a relatively low temperature as above. The heat treatment at a relatively low temperature can reduce the amount of a fluorine-containing compound containing a hydrophilic group, leading to the production of a non melt-processible TFE-based polymer which can be extrusion-molded at a low and stable extrusion pressure.

The duration of the heat treatment is preferably 5 to 3000 minutes. The duration of the heat treatment may be 10 minutes or longer, 15 minutes or longer, 20 minutes or longer, 30 minutes or longer, 50 minutes or longer, 100 minutes or longer, 150 minutes or longer, or 200 minutes or longer. The duration of the heat treatment may be 2500 minutes or shorter or 2000 minutes or shorter. In the production method of the disclosure, the heat treatment is preferably performed at a relatively low temperature for a relatively long period of time.

The heat treatment may be performed in the air. When the heat treatment is performed in oxygen-rich gas or ozone-containing gas, reduction of the amount of a fluorine-containing compound containing a hydrophilic group can be further promoted.

The heat treatment is preferably performed by a method of bringing the wet powder into contact with hot air or a method of heating the wet powder in the presence of water vapor. The heat treatment at a relatively low temperature may fail to sufficiently reduce the amount of a fluorine-containing compound containing a hydrophilic group in the wet powder. In such a case, a non melt-processible TFE-based polymer which can be extrusion-molded at a stable extrusion pressure cannot be obtained. In contrast, heat treatment at too high a temperature provides a non melt-processible TFE-based polymer whose extrusion pressure is too high, though it can reduce the amount of a fluorine-containing compound containing a hydrophilic group in the wet powder. The heat treatment using hot air or water vapor, in addition to the heat treatment of the wet powder within the above temperature range, can successfully achieve both sufficient removal of a fluorine-containing compound containing a hydrophilic group and stabilization of low pressure extrusion.

The heat treatment using hot air can be performed by blowing hot air to the wet powder. In one embodiment, the wet powder is placed in a container with air permeability on the bottom and/or sides, and hot air is blown to the placed wet powder. In another embodiment, the wet powder is placed in a dryer, and hot air is circulated in the dryer to blow hot air.

The wind speed of the hot air blown to the wet powder may be 0.01 m/s or higher, 0.03 m/s or higher, 0.05 m/s or higher, 0.10 m/s or higher, 0.20 m/s or higher, 0.30 m/s or higher, or 0.40 m/s or higher. The wind speed of the hot air blown to the wet powder may be 10 m/s or lower, 5.0 m/s or lower, 3.0 m/s or lower, 2.0 m/s or lower, or 1.0 m/s or lower.

The treatment time in the heat treatment method in which the wet powder is placed in a container with air permeability on the bottom and/or sides and hot air is blown to the placed wet powder (also referred to as "through-flow drying treatment" in the disclosure) may be 5 minutes or longer, 10 minutes or longer, 15 minutes or longer, 20 minutes or longer, 30 minutes or longer, 40 minutes or longer, 50 minutes or longer, 60 minutes or longer, or 80 minutes or longer, and may be 300 minutes or shorter or 200 minutes or shorter.

The temperature of the hot air blown to the wet powder is as described above as the heat treatment temperature. The treatment temperature (temperature of hot air) in the through-flow drying treatment may be higher than 150°C, 155°C or higher, 160°C or higher, 165°C or higher, 170°C or higher, 175°C or higher, or 180°C or higher. The treatment temperature (temperature of hot air) in the through-flow drying treatment may be 260°C or lower, 235°C or lower, 230°C or lower, 225°C or lower, 220°C or lower, 215°C or lower, or 210°C or lower.

In the through-flow drying treatment, for example, the treatment temperature (temperature of hot air) can be set to higher than 250°C but not higher than 280°C and the treatment time can be set to 50 minutes or shorter. Alternatively, in the through-flow drying treatment, for example, the treatment temperature (temperature of hot air) can be set to higher than 200°C but not higher than 250°C and the treatment time can be set to 100 minutes or shorter. Further alternatively, in the through-flow drying treatment, for example, the treatment temperature (temperature of hot air) can be set to higher than 150°C but not higher than 200°C and the treatment time can be set to 200 minutes or shorter.

The wind speed of the hot air in the through-flow drying treatment may be 0.01 m/s or higher, 0.03 m/s or higher, 0.05 m/s or higher, or 0.10 m/s or higher. The wind speed of the hot air in the through-flow drying treatment may be 10 m/s or lower, 5.0 m/s or lower, 3.0 m/s or lower, 2.0 m/s or lower, or 1.0 m/s or lower.

In the case where an electric furnace is used in the heat treatment step, the amount of gas, air, or water vapor supplied to the electric furnace, the amount of gas, air, or water vapor circulated in the electric furnace, and the amount of gas, air, or water vapor discharged from the electric furnace can be adjusted.

The percentage of the amount of gas, air, or water vapor discharged from the electric furnace may be 3% by volume or more, 5% by volume or more, or 10% by volume or more, and may be 95% by volume or less, 80% by volume or less, or 75% by volume or less, relative to the amount thereof circulating in the electric furnace.

The percentage of the amount of gas, air, or water vapor discharged from the electric furnace in the through-flow drying treatment may be 3% by volume or more, 5% by volume or more, or 10% by volume or more, and may be 50% by volume or less, 40% by volume or less, or 30% by volume or less, relative to the amount thereof circulating in the electric furnace.

The percentage of the amount of gas, air, or water vapor discharged from the electric furnace in hot air circulation drying treatment may be 10% by volume or more, 20% by volume or more, or 30% by volume or more, and may be 95% by volume or less, 80% by volume or less, or 75% by volume or less, relative to the amount thereof circulating in the electric furnace.

When the heat treatment temperature is higher than 200°C, the percentage of the amount of gas, air, or water vapor discharged from the electric furnace may be 3% by volume or more, 5% by volume or more, or 10% by volume or more, and may be 50% by volume or less, 40% by volume or less, or 30% by volume or less, relative to the amount thereof circulating in the electric furnace.

When the heat treatment temperature is 200°C or lower, the percentage of the amount of gas, air, or water vapor discharged from the electric furnace may be 10% by volume or more, 20% by volume or more, or 30% by volume or more, and may be 95% by volume or less, 80% by volume or less, or 75% by volume or less, relative to the amount thereof circulating in the electric furnace.

The treatment time in the heat treatment method in which the wet powder is placed in a dryer and hot air is circulated in the dryer to blow hot air (also referred to as "hot air circulation drying treatment" in the disclosure) may be 120 minutes or longer, 180 minutes or longer, 240 minutes or longer, or 300 minutes or longer, and may be 1500 minutes or shorter, or 1200 minutes or shorter.

The temperature of the hot air blown to the wet powder is as described above as the heat treatment temperature. The treatment temperature (temperature of hot air) in the hot air circulation drying treatment may be higher than 150°C, 155°C or higher, 160°C or higher, 165°C or higher, 170°C or higher, 175°C or higher, or 180°C or higher, and may be 235°C or lower, 230°C or lower, 225°C or lower, 220°C or lower, 215°C or lower, or 210°C or lower.

The wind speed of the hot air in the hot air circulation drying treatment may be 0.10 m/s or higher, 0.50 m/s or higher, or 1.0 m/s or higher, and may be 10 m/s or lower, or 5.0 m/s or lower.

The heat treatment may be performed on the wet powder in a state of being placed in a container with air

permeability on the bottom and/or sides. The container with air permeability on the bottom and/or sides may be any container capable of withstanding the heat treatment temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh. The mesh is preferably either a woven net or punched metal. When the mesh is a woven net, the woven net may be, for example, a plain-woven mesh, a twilled-woven mesh, a plain dutch-woven mesh, or a twilled dutch-woven mesh. Further, a mesh and a fabric may be combined.

The fabric may be in the form of a perforated pan liner used in tray drying in an oven or a continuous belt operated in an oven. In the case of a continuous belt, the process is carried out continuously. Specifically, the coagulum is continuously placed at one end of the belt passage and the refined TFE-based polymer fine particles are continuously collected from the opposite end of the belt passage. Here, a shallow bed of the coagulum is continuously exposed to heated air as it moves along the passage from one end to the opposite end. In either form, the fabric is a direct support for the coagulum and can be reused by additional polymer purification.

The fabric may have any structure. It may be, for example, a knitted fabric, spunbonded fabric, or woven fabric that provides the dimensional integrity required by the form of the fabric. In the case of a knitted or woven fabric structure, the fabric is formed from yarn. In the case of a spunbonded structure, the fabric is typically formed from fiber. The yarns or fibers constituting the fabric provide, in some cases, openings between the yarns or fibers constituting the fabric. The openings allow the heated air to pass through during the purification step but hold the TFE-based polymer coagulum/fine powder particles thereon (i.e., do not allow the TFE-based polymer fine powder to pass through). The openings in the fabric must be small for the purpose of holding the TFE-based polymer fine powder but must be big enough to allow the heated air or vaporized contaminants to pass through at a sufficient speed that enables purification in an appropriate contact time with hot air.

The opening of the mesh is preferably 2000 μm or less (mesh No. 10 or higher (ASTM)), more preferably 595 μm or less (mesh No. 30 or higher), still more preferably 297 μm or less (mesh No. 50 or higher), further more preferably 177 μm or less (mesh No. 80 or higher), even more preferably 149 μm or less (mesh No. 100 or higher), particularly preferably 74 μm or less (mesh No. 200 or higher). The opening is preferably 25 μm or more (mesh No. 500 or lower).

When the mesh is a punched metal, the porosity is preferably 10% or higher, more preferably 20% or higher, still more preferably 30% or higher. The porosity is preferably 95% or lower.

The amount of the wet powder placed is preferably 10 $g/cm^2$ or less, more preferably 8 $g/cm^2$ or less, still more preferably 5 $g/cm^2$ or less, particularly preferably 3 $g/cm^2$ or less, while preferably 0.01 $g/cm^2$ or more, more preferably 0.05 $g/cm^2$ or more, still more preferably 0.1 $g/cm^2$ or more.

The heat treatment using water vapor can be performed by blowing high-temperature steam to the wet powder. In one embodiment, the wet powder is placed in a container with air permeability on the bottom and/or sides, and high-temperature steam is blown to the placed wet powder.

The heat treatment using water vapor can be performed at normal pressure or under increased pressure. The pressure for the heat treatment using water vapor may be 0.10 to 4.0 MPa. The pressure for the heat treatment under increased pressure may be higher than 0.10 MPa and not higher than 0.2 MPa.

The heat treatment using water vapor may be performed under reduced pressure. The pressure for the heat treatment under reduced pressure may be lower than 0.10 MPa or 0.09 MPa or lower, and may be 0.01 MPa or higher.

The treatment time in the heat treatment using water vapor may be 5 minutes or longer, 10 minutes or longer, 15 minutes or longer, 30 minutes or longer, or 40 minutes or longer, and may be 10 hours or shorter, 8 hours or shorter, 6 hours or shorter, or 4 hours or shorter.

The temperature of the water vapor blown to the wet powder is as described above as the heat treatment temperature. The treatment temperature (temperature of water vapor) in the heat treatment using water vapor may be 100°C or higher, 120°C or higher, 140°C or higher, 160°C or higher, or 170°C or higher, and may be 350°C or lower, 300°C or lower, 250°C or lower, 230°C or lower, or 210°C or lower.

The amount of heated vapor generated in the heat treatment using water vapor may be 1 kg/h or more, 3 kg/h or more, 5 kg/h or more, or 10 kg/h or more, and may be 500 kg/h or less, 300 kg/h or less, 100 kg/h or less, 50 kg/h or less, or 30 kg/h or less.

The heat treatment can be performed using an electric furnace or a steam furnace. For example, the heat treatment may be performed with an electric furnace such as a co-flow box electric furnace, a ventilated box electric furnace, a ventilated conveyor electric furnace, a tunnel electric furnace, a band electric furnace, a vertical electric turbo furnace, a radiant conveyor electric furnace, a fluidized bed electric furnace, a ventilated rotary electric furnace, a grooved stirring electric furnace, a multi-stage disc-type electric furnace, a vacuum electric furnace, a cylindrical electric furnace, a vibrating electric furnace, a freezing electric furnace, a drum electric furnace, a grooved electric furnace, an inverted conical electric furnace, an extruding electric furnace, a steam tube rotary electric furnace, an infrared electric furnace, a superheated steam electric furnace, a high-frequency electric furnace, a microwave electric furnace, a stirring electric furnace, an convection electric furnace, or a hot air circulating electric furnace, or a steam furnace corresponding to any of

the foregoing electric furnaces (a device of the type defined by replacing the "electric furnace" in the device name of the foregoing electric furnace with "steam furnace").

The wet powder is also preferably dried by the heat treatment. When the wet powder is heated in the presence of water vapor at normal pressure or under increased pressure, the wet powder is normally not sufficiently dried. In such a case, the wet powder is preferably dried after the heat treatment, whereby a non melt-processible TFE-based polymer powder is obtained.

Through the heat treatment or a combination of the heat treatment and drying of the wet powder, normally, a non melt-processible TFE-based polymer powder obtained has a water content of 0.01% by mass or less or 0.005% by mass or less relative to the wet powder.

In the step (C), the drying is typically performed by means such as vacuum, high frequency, or hot air, while the wet powder is kept in a state where it does not flow so much, preferably in a stationary state. Friction between powders, especially at high temperatures generally has an unfavorable effect on a fine powder TFE-based polymer. This is because particles made of a TFE-based polymer of this type are easily fibrillated even by a small shearing force to lose their original stable particle structure.

In order to lower the extrusion pressure, the drying temperature is preferably 300°C or lower, more preferably 250°C or lower, still more preferably 230°C or lower, further more preferably 210°C or lower, further more preferably 190°C or lower, particularly preferably 170°C or lower. In order to achieve improved tensile strength at break, the drying temperature is preferably 10°C or higher, more preferably 100°C or higher, still more preferably 150°C or higher, further more preferably 170°C or higher, further more preferably 190°C or higher, particularly preferably 210°C or higher. In order to further increase the strength ratio, the drying temperature is preferably appropriately adjusted within this temperature range.

The step (C) preferably includes placing the wet powder obtained in the step (B) in a container with air permeability on the bottom and/or sides and heating the powder at a temperature of 130°C to 300°C for two hours or longer. Such a heat treatment under extremely limited conditions as described above can efficiently remove the fluorine-containing compound having a molecular weight of 1000 or less together with water, setting the amounts of the fluorine-containing compound and water within the above ranges.

In order to more efficiently remove water and the fluorine-containing compound, the temperature of the heat treatment in the step (C) is preferably 140°C or higher, more preferably 150°C or higher, still more preferably 160°C or higher, further more preferably 180°C or higher, still more preferably 200°C or higher, particularly preferably 220°C or higher, while preferably 280°C or lower, more preferably 250°C or lower.

In order to more efficiently remove water and the fluorine-containing compound, the duration of the heat treatment in the step (C) is preferably 5 hours or longer, more preferably 10 hours or longer, still more preferably 15 hours or longer. The upper limit is not limited. Still, it is preferably 100 hours, more preferably 50 hours, still more preferably 30 hours, for example.

In order to more efficiently remove water and the fluorine-containing compound, the wind speed in the step (C) is preferably 0.01 m/s or higher, more preferably 0.03 m/s or higher, still more preferably 0.05 m/s or higher, further more preferably 0.1 m/s or higher. In order to reduce or prevent powder scattering, the wind speed is preferably 50 m/s or lower, more preferably 30 m/s or lower, still more preferably 10 m/s or lower.

The heat treatment in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). In order to more efficiently remove water, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

In the heat treatment in the step (C), in order to more efficiently remove water and the fluorine-containing compound, the wet powder is placed in a container with air permeability on the bottom and/or sides. The container with air permeability on the bottom and/or sides may be any container capable of withstanding the heat treatment temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh.

The mesh is preferably either a woven net or punched metal.

The opening of the mesh is preferably 2000 μm or less (mesh No. 10 or higher (ASTM)), more preferably 595 μm or less (mesh No. 30 or higher), still more preferably 297 μm or less (mesh No. 50 or higher), further more preferably 177 μm or less (mesh No. 80 or higher), even more preferably 149 μm or less (mesh No. 100 or higher), particularly preferably

74 μm or less (mesh No. 200 or higher). The opening is preferably 25 μm or more (mesh No. 500 or lower).

When the mesh is a woven net, the woven net may be, for example, a plain-woven mesh, a twilled-woven mesh, a plain dutch-woven mesh, or a twilled dutch-woven mesh.

When the mesh is a punched metal, the porosity is preferably 10% or higher, more preferably 20% or higher, still more preferably 30% or higher. The porosity is preferably 95% or lower.

In order to more efficiently remove water and the fluorine-containing compound, the amount of the wet powder placed in the step (C) is preferably 10 $g/cm^2$ or less, more preferably 8 $g/cm^2$ or less, still more preferably 5 $g/cm^2$ or less, particularly preferably 3 $g/cm^2$ or less, while preferably 0.01 $g/cm^2$ or more, more preferably 0.05 $g/cm^2$ or more, still more preferably 0.1 $g/cm^2$ or more.

In order to more efficiently remove water and the fluorine-containing compound, the water content of the wet powder to be heated in the step (C) is preferably 10% by mass or higher, more preferably 20% by mass or higher, still more preferably 30% by mass or higher, while preferably 150% by mass or lower, more preferably 100% by mass or lower relative to the wet powder.

The amount of the binder in the self-supporting film of the disclosure may be 0.1% by mass or more, preferably 0.2% by mass or more, more preferably 0.3% by mass or more, still more preferably 0.4% by mass or more, further more preferably 0.5% by mass or more relative to the self-supporting film. The amount may be 50% by mass or less, preferably 40% by mass or less, more preferably 30% by mass or less, still more preferably 10% by mass or less, further more preferably 8% by mass or less, further more preferably 6% by mass or less, further more preferably 5% by mass or less, further more preferably 4% by mass or less, further more preferably 3% by mass or less, particularly preferably 2% by mass or less, most preferably less than 2% by mass relative to the self-supporting film. Too low a proportion of the binder may fail to sufficiently hold the active material and/or the electrolyte and cause insufficient mechanical strength of the mixture sheet, impairing the battery performance such as cycle characteristics. In contrast, too high a proportion thereof may cause reduction in battery capacity and conductivity.

Having sufficient strength and sufficient flexibility even when the binder content is small, the self-supporting film of the disclosure can contain larger amounts of materials for improving battery characteristics, such as active materials or conductive aids.

The self-supporting film of the disclosure is used in electrochemical devices such as batteries and capacitors.

Examples of batteries include secondary batteries such as lithium-ion batteries.

The self-supporting film may be used in any capacitor. An electrochemical capacitor is preferred. Examples of electrochemical capacitors include electric double layer capacitors, hybrid capacitors, and redox capacitors. Examples of hybrid capacitors include sodium ion capacitors, lithium ion capacitors, and magnesium ion capacitors. Among these, electric double layer capacitors are particularly preferred.

The self-supporting film of the disclosure is suitably used for batteries, and is more suitably used for secondary batteries such as lithium-ion batteries. When the self-supporting film is used for secondary batteries, it may be used for an electrode of a secondary battery using an electrolyte solution (electrolyte-containing secondary battery), for an electrode of a solid-state secondary battery, or for a solid electrolyte layer of a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

When used for an electrode of an electrolyte-containing secondary battery, the self-supporting film normally contains an electrode active material.

When used for an electrode of a solid-state secondary battery, the self-supporting film normally contains an electrode active material and a solid electrolyte.

When used for a solid electrolyte layer of a solid-state secondary battery, the self-supporting film normally contains a solid electrolyte.

Examples of the electrode active material include a positive electrode active material and a negative electrode active material.

The positive electrode active material may be any material that can electrochemically occlude and release alkali metal ions. Still, the positive electrode material is preferably, for example, a material containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides which produce high voltage. Examples of the alkali metal ions include lithium ions, sodium ions, and potassium ions. In a preferred embodiment, the alkali metal ions may be lithium ions. That is, in this embodiment, the alkali metal ion secondary battery is a lithium-ion secondary battery.

Examples of the alkali metal-containing transition metal composite oxides include alkali metal-manganese spinel composite oxides (e.g., lithium-manganese spinel composite oxides) represented by the formula:

$$M_aMn_{2-b}M^1_bO_4$$

wherein M includes at least one metal selected from the group consisting of Li, Na, and K; $0.9 \leq a$; $0 \leq b \leq 1.5$; and $M^1$ includes at least one metal selected from the group consisting of Fe, Co, Ni, Cu, Zn, Al, Sn, Cr, V, Ti, Mg, Ca, Sr, B, Ga, In, Si, and Ge;

alkali metal-nickel composite oxides (e.g., lithiumnickel composite oxides) represented by the formula:

$$MNi_{1-c}M^2_cO_2$$

wherein M includes at least one metal selected from the group consisting of Li, Na, and K; $0 \leq c \leq 0.5$; and $M^2$ includes at least one metal selected from the group consisting of Fe, Co, Mn, Cu, Zn, Al, Sn, Cr, V, Ti, Mg, Ca, Sr, B, Ga, In, Si, and Ge; and

alkali metal-cobalt composite oxides (e.g., lithiumcobalt composite oxides) represented by the formula:

$$MCo_{1-d}M^3_dO_2$$

wherein M includes at least one metal selected from the group consisting of Li, Na, and K; $0 \leq d \leq 0.5$; and $M^3$ includes at least one metal selected from the group consisting of Fe, Ni, Mn, Cu, Zn, Al, Sn, Cr, V, Ti, Mg, Ca, Sr, B, Ga, In, Si, and Ge.

In the above formulas, M is preferably a metal selected from the group consisting of Li, Na, and K, more preferably Li or Na, still more preferably Li.

In order to achieve high-energy-density, high-output secondary batteries, preferred among these are $MCoO_2$, $MMnO_2$, $MNiO_2$, $MMn_2O_4$, $MNi_{0.8}Co_{0.15}Al_{0.05}O_2$, and $MNi_{1/3}Co_{1/3}Mn_{1/3}O_2$, and preferred is a compound represented by the following formula (3):

$$MNi_hCo_iMn_jM^5_kO_2 \qquad (3)$$

wherein M includes at least one metal selected from the group consisting of Li, Na, and K; $M^5$ includes at least one selected from the group consisting of Fe, Cu, Zn, Al, Sn, Cr, V, Ti, Mg, Ca, Sr, B, Ga, In, Si, and Ge; and $(h + i + j + k) = 1.0$, $0 \leq h \leq 1.0$, $0 \leq i \leq 1.0$, $0 \leq j \leq 1.5$, and $0 \leq k \leq 0.2$.

Examples of the alkali metal-containing transition metal phosphate compound include a compound represented by the following formula (4):

$$M_eM^4_f(PO_4)_g \qquad (4)$$

wherein M includes at least one metal selected from the group consisting of Li, Na, and K; $M^4$ includes at least one selected from the group consisting of V, Ti, Cr, Mn, Fe, Co, Ni, and Cu; and $0.5 \leq e \leq 3$, $1 \leq f \leq 2$, and $1 \leq g \leq 3$. In the above formula, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as $LiFePO_4$, $Li_3Fe_2(PO_4)_3$, and $LiFeP_2O_7$, cobalt phosphates such as $LiCoPO_4$, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Examples of a different positive electrode active material include a lithium-nickel composite oxide. The lithium-nickel composite oxide is preferably a positive electrode active material represented by the following formula (5):

$$Li_yNi_{1-x}M_xO_2 \qquad (5)$$

wherein $0.01 \leq x \leq 0.7$, $0.9 \leq y \leq 2.0$, and M is a metal atom (other than Li and Ni).

Other examples of the positive electrode active material include $MFePO_4$, $MNi_{0.8}Co_{0.2}O_2$, $M_{1.2}Fe_{0.4}Mn_{0.4}O_2$, $MNi_{0.5}Mn_{1.5}O_2$, $MV_3O_6$, and $M_2MnO_3$. In particular, a positive electrode active material such as $M_2MnO_3$ or $MNi_{0.5}Mn_{1.5}O_2$ is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the remaining capacity thereof is less likely to decrease and the percentage increase in resistance thereof is less likely to change even after storage at high temperature and the battery performance thereof may not be

impaired even when the battery is driven at high voltage.

Other examples of the positive electrode active material also include solid solution materials of $M_2MnO_3$ and $MM^6O_2$ (wherein M is at least one metal selected from the group consisting of Li, Na, and K; and $M^6$ is a transition metal such as Co, Ni, Mn, or Fe).

The solid solution material is, for example, an alkali metal manganese oxide represented by the formula $Mx[Mn_{(1-y)}M^7{}_y]O_z$. In the formula, M includes at least one metal selected from the group consisting of Li, Na, and K; and $M^7$ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of $1 < x < 2$, $0 \leq y < 1$, and $1.5 < z < 3$, respectively. In particular, a manganese-containing solid solution material such as $Li_{1.2}Mn_{0.5}Co_{0.14}Ni_{0.14}O_2$, which is a $Li_2MnO_3$-based solid solution of $LiNiO_2$ and $LiCoO_2$, is preferred because it can provide an alkali metal ion secondary battery with a high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, relative to the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance may be attached to a surface of the positive electrode active material by, for example, a method of dissolving or suspending the substance in a solvent, impregnating the positive electrode active material with the solution or suspension, and drying the impregnated material; a method of dissolving or suspending a precursor of the substance in a solvent, impregnating the positive electrode active material with the solution or suspension, and heating the material and the precursor to cause a reaction therebetween; or a method of adding the substance to a precursor of the positive electrode active material and simultaneously sintering the materials. In the case of attaching carbon, for example, a carbonaceous material in the form of activated carbon may be mechanically attached to the surface afterward.

For the amount of the substance attached to the surface in terms of the mass relative to the amount of the positive electrode active material, the lower limit thereof is preferably 0.1 ppm or more, more preferably 1 ppm or more, still more preferably 10 ppm or more, while the upper limit thereof is preferably 20% or less, more preferably 10% or less, still more preferably 5% or less. The substance attached to the surface can reduce oxidation of the electrolyte on the surface of the positive electrode active material, improving the battery life. Too small an amount of the substance may fail to sufficiently provide this effect. Too large an amount thereof may hinder the entrance and exit of lithium ions, increasing the resistance.

Particles of the positive electrode active material may have any shape conventionally used, such as a bulky shape, a polyhedral shape, a spherical shape, an ellipsoidal shape, a plate shape, a needle shape, or a pillar shape. The primary particles may agglomerate to form secondary particles.

The positive electrode active material has a tap density of preferably 0.5 $g/cm^3$ or higher, more preferably 0.8 $g/cm^3$ or higher, still more preferably 1.0 $g/cm^3$ or higher. The positive electrode active material having a tap density below the lower limit may cause an increased amount of a dispersion medium required and increased amounts of a conductive material and a binder required in formation of the positive electrode active material layer, as well as limitation on the packing fraction of the positive electrode active material in the positive electrode active material layer, resulting in limitation on the battery capacity. The use of a complex oxide powder having a high tap density enables formation of a positive electrode active material layer with a high density. A higher tap density is normally preferred, and there is no upper limit. Still, too high a tap density may be a ratedetermining factor of diffusion of lithium ions in the positive electrode active material layer with the electrolyte serving as a diffusion medium, easily impairing the load characteristics. Thus, the upper limit of the tap density is preferably 4.0 $g/cm^3$ or lower, more preferably 3.7 $g/cm^3$ or lower, still more preferably 3.5 $g/cm^3$ or lower.

The tap density is determined as a powder packing density (tap density) $g/cm^3$ when 5 to 10 g of the positive electrode active material powder is packed into a 10-ml glass graduated cylinder and the cylinder is tapped 200 times with a stroke of about 20 mm.

The particles of the positive electrode active material have a median size d50 (or a secondary particle size when the primary particles agglomerate to form secondary particles) of preferably 0.3 $\mu m$ or greater, more preferably 0.5 $\mu m$ or greater, still more preferably 0.8 $\mu m$ or greater, most preferably 1.0 $\mu m$ or greater, while preferably 30 $\mu m$ or smaller, more preferably 27 $\mu m$ or smaller, still more preferably 25 $\mu m$ or smaller, most preferably 22 $\mu m$ or smaller. The particles having a median size below the lower limit may fail to provide a product with a high tap density. The particles having a median size

greater than the upper limit may cause prolonged diffusion of lithium in the particles, possibly impairing the battery performance. Mixing two or more positive electrode active materials having different median sizes d50 can further improve the easiness of packing in formation of the positive electrode.

The median size d50 is determined using a known laser diffraction/scattering particle size distribution analyzer. In the case of using LA-920 (Horiba, Ltd.) as the particle size distribution analyzer, the dispersion medium used in the measurement is a 0.1% by mass sodium hexametaphosphate aqueous solution and the measurement refractive index is set to 1.24 after 5-minute ultrasonic dispersion.

When the primary particles agglomerate to form secondary particles, the average primary particle size of the positive electrode active material is preferably 0.05 μm or greater, more preferably 0.1 μm or greater, still more preferably 0.2 μm or greater. The upper limit thereof is preferably 5 μm or smaller, more preferably 4 μm or smaller, still more preferably 3 μm or smaller, most preferably 2 μm or smaller. The primary particles having an average primary particle size greater than the upper limit may have difficulty in forming spherical secondary particles, adversely affecting the powder packing. Further, such primary particles may have a greatly reduced specific surface area, highly possibly impairing the battery performance such as output characteristics. In contrast, the primary particles having an average primary particle size below the lower limit may usually be insufficiently grown crystals, causing poor charge and discharge reversibility, for example.

The primary particle size is measured by scanning electron microscopic (SEM) observation. Specifically, the primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the primary particle size.

The positive electrode active material has a BET specific surface area of preferably 0.1 $m^2/g$ or larger, more preferably 0.2 $m^2/g$ or larger, still more preferably 0.3 $m^2/g$ or larger. The upper limit thereof is preferably 50 $m^2/g$ or smaller, more preferably 40 $m^2/g$ or smaller, still more preferably 30 $m^2/g$ or smaller. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

When the electrochemical device of the disclosure is used as a large-size lithium-ion secondary battery for hybrid vehicles or distributed generation, it needs to achieve high output. Thus, the particles of the positive electrode active material preferably mainly composed of secondary particles. The particles of the positive electrode active material preferably include 0.5 to 7.0% by volume of fine particles having an average secondary particle size of 40 μm or smaller and having an average primary particle size of 1 μm or smaller. The presence of fine particles having an average primary particle size of 1 μm or smaller enlarges the contact area with the electrolyte and enables more rapid diffusion of lithium ions between the electrode mixture and the electrolyte, improving the output performance of the battery.

The positive electrode active material may be produced by any usual method of producing an inorganic compound. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, $Li_2CO_3$, or $LiNO_3$ is added thereto and the mixture is sintered at high temperature, thereby providing an active material.

In production of the positive electrode, one of the aforementioned positive electrode active materials may be used alone or two or more thereof having different compositions may be used in any combination at any ratio. Preferred examples of the combination in this case include a combination of $LiCoO_2$ with a ternary system such as $LiNi_{0.33}Co_{0.33}Mn_{0.33}O_2$, a combination of $LiCoO_2$ with either $LiMn_2O_4$ or $LiMn_2O_4$ in which one or more Mn atoms are replaced by a different transition metal, and a combination of $LiFePO_4$ with either $LiCoO_2$ or $LiCoO_2$ in which one or more Co atoms are replaced by a different transition metal.

In order to achieve a high battery capacity, the amount of the positive electrode active material is preferably 50 to 99.5% by mass, more preferably 80 to 99% by mass, of the positive electrode mixture. The amount of the positive electrode active material in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may cause an insufficient electric capacity. In contrast, too large an amount thereof may lead to insufficient strength of the positive electrode.

The negative electrode active material is not limited, and may be, for example, any one selected from lithium

metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or nongraphitizable carbon; a silicon-containing compound such as silicon or a silicon alloy; and $Li_4Ti_5O_{12}$, or a mixture of two or more of these. Among these, a material at least partially containing a carbonaceous material and/or a silicon-containing compound can be particularly suitably used.

A negative electrode active material used in the disclosure suitably contains silicon as a constitutional element. With a negative electrode active material containing silicon as a constitutional element, a highcapacity battery can be produced.

As a material containing silicon, silicon particles, particles having a structure where silicon fine particles are dispersed in a silicon-based compound, silicon oxide particles represented by the formula: SiOx ($0.5 \leq x \leq 1.6$), or a mixture of these is/are preferred. The use of any of these can provide a negative electrode mixture for lithium-ion secondary batteries with higher initial chargedischarge efficiency, high capacity, and excellent cycle characteristics.

The term "silicon oxide" herein is a generic term for amorphous silicon oxides. Silicon oxides prior to disproportionation are represented by the formula: SiOx ($0.5 \leq x \leq 1.6$) where x preferably satisfies $0.8 \leq x < 1.6$, more preferably $0.8 \leq x < 1.3$. Such a silicon oxide can be obtained, for example, by heating a mixture of silicon dioxide and metallic silicon to generate silicon monoxide gas, followed by cooling the silicon monoxide gas for deposition.

The particles having a structure where silicon fine particles are dispersed in a silicon-based compound can be obtained, for example, by a method including sintering a mixture of silicon fine particles and a silicon-based compound or by a disproportionation reaction in which silicon oxide particles (SiOx) prior to disproportionation are heated in an inert non-oxidizing atmosphere such as an argon atmosphere at a temperature of 400°C or higher, suitably 800°C to 1100°C. A material obtained by the latter method is particularly suitable because silicon microcrystals are uniformly dispersed. The disproportionation reaction as described above can adjust the size of silicon nanoparticles to 1 to 100 nm. The silicon oxide in the particles having a structure in which silicon nanoparticles are dispersed in silicon oxide is preferably silicon dioxide. Dispersion of silicon nanoparticles (crystals) in an amorphous silicon oxide can be confirmed by transmission electron microscopy.

The physical properties of the silicon-containing particles can be appropriately determined according to the aimed composite particles. For example, the average particle size is preferably 0.1 to 50 μm. The lower limit is more preferably 0.2 μm or greater, still more preferably 0.5 μm or greater. The upper limit is more preferably 30 μm or smaller, still more preferably 20 μm or smaller. The average particle size is expressed as a weight average particle size determined by particle size distribution measurement by a laser diffraction method.

The BET specific surface area is preferably 0.5 to 100 $m^2/g$, more preferably 1 to 20 $m^2/g$. With the BET specific surface area of 0.5 $m^2/g$ or larger, there is no risk that the adhesiveness of the negative electrode material when processed into the electrode decreases and the battery characteristics are impaired. A BET specific surface area of 100 $m^2/g$ or less can increase the proportion of silicon dioxide on the particle surface, which eliminates the risk of battery capacity reduction upon use of the silicon fine particles as a negative electrode material for a lithium-ion secondary battery.

The silicon-containing particles are provided with conductivity when coated with carbon, which improves the battery characteristics. Examples of the method for imparting conductivity include a method including mixing the silicon-containing particles with conductive particles such as graphite particles, a method including coating the silicon-containing particle surface with a carbon film, and a method combining these two methods. Preferred is a method including coating with a carbon film, and more preferred is a method including chemical vapor deposition (CVD).

In order to increase the capacity of the resulting electrode mixture, the amount of the negative electrode active material in the electrode mixture is preferably 40% by mass or more, more preferably 50% by mass or more, particularly preferably 60% by mass or more. The upper limit thereof is preferably 99% by mass or less, more preferably 98% by mass or less.

The solid electrolyte may be a sulfide-based solid electrolyte or an oxide-based solid electrolyte. In particular, when a sulfide-based solid electrolyte is used, the solid-state secondary battery mixture is advantageously flexible.

The sulfide-based solid electrolyte is not limited. The sulfide-based solid electrolyte used may be any one selected from $Li_2S$-$P_2S_5$, $Li_2S$-$P_2S_3$, $Li_2S$-$P_2S_3$-$P_2S_5$, $Li_2S$-$SiS_2$, LiI-$Li_2S$-$SiS_2$, LiI-$Li_2S$-$P_2S_5$, LiI-$Li_2S$-$P_2O_5$, LiI-$Li_3PO_4$-$P_2S_5$, LiI-$Li_2S$-$SiS_2$-$P_2S_5$, $Li_2S$-$SiS_2$-$Li_4SiO_4$, $Li_2S$-$SiS_2$-$Li_3PO_4$, $Li_3PS_4$-$Li_4GeS_4$, $Li_{3.4}P_{0.6}Si_{0.4}S_4$, $Li_{3.25}P_{0.25}Ge_{0.76}S_4$, $Li_{4-x}Ge_{1-x}P_xS_4$ (X = 0.6 to 0.8), $Li_{4+y}Ge_{1-y}Ga_yS_4$ (y = 0.2 to 0.3), LiPSCl, LiCl, $Li_{7-x-2y}PS_{6-x-y}Cl_x$ ($0.8 \leq x \leq 1.7$, $0 < y \leq -0.25x + 0.5$), and $Li_{10}SnP_2S_{12}$, or a mixture of two or more thereof.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The oxide-based solid electrolyte is preferably a compound that contains an oxygen atom (0), has conductivity of metal ions belonging to Group 1 or Group 2 of the periodic table, and has electronic insulating properties.

Specific examples of the compound include $Li_{xa}La_{ya}TiO_3$ (xa = 0.3 to 0.7, ya = 0.3 to 0.7) (LLT), $Li_{x-}$

$_{b}La_{yb}Zr_{zb}M^{bb}{}_{mb}O_{nb}$ (wherein $M^{bb}$ includes at least one element selected from Al, Mg, Ca, Sr, V, Nb, Ta, Ti, Ge, In, and Sn; xb satisfies $5 \leq xb \leq 10$; yb satisfies $1 \leq yb \leq 4$; zb satisfies $1 \leq zb \leq 4$; mb satisfies $0 \leq mb \leq 2$; and nb satisfies $5 \leq nb \leq 20$), $Li_{xc}B_{yc}M^{cc}{}_{zc}O_{nc}$ (wherein $M^{cc}$ includes at least one element selected from C, S, Al, Si, Ga, Ge, In, and Sn; xc satisfies $0 \leq xc \leq 5$; yc satisfies $0 \leq yc \leq 1$; zc satisfies $0 \leq zc \leq 1$; and nc satisfies $0 \leq nc \leq 6$), $Li_{xd}(Al,Ga)_{yd}(Ti,Ge)_{zd}Si_{ad}P_{md}O_{nd}$ ($1 \leq xd \leq 3$, $0 \leq yd \leq 2$, $0 \leq zd \leq 2$, $0 \leq ad \leq 2$, $1 \leq md \leq 7$, and $3 \leq nd \leq 15$), $Li_{(3-2xe)}M^{ee}{}_{xe}D^{ee}O$ (wherein xe is a number of 0 or greater and 0.1 or smaller, $M^{ee}$ is a divalent metal atom, $D^{ee}$ is a halogen atom or a combination of two or more halogen atoms), $Li_{xf}Si_{yf}O_{zf}$ ($1 \leq xf \leq 5$, $0 < yf \leq 3$, and $1 \leq zf \leq 10$), $Li_{xg}S_{yg}O_{zg}$ ($1 \leq xg \leq 3$, $0 < yg \leq 2$, and $1 \leq zg \leq 10$), $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO_{(4-3/2w)}N_w$ ($w < 1$), $Li_{3.5}Zn_{0.25}GeO_4$ having a lithium super ionic conductor (LISICON) crystal structure, $La_{0.51}Li_{0.34}TiO_{2.94}$ having a perovskite crystal structure, $La_{0.55}Li_{0.35}TiO_3$, $LiTi_2P_3O_{12}$ having a natrium super ionic conductor (NASICON) crystal structure, $Li_{1+xh+yh}(Al,Ga)_{xh}(Ti,Ge)_{2-xh}Si_{yh}P_{3-yh}O_{12}$ ($0 \leq xh \leq 1$ and $0 \leq yh \leq 1$), and $Li_7La_3Zr_2O_{12}$ (LLZ) having a garnet crystal structure. Ceramic materials in which element substitution is performed for LLZ are also known. Examples thereof include $Li_{6.24}La_3Zr_2Al_{0.24}O_{11.98}$ and $Li_{6.25}Al_{0.25}La_3Zr_2O_{12}$ in which partial element substitution using Al is performed for LLZ, $Li_{6.6}La_3Zr_{1.6}Ta_{0.4}O_{12}$ in which partial element substitution using Ta is performed for LLZ, and $Li_{6.75}La_3Zr_{1.75}Nb_{0.25}O_{12}$, in which partial element substitution using Nb is performed for LLZ. Other examples include LLZ-based ceramic materials in which element substitution using at least one of magnesium (Mg) and A (A includes at least one element selected from the group consisting of calcium (Ca), strontium (Sr), and barium (Ba)) is performed for LLZ. Phosphorus compounds containing Li, P and O are also desirable. Examples include lithium phosphate ($Li_3PO_4$), LiPON in which one or more oxygen atoms in lithium phosphate are replaced with nitrogen, and $LiPOD^1$ (wherein $D^1$ includes at least one selected from Ti, V, Cr, Mn, Fe, Co, Ni, Cu, Zr, Nb, Mo, Ru, Ag, Ta, W, Pt, Au, and the like). $LiA^1ON$ (wherein $A^1$ includes at least one selected from Si, B, Ge, Al, C, Ga, and the like) can also be preferably used. Specific examples include $Li_2O$-$Al_2O_3$-$SiO_2$-$P_2O_5$-$TiO_2$-$GeO_2$ and $Li_2O$-$Al_2O_3$-$SiO_2$-$P_2O_5$-$TiO_2$.

The oxide-based solid electrolyte preferably contains lithium. Oxide-based solid electrolytes containing lithium are used in solid-state batteries in which lithium ions are used as carriers, and are particularly preferred in that they provide electrochemical devices having high energy density.

The oxide-based solid electrolyte is preferably an oxide having a crystal structure. Oxides having a crystal structure are particularly preferred in terms of good Li ion conductivity. The oxide having a crystal structure may be of perovskite type ($La_{0.51}Li_{0.34}TiO_{2.94}$ etc.), NASICON type ($Li_{1.3}Al_{0.3}Ti_{1.7}(PO_4)_3$ etc.), or garnet type ($Li_7La_3Zr_2O_{12}$ (LLZ) etc.). Preferred among these is the NASICON type.

The volume average particle size of the oxide solid electrolyte is not limited. Still, the volume average particle size is preferably 0.01 μm or greater, more preferably 0.03 μm or greater. The upper limit is preferably 100 μm or smaller, more preferably 50 μm or smaller. The average particle size of the oxide-based solid electrolyte particles is measured by the following procedure. A 1% by mass dispersion of the oxide-based solid electrolyte particles is prepared by dilution with water (or heptane in the case of a substance unstable in water) in a 20-mL sample bottle. The diluted dispersion sample is irradiated with 1-kHz ultrasonic waves for 10 minutes, and immediately thereafter used for the test. Data was acquired from this dispersion sample 50 times using a quartz cell for measurement at a temperature of 25°C with a laser diffraction/-scattering particle size distribution analyzer LA-920 (HORIBA), and the volume average particle size was determined. For other detailed conditions and the like, JIS Z8828:2013 "Particle size analysis - Dynamic light scattering" is referred as necessary. Five samples are prepared for each level and the average value is used.

The self-supporting film of the disclosure, when used as an electrode mixture, preferably further contains a conductive aid.

Any known conductive material can be used as the conductive aid. Specific examples include metal materials such as copper and nickel, and carbon materials such as graphite including natural graphite and artificial graphite, carbon black including acetylene black, Ketjen black, channel black, furnace black, lamp black, and thermal black, amorphous carbon including needle coke, carbon nanotubes, fullerene, and VGCF. One of these materials may be used alone or two or more thereof may be used in any combination at any ratio.

The conductive aid is used in an amount of usually 0.01% by mass or more, preferably 0.1% by mass or more, more preferably 1% by mass or more, while usually 50% by mass or less, preferably 30% by mass or less, more preferably 15% by mass or less, in the electrode mixture. The conductive aid in an amount less than the above range may cause insufficient conductivity. In contrast, the conductive aid in an amount more than the above range may cause a low battery capacity.

The self-supporting film of the disclosure, when used as an electrode mixture, may contain a thermoplastic polymer. Examples of thermoplastic polymers include polyvinylidene fluoride, vinylidene fluoride copolymers, polypropylene, polyethylene, polystyrene, polyethylene terephthalate, and polyethylene oxide. The thermoplastic polymer may be either a resin or an elastomer. One thermoplastic polymer may be used alone or two or more thermoplastic polymers may be used in any combination at any ratio.

The proportion of the thermoplastic polymer relative to the electrode active material is usually 0.01% by mass or more, preferably 0.05% by mass or more, more preferably 0.10% by mass or more, while usually 3.0% by mass or less, preferably 2.5% by mass or less, more preferably 2.0% by mass or less. The thermoplastic polymer added can improve the

mechanical strength of the electrode. The thermoplastic resin at a proportion higher than the above range may lower the proportion of the electrode active material in the electrode mixture, resulting in a low capacity of the battery and high resistance between the active materials.

The self-supporting film of the disclosure can be suitably used as a mixture sheet for an electrochemical device. In particular, the electrochemical device mixture of the disclosure is suitable for a battery, and is more suitable for a lithium-ion secondary battery.

The self-supporting film (mixture sheet) of the disclosure can be produced using powder components such as an electrode active material and a solid electrolyte and a binder (the TFE-based polymer composition).

The self-supporting film can be obtained by the following molding method using powder, not by a method of applying a dispersion in which powder components such as an electrode active material and a solid electrolyte are dispersed in a solvent, to a support such as a current collecting foil, followed by drying.

An exemplary specific method of producing a mixture sheet is described below. The mixture sheet can be obtained by a production method including: (1) mixing a raw material composition containing a powder component containing an electrode active material and/or a solid electrolyte, a binder, and, if necessary, a conductive aid; (2) molding the raw material composition obtained in the step (1) into a bulky shape; and (3) rolling the bulky raw material composition obtained in the step (2) into a sheet.

The raw material composition mixed in the step (1) is in a state where materials such as the powder component and the binder are simply mixed and does not have a fixed shape. Specific examples of mixing methods include mixing with the use of a W-shaped mixer, a V-shaped mixer, a drum mixer, a ribbon mixer, a conical screw mixer, a single screw kneader, a twin-screw kneader, a mix muller, a stirring mixer, or a planetary mixer.

For the binder mixing conditions in the step (1), the number of rotations is preferably 3000 rpm or less. The number of rotations is preferably 10 rpm or more, more preferably 15 rpm or more, still more preferably 20 rpm or more, while preferably 2000 rpm or less, more preferably 1500 rpm or less, still more preferably 1000 rpm or less. At the number of rotations below this range, mixing may take a long time, affecting the productivity. At the number of rotations above this range, fibrillation may occur excessively, resulting in a mixture sheet having poor strength and poor flexibility.

Molding the raw material composition into a bulky shape in the step (2) means forming the raw material composition into a single mass. Specific examples of methods of molding into a bulky shape include extrusion molding and press molding. The term "bulky" does not specify the shape and means any state of single mass, including a rod shape, a sheet shape, a spherical shape, a cubic shape, and the like.

A specific example of the rolling method in the step (3) is a method of rolling the bulky raw material composition using, for example, a roller press, a flat plate press, or a calender roller.

The step (3) is also preferably followed by a step (4) of applying a larger load to the resulting rolled sheet to form a thinner sheet-shaped product. Repeating the step (4) is also preferred. As described, better flexibility is achieved not by thinning the rolled sheet in one time but by rolling the sheet in steps. The number of performing the step (4) is preferably twice or more and 10 times or less, more preferably three times or more and nine times or less. A specific example of a rolling method is a method of rotating two or a plurality of rollers and passing the rolled sheet therebetween to provide a thinner sheet-shaped product.

In order to control the fibril diameter, the step (3) or the step (4) is also preferably followed by a step (5) of coarsely crushing the rolled sheet, again forming the coarsely crushed product into a bulky product, and then rolling the bulky product into a sheet-shaped product. Repeating the step (5) is also preferred. The number of performing the step (5) is preferably once or more and 12 times or less, more preferably twice or more and 11 times or less.

Specific examples of coarsely crushing the rolled sheet and again forming the coarsely crushed product into a bulky product in the step (5) include a method of folding the sheet, a method of forming the sheet into a rod- or a thin sheet-shaped product, and a method of forming the sheet into chips. The term "coarsely crushing" herein means changing the form of the rolled sheet obtained in the step (3) or step (4) into a different form so as to roll the product into a sheet-shaped product in the subsequent step, and encompasses simply folding the rolled sheet.

The step (5) may be followed by the step (4), or may be repeated. In any of the steps (2), (3), (4), and (5), uniaxial stretching or biaxial stretching may be performed. The fibril diameter can also be adjusted in accordance with the degree of coarse crushing in the step (5).

In the step (3), (4), or (5), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility. The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The mixture sheet can be suitably produced also by a production method including:

(a) mixing a powder component and a binder to provide a mixture; and
(b) calendaring or extrusion-molding the mixture into a sheet,

the mixing in the step (a) including:

(a1) homogenizing the powder component and the binder into powder; and
(a2) mixing the material powder mixture obtained in the step (a1) to provide the mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.
Accordingly, the homogenizing in the step (a1) is preferably performed at 19°C or lower, preferably at a temperature of 0°C to 19°C.
In other words, such a step (a1) is preferably performed such that the materials are mixed and thereby homogenized while reducing fibrillation.
The mixing in the subsequent step (a2) is preferably performed at a temperature of 30°C or higher to promote fibrillation.
The step (a2) is preferably performed at 30°C to 150°C, more preferably 35°C to 120°C, still more preferably 40°C to 80°C.
In an embodiment, the calendering or extrusion molding in the step (b) is performed at a temperature of 30°C to 150°C, preferably 35°C to 120°C, more preferably 40°C to 100°C.
The mixing in the step (a) is preferably performed with shearing force applied.
Specific examples of mixing methods include mixing with the use of a W-shaped mixer, a V-shaped mixer, a drum mixer, a ribbon mixer, a conical screw mixer, a single screw kneader, a twin-screw kneader, a mix muller, a stirring mixer, a planetary mixer, a Henschel mixer, or a rapid mixer.
For the mixing conditions, the number of rotations and the mixing duration are set as appropriate. For example, the number of rotations is suitably 15000 rpm or less. The number of rotations is preferably 10 rpm or more, more preferably 50 rpm or more, still more preferably 100 rpm or more, while preferably 12000 rpm or less, more preferably 10000 rpm or less, still more preferably 8000 rpm or less. At the number of rotations below this range, mixing may take a long time, affecting the productivity. At the number of rotations above this range, fibrillation may occur excessively, resulting in an electrode mixture sheet having poor strength.
The step (a1) is preferably performed at a weaker shearing force than that in the step (a2).
The step (a1) is preferably performed for a shorter time than that in the step (a2).
In the step (a2), the raw material composition preferably contains no liquid solvent, but a small amount of lubricant may be used. In other words, the powdery raw material mixture obtained in the step (a1) may be combined with a lubricant, whereby paste may be prepared.
Examples of the lubricant include, but are not limited to, water, ether compounds, alcohols, ionic liquids, carbonates, aliphatic hydrocarbons (e.g., low polar solvents such as heptane and xylene), isoparaffinic hydrocarbon compounds, and petroleum distillates (e.g., gasoline (C4-C10), naphtha (C4-C11), kerosene/paraffin (C10-C16), and mixtures of any of these).
The lubricant has a water content of preferably 1000 ppm or less.
A water content of 1000 ppm or less is preferred to reduce deterioration of the electrochemical device. The water content is more preferably 500 ppm or less.
The lubricant, when used, is particularly preferably a low polar solvent such as butyl butyrate or an ether compound.
The amount of the lubricant, when used, is 5.0 to 35.0 parts by weight, preferably 10.0 to 30.0 parts by weight, more preferably 15.0 to 25.0 parts by weight relative to the total weight of the composition fed to the step (a1).
The raw material composition preferably contains substantially no liquid solvent. In a conventional method for producing an electrode mixture, typically, a solvent containing a binder dissolved therein is used to prepare slurry containing an electrode mixture component in the form of powder dispersed therein, and the slurry is applied and dried to produce an electrode mixture sheet. In this case, a solvent to disperse or dissolve a binder is used. Still, solvents that can dissolve a binder resin commonly used in conventional cases are limited to specific solvents such as N-methyl pyrrolidone. Since such a solvent is highly polar and the use thereof requires a drying step, the use of the solvent leads to additional steps and cost. These solvents react with an electrolyte such as an electrolyte solution and a solid electrolyte to deteriorate the electrolyte and may cause poor battery performance due to residual components in preparation of slurry or after drying. In addition, low polar solvents such as heptane can dissolve very limited types of binder resin and have a low flash point, which may cause a difficulty in handling.
Not using a solvent but using a powdery binder containing less water in forming a mixture sheet can provide a

battery in which the electrolyte is less likely to be deteriorated. The above production method can provide a mixture sheet containing a binder having a fine fibrous structure and can reduce a burden on the production process owing to elimination of slurry production.

The step (b) includes calendering or extrusion. The calendering and extrusion can be performed by known methods. Thereby, the material can be formed into the shape of a mixture sheet.

The step (b) preferably includes (b1) forming the mixture obtained in the step (a) into a bulky mixture and (b2) calendering or extrusion-molding the bulky mixture.

Forming into a bulky product means forming the mixture into a single mass.

Specific examples of methods of molding into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 $\mu$m or greater. The size is more preferably 20000 $\mu$m or greater.

A specific example of the calendering or extrusion molding in the step (b2) is a method of rolling the electrode mixture using a roller press or a calender roller.

The step (b) is preferably performed at 30°C to 150°C. As described above, PTFE has a glass transition temperature around 30°C and is thus easily fibrillated at 30°C or higher. Accordingly, the step (b) is preferably performed at such temperatures.

The calendering or extrusion molding applies a shearing force, which fibrillates the PTFE and gives the shape.

The step (b) is also preferably followed by a step (c) of applying a larger load on the resulting rolled sheet to form a thinner sheet-shaped product. Repeating the step (c) is also preferred. As described, better flexibility is achieved not by thinning the rolled sheet in one time but by rolling the sheet in steps.

The number of performing the step (c) is preferably twice or more and 10 times or less, more preferably three times or more and nine times or less.

A specific example of a rolling method is a method of rotating two or a plurality of rollers and passing the rolled sheet therebetween to provide a thinner sheet-shaped product.

In order to control the sheet strength, the step (b) or the step (c) is also preferably followed by a step (d) of coarsely crushing the rolled sheet, again forming the coarsely crushed product into a bulky product, and then rolling the bulky product into a sheet-shaped product. Repeating the step (d) is also preferred. The number of performing the step (d) is preferably once or more and 12 times or less, more preferably twice or more and 11 times or less.

Specific examples of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The term "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c), or may be repeated.

In any of the steps (a), (b), (c), and (d), uniaxial stretching or biaxial stretching may be performed.

The sheet strength can also be adjusted in accordance with the degree of coarse crushing in the step (d).

In the step (b), (c), or (d), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.

The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The steps (c) and (d) are preferably performed at 30°C or higher, more preferably 60°C or higher. The steps (c) and (d) are preferably performed at 150°C or lower.

The mixture sheet can be used as an electrode mixture sheet for an electrochemical device. The electrode mixture sheet may be for either a negative electrode or a positive electrode. In particular, the electrode mixture sheet is suitable for a lithium-ion secondary battery.

The disclosure also provides an electrode including the self-supporting electrochemical device mixture film of the disclosure. The electrode preferably includes the self-supporting film of the disclosure and a current collector. The electrode of the disclosure has excellent strength and excellent flexibility.

The electrode of the disclosure may be a positive electrode or may be a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such

as carbon cloth and carbon paper. Preferred is any metal material, especially aluminum or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 $\mu$m or greater, preferably 3 $\mu$m or greater, more preferably 5 $\mu$m or greater, while usually 1 mm or smaller, preferably 100 $\mu$m or smaller, more preferably 50 $\mu$m or smaller. The metal foil having a thickness smaller than this range may have insufficient strength as a current collector. Conversely, the metal foil having a thickness greater than the above range may have poor handleability.

In order to reduce the electric contact resistance between the current collector and the positive electrode active material layer, the current collector also preferably has a conductive aid applied on the surface thereof. Examples of the conductive aid include carbon and noble metals such as gold, platinum, and silver.

The positive electrode may be produced by a usual method. In an exemplary method, the electrode mixture sheet and the current collector are laminated via an adhesive, followed by vacuum drying.

The density of the positive electrode mixture sheet is preferably 2.80 g/cm$^3$ or higher, more preferably 3.00 g/cm$^3$ or higher, still more preferably 3.20 g/cm$^3$ or higher, while preferably 3.80 g/cm$^3$ or lower, more preferably 3.75 g/cm$^3$ or lower, still more preferably 3.70 g/cm$^3$ or lower. The positive electrode mixture sheet having a density higher than the above range may cause low permeability of the electrolyte solution toward the vicinity of the interface between the current collector and the active material, and poor charge and discharge characteristics particularly at a high current density, failing to provide high output. The positive electrode mixture sheet having a density lower than the above range may cause poor conductivity between the active materials and increase the battery resistance, failing to provide high output.

The positive electrode may have any thickness. In order to achieve a high capacity and high output, the lower limit of the thickness of the mixture layer on one side of the current collector excluding the thickness of the metal foil of the current collector is preferably 10 $\mu$m or greater, more preferably 20 $\mu$m or greater, while preferably 500 $\mu$m or smaller, more preferably 450 $\mu$m or smaller.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 $\mu$m or greater, preferably 3 $\mu$m or greater, more preferably 5 $\mu$m or greater, while usually 1 mm or smaller, preferably 100 $\mu$m or smaller, more preferably 50 $\mu$m or smaller. The metal foil having a thickness smaller than this range may have insufficient strength as a current collector. Conversely, the metal foil having a thickness greater than the above range may have poor handleability.

The negative electrode may be produced by a usual method. In an exemplary method, the electrode mixture sheet and the current collector are laminated via an adhesive, followed by vacuum drying.

The density of the negative electrode mixture is preferably 1.3 g/cm$^3$ or higher, more preferably 1.4 g/cm$^3$ or higher, still more preferably 1.5 g/cm$^3$ or higher, while preferably 2.0 g/cm$^3$ or lower, more preferably 1.9 g/cm$^3$ or lower, still more preferably 1.8 g/cm$^3$ or lower. The negative electrode mixture having a density higher than the above range may cause low permeability of the electrolyte solution toward the vicinity of the interface between the current collector and the active material, and poor charge and discharge characteristics particularly at a high current density, failing to provide high output. The negative electrode mixture having a density lower than the above range may cause poor conductivity between the active materials and increase the battery resistance, failing to provide high output.

The negative electrode may have any thickness. In order to achieve a high capacity and high output, the lower limit of the thickness of the mixture layer on one side of the current collector excluding the thickness of the metal foil of the current collector is preferably 10 $\mu$m or greater, more preferably 20 $\mu$m or greater, while preferably 500 $\mu$m or smaller, more preferably 450 $\mu$m or smaller.

The disclosure also provides an electrochemical device including the electrode of the disclosure described above.

The electrochemical device of the disclosure may be a battery, may be a secondary battery, may be a secondary battery obtainable by use of an electrolyte solution, or may be a solid-state secondary battery.

The secondary battery obtainable by use of an electrolyte solution may be obtained by use of components used for a known secondary battery, such as an electrolyte solution and a separator. These will be explained in detail below.

A non-aqueous electrolyte solution is preferably used as the electrolyte solution. The nonaqueous electrolyte solution used may be a solution obtained by dissolving a known electrolyte salt in a known organic solvent for dissolving an

electrolyte salt.

Any organic solvents for dissolving electrolyte salts may be used. One or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

Examples of electrolyte salts include $LiClO_4$, $LiAsF_6$, $LiBF_4$, $LiPF_6$, $LiN(SO_2CF_3)_2$, and $LiN(SO_2C_2F_5)_2$. In order to achieve favorable cycle characteristics, particularly preferred is $LiPF_6$, $LiBF_4$, $LiN(SO_2CF_3)_2$, $LiN(SO_2C_2F_5)_2$, and a combination of any of these.

The concentration of the electrolyte salt is preferably 0.8 mol/L or higher, more preferably 1.0 mol/L or higher. The upper limit is usually 1.5 mol/L, though it depends on the organic solvent for dissolving an electrolyte salt used.

The secondary battery obtainable by use of an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric which is formed from a material stable to the electrolyte solution, such as resin, glass fiber, or inorganic matter, and which has an excellent liquid-retaining ability.

Examples of the material of a resin or glass-fiber separator include polyolefins such as polyethylene and polypropylene, aromatic polyamide, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. In order to achieve good permeability of the electrolyte solution and a good shut-down effect, the separator is preferably a porous sheet or nonwoven fabric formed from a polyolefin such as polyethylene or polypropylene.

The separator may have any thickness, and the thickness is usually 1 μm or greater, preferably 5 μm or greater, more preferably 8 μm or greater, while usually 50 μm or smaller, preferably 40 μm or smaller, more preferably 30 μm or smaller. The separator thinner than the above range may have poor insulation and mechanical strength. The separator thicker than the above range may cause not only poor battery performance such as poor rate characteristics but also a low energy density of the whole electrolyte battery.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 μm and a thickness of 5 to 50 μm. Instead of the above separate thin film, the separator may have a structure in which a composite porous layer containing particles of the above inorganic matter is disposed on a surface of one or each of the positive and negative electrodes using a resin binder. For example, alumina particles having a 90% particle size of smaller than 1 μm may be applied to the respective surfaces of the positive electrode with fluororesin used as a binder to form a porous layer.

The external case may be made of any material that is stable to an electrolyte solution to be used. Specific examples thereof include metals such as nickel-plated steel plates, stainless steel, aluminum and aluminum alloys, and magnesium alloys, and a layered film (laminate film) of resin and aluminum foil. In order to reduce the weight, a metal such as aluminum or an aluminum alloy or a laminate film is favorably used.

An external case made of metal may have a sealed-up structure formed by welding the metal by laser welding, resistance welding, or ultrasonic welding, or a caulking structure using the metal with a resin gasket in between. An external case made of a laminate film may have a sealed-up structure formed by hot-melting resin layers. In order to improve the sealability, a resin which is different from the resin of the laminate film may be disposed between the resin layers. Especially, in the case of forming a sealed-up structure by hot-melting the resin layers with current collecting terminals in between, metal and resin are to be bonded. Thus, the resin to be disposed between the resin layers is favorably a resin having a polar group or a modified resin having a polar group introduced therein.

The lithium-ion secondary battery obtainable by use of an electrolyte solution may have any shape, such as a cylindrical shape, a square shape, a laminate shape, a coin shape, or a large-size shape. The shapes and the structures of the positive electrode, the negative electrode, and the separator may be changed in accordance with the shape of the battery.

The solid-state secondary battery is preferably an all-solid-state secondary battery. The solid-state secondary battery is preferably a lithium-ion battery or is preferably a sulfide-based solid-state secondary battery.

The solid-state secondary battery preferably includes a positive electrode, a negative electrode, and a solid electrolyte layer between the positive electrode and the negative electrode.

In the solid-state secondary battery, the self-supporting film of the disclosure may be used for an electrode layer or a solid electrolyte layer.

According to a preferred embodiment of the disclosure, the disclosure relates to a solid electrolyte layer (preferably a solid electrolyte layer sheet) including the self-supporting film of the disclosure.

The solid-state secondary battery may include a separator between the positive electrode and the negative

electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

The embodiments have been described above, and it will be understood that various changes in form or detail can be made without departing from the gist and scope of the claims.

EXAMPLES

The disclosure is more specifically described hereinbelow with reference to examples, but the disclosure is not limited to these examples.

Various physical properties were measured by the following methods.

<Polymer solid concentration>

A TFE-based polymer aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

<Average primary particle size>

The TFE-based polymer aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm light incident on each sample.

<Water content>

The mass of the TFE-based polymer composition in an amount of about 20 g was weighed before and after heating at 150°C for two hours, and the water content was calculated by the following formula. The sample was taken three times, and this calculation was performed for each sample, and the values were then averaged. This average was taken as the water content.

Water content (% by mass) = [(mass (g) of TFE-based polymer composition before heating) - (mass (g) of TFE-based polymer composition after heating)]/(mass (g) of TFE-based polymer composition before heating) $\times$ 100

<Standard specific gravity (SSG)>

The SSG was determined by the water displacement method in conformity with ASTM D792 using a sample molded in conformity with ASTM D4895-89.

<Thermal instability index (TII)>

The thermal instability index was measured in conformity with ASTM D4895-89.

<Amount of modifying monomer>

The TFE-based polymer composition was press-molded into a thin-film disc and the thin-film disc was subjected to FT-IR measurement, so that infrared absorbances were obtained. The HFP content was determined by multiplying the ratio (absorbance at 982 $cm^{-1}$)/(absorbance at 935 $cm^{-1}$) by 0.3.

<Endothermic peak temperature>

The endothermic peak temperature was measured as follows. About 10 mg of a composition of a TFE-based polymer that had never been heated to 300°C or higher was precisely weighed out, and placed in a special aluminum pan, followed by simultaneous thermogravimetry/differential thermal analysis (TG-DTA). The endothermic peak temperature was defined as the temperature corresponding to the minimum value on the differential thermal analysis (DTA) curve obtained by increasing the temperature of the aluminum pan in a temperature range from 25°C to 600°C at a rate of 10°C/min in the air atmosphere.

<0.1% Mass reduction temperature>

About 10 mg of a composition of a TFE-based polymer that had never been heated to 300°C or higher was precisely weighed out, and placed in a special aluminum pan, followed by simultaneous thermogravimetry/differential thermal analysis (TG-DTA). The 0.1% mass reduction temperature was defined as a temperature corresponding to a point at which the weight was reduced by 0.1 mass% when the temperature of the aluminum pan was increased in a temperature range from 25°C to 600°C at a rate of 10°C/min in the air atmosphere.

<1.0% Mass reduction temperature>

About 10 mg of a composition of a TFE-based polymer that had never been heated to 300°C or higher was precisely weighed out, and placed in a special aluminum pan, followed by simultaneous thermogravimetry/differential thermal analysis (TG-DTA). The 1.0% mass reduction temperature was defined as a temperature corresponding to a point at which the weight was reduced by 1.0 mass% when the temperature of the aluminum pan was increased in a temperature range from 25°C to 600°C at a rate of 10°C/min in the air atmosphere.

<Extrusion pressure>

The extrusion pressure was measured by the following method in conformity with the method described in JP 2002-201217 A.

To 100 g of the TFE-based polymer composition was added 21.7 g of lubricant (trade name: Isopar H (registered trademark), ExxonMobil Corp.), followed by mixing in a glass bottle at room temperature for three minutes, whereby a mixture was obtained. Next, the glass bottle was left to stand for at least one hour at room temperature (25°C) before extrusion, whereby a lubricated resin was obtained. The lubricated resin was paste-extruded through an orifice (diameter: 2.5 mm, land length: 11 mm, introduction angle: 30°) at room temperature at a reduction ratio of 100:1, whereby uniform beadings (extrudates) were obtained. The extrusion speed, i.e., ram speed was set to 20 inches/min (51 cm/min). The load at which the pressure was in equilibrium in the paste extrusion was measured, and the obtained value was divided by the cylinder cross-sectional area used in the paste extrusion, whereby the extrusion pressure was calculated.

<Expansion test>

The expansion test was performed by the following method in conformity with the method described in JP 2002-201217 A.

A beading obtained by the above paste extrusion was heated at 230°C for 30 minutes, whereby the lubricant was removed from the beading. The beading (extrudate) was cut to an appropriate length and the resulting sample was clamped at each end with a gap between the clamps of 1.5 inches (38 mm), followed by heating to 300°C in an aircirculating furnace. The clamps were then moved apart at a desired speed (stretching speed) until the separation distance corresponded to the desired degree of stretching (total degree of stretching). The expansion test (stretching test) was performed in this manner. The stretching method was essentially in conformity with the method disclosed in US 4576869 B, except that the extrusion speed was different (51 cm/min, not 84 cm/min). The "degree of stretching" shows the increase in length attributable to expansion, and is typically expressed in relation to the original length. In the above stretching method, the stretching speed was 1000%/sec and the total degree of stretching was 2400%. Beadings that did not break during the expansion test were evaluated as expandable.

<Amount of specific compound containing fluorine>

The amount was measured by liquid chromatography mass spectrometry under the following conditions.

<Method of measuring the amount of compound represented by the formula (1)>

Extraction from composition

To a 1-g portion of the composition was added 10 g (12.6 mL) of methanol, followed by ultrasonication for 60 minutes, whereby a supernatant solution containing the compound represented by the formula (1) was extracted. The resulting extract was appropriately concentrated by nitrogen purge, whereby a concentrated extract was obtained.

Measurement of the amount of compound represented by the formula (1) contained in extract

The amount of the compound represented by the formula (1) contained in the extract was obtained by conversion to perfluorooctanoic acid.

Calibration curve for perfluorooctanoic acid

Methanol standard solutions having five different known levels from 1 ng/mL to 100 ng/mL of perfluorooctanoic acid were prepared, and analyzed using a liquid chromatograph mass spectrometer (Waters, LC-MS ACQUITY UPLC/TQD). By first order approximation based on the sample concentrations and the peak integral values, the values of a and b were obtained by the following relational expression (1).

$$A = a \times X + b \quad (1)$$

A: Peak area of perfluorooctanoic acid

X: Concentration (ng/mL) of perfluorooctanic acid

Instrument configuration an LC-MS measurement conditions

[Table 1]

| | | | |
|---|---|---|---|
| LC system | | | |
| | Device | Acquity UPLC from Waters | |
| | Column | Acquity UPLC BEH C18 1.7 μm (2.1 × 50 mm) from Waters | |
| | Mobile phase | A $CH_3CN$ | |
| | | B 20 mM $CH_3COONH_4/H_2O$ | |
| | | 0 → 1.5 min | A:B = 10:90 |
| | | 1.5 → 8.5 min | A:B = 10:90 → A:B = 90:10 Linear gradient |
| | | 8.5 → 10 min | A:B = 90:10 |
| | Flow rate | 0.4 mL/min | |
| | Column temperature | 40°C | |
| | Sample injection amount | 5 μL | |
| MS system | | | |
| | Device | TQ Detecter | |
| | Measurement mode | MRM (Multiple Reaction Monitoring) | |
| | Ionization method | Electrospray ionization<br>Negative mode | |

MRM measurement parameter

[Table 2]

| Compound | Precursor | Product |
|---|---|---|
| Perfluorooctanic acid | 413 | 369 |

Amount of compound represented by formula (1) containing 4 to 20 carbon atoms in extract

The amount of the compound represented by the formula (1) containing 4 to 20 carbon atoms was determined using a liquid chromatograph-mass spectrometer. For the extracted liquid phase, the peak areas of the compositions represented by the formula (1) with respective numbers of carbon atoms were determined by the MRM method.

MRM measurement parameter

[Table 3]

| Compound name | Number of carbon atoms | Precursor | Product |
|---|---|---|---|
| $(H-(CF_2)_3-COO)M$ | 4 | 195 | 131 |
| $(H-(CF_2)_4-COO)M$ | 5 | 245 | 181 |
| $(H-(CF_2)_5-COO)M$ | 6 | 295 | 231 |
| $(H-(CF_2)_6-COO)M$ | 7 | 345 | 281 |
| $(H-(CF_2)_7-COO)M$ | 8 | 395 | 331 |
| $(H-(CF_3)_8-COO)M$ | 9 | 445 | 381 |
| $(H-(CF_3)_9-COO)M$ | 10 | 495 | 431 |
| $(H-(CF_2)_{10}-COO)M$ | 11 | 545 | 481 |
| $(H-(CF_2)_{11}-COO)M$ | 12 | 595 | 531 |
| $(H-(CF_2)_{12}-COO)M$ | 13 | 645 | 581 |
| $(H-(CF_2)_{13}-COO)M$ | 14 | 695 | 631 |
| $(H-(CF_2)_{14}-COO)M$ | 15 | 745 | 681 |
| $(H-(CF_2)_{15}-COO)M$ | 16 | 795 | 731 |
| $(H-(CF_2)_{16}-COO)M$ | 17 | 845 | 781 |
| $(H-(CF_2)_{17}-COO)M$ | 18 | 895 | 831 |
| $(H-(CF_2)_{15}-COO)M$ | 19 | 945 | 881 |
| $(H-(CF_2)_{19}-COO)M$ | 20 | 995 | 931 |

The amount of the compound represented by the formula (1) containing (m+1) carbon atoms in the extract was calculated using the following equation (3). The values of a and b in the equation (3) were determinet using the relational expresson (1).

| | | | |
|---|---|---|---|
| $(H-(CF_2)_6-COO)M$ | 7 | 345 | 281 |

XCm: The amount (ng/mL) of the compound represented by the formula (1) containing (m+1) carbon atoms in the extract

ACm: The peak area of the compound represented by the formula (1) containing (m + 1) carbon atoms in the extract

The quantitation limit in this measurement method is 1 ng/mL.

Amount of compound represented by formula (1) containing (m + 1) carbon atoms in composition

The amount of the compound represented by the formula (1) containing (m + 1) carbon atoms in the composition was determined using the following equation (4).

$$YCm = XCm \times 12.6 \quad (4)$$

YCm: The amount of the compound represented by the formula (1) containing (m + 1) carbon atoms in the composition

The quantitation limit is 10 ppb by mass.

(Method of measuring the amount of compound represented by the formula (2))

Extraction from composition

To a 1-g portion of the composition was added 10 g (12.6 mL) of methanol, followed by ultrasonication for 60 minutes, whereby a supernatant solution containing the compound represented by the formula (2) was extracted. The resulting extract was appropriately concentrated by nitrogen purge, whereby a concentrated extract was obtained.

Measurement of the amount of compound represented by the formula (2) in extract

The amount of the compound represented by the formula (2) contained in the extract was obtained by conversion to perfluorooctanesulfonic acid.

Calibration curve for perfluorooctanesulfonic acid

Methanol standard solutions having five different known levels from 1 ng/mL to 100 ng/mL of perfluorooctanesulfonic acid were prepared, and analyzed using a liquid chromatograph mass spectrometer (Waters, LC-MS ACQUITY UPLC/TQD). By first order approximation based on the sample concentrations and the peak integral values, the values of a and b were obtained by the following relational expression (1).

$$A = a \times X + b \quad (1)$$

A: peak area of perfluorooctanesulfonic acid
X: Concentration (ng/mL) of perfluorooctanesulfonic acid

Instrument configuration and LC-MS measurement conditions

[Table 4]

| | | |
|---|---|---|
| LC system | | |
| Device | Acquity UPLC from Waters | |
| Column | Acquity UPLC BEH C18 1.7 μm (2.1 × 50 mm) from Waters | |
| Mobile phase | A $CH_3CN$ | |
| | B 20 mM $CH_3COONH_4/H_2O$ | |
| | 0 → 1.5 min | AB = 10:90 |
| | 1.5 → 8.5 min | AB = 10:90 → A:B = 90:10 Linear gradient |
| | 8.5 → 10 min | AB = 90:10 |
| Flow rate | 0.4 mL/min | |
| Column temperature | 40°C | |
| Sample injection amount | 5 μL | |
| MS system | | |
| Device | TQ Detecter | |
| Measurement mode | MRM (Multiple Reaction Monitoring) | |
| | Electrospray ionization | |
| Ionization method | Negative mode | |

MRM measurement parameter

[Table 5]

| Compound | Precursor | Product |
|---|---|---|
| Perfluorooctanesuifonic | 499 | 99 |

Amount of compound represented by the formula (2) containing 4 to 20 carbon atoms in extract

The amount of the compound represented by the formula (2) containing 4 to 20 carbon atoms was determined using a liquid chromatograph-mass spectrometer. For the extracted liquid phase, the peak areas of the compositions represented by the tormula (2) with respective numbers of carbon atoms were determined by the MRM method.

MRM measurement parameter

[Table 6]

| Compound | Number of carbon atoms | Precursor | Product |
|---|---|---|---|
| $(H-(CF_2)_4-SO_3)M$ | 4 | 281 | 99 |
| $(H-(CF_2)_5-SO_3)M$ | 5 | 331 | 99 |
| $(H-(CF_2)_6-SO_3)M$ | 6 | 381 | 99 |
| $(H-(CF_2)_7-SO_3)M$ | 7 | 431 | 99 |
| $(H-(CF_2)_8-SO_3)M$ | 8 | 481 | 99 |
| $(H-(CF_2)_9-SO_3)M$ | 9 | 531 | 99 |
| $(H-(CF_2)_{10}-SO_3)M$ | 10 | 581 | 99 |
| $(H-(CF_2)_{11}-SO_3)M$ | 11 | 631 | 99 |
| $(H-(CF_2)_{12}-SO_3)M$ | 12 | 681 | 99 |
| $(H-(CF_2)_{13}-SO_3)M$ | 13 | 731 | 99 |
| $(H-(CF_2)_{14}-SO_3)M$ | 14 | 781 | 99 |
| $(H-(CF_2)_{15}-SO_3)M$ | 15 | 831 | 99 |
| $(H-(CF_2)_{16}-SO_3)M$ | 16 | 881 | 99 |
| $(H-(CF_2)_{17}-SO_3)M$ | 17 | 931 | 99 |
| $(H-(CF_2)_{18}-SO_3)M$ | 18 | 981 | 99 |
| $(H-(CF_2)_{19}-SO_3)M$ | 19 | 1031 | 99 |
| $(H-(CF_2)_{20}-SO_3)M$ | 20 | 1081 | 99 |

The amount of the compound represented by the formula (2) containing n carbon atoms in the extract was calculated using the following equation (3). The values of a and b in the equation (3) were determined using the relational expression (1).

$$XSn = ((ASn - b)/a) \times ((50 \times n + 81)/499) \quad (3)$$

XSn: The amount (ng/mL) of the compound represented by the formula (2) containing n carbon atoms in the extract
ASn: The peak area of the compound represented by the formula (2) containing n carbon atoms in the extract

The quantitation limit in this measurement method is 1 ng/mL.

Amount of compound represented by formula (2) containing n carbon atoms in composition

The amount of the compound represented by the formula (2) containing n carbon atoms in the composition was determined using the following equation (4).

$$YSn = XSn \times 12.6 \quad (4)$$

YSn: The amount of the compound represented by the formula (2) containing n carbon atoms in the composition

(ppb relative to TFE-based polymer)

The quantitation limit is 10 ppb by mass.

<Fibril diameter (median value)>

(1) A magnified image (7000x) of an electrochemical device mixture sheet was taken using a scanning electron microscope (S-4800 model, available from Hitachi, Ltd.), whereby an image was obtained.
(2) Two lines were drawn on this image at equal intervals in the horizontal direction, whereby the image was trisected.
(3) For all fibrilated binders on the upper line, the diameter was measured at three points for each fibrilated binder, and the average value was taken as the diameter of that fibrilated binder. The three points selected to measure the diameter included the intersection of the fibrillated binder and the line and locations 0.5 μm above and below the intersection (excluding unfibrillated binder primary particles).
(4) The operation of (3) was performed for all fibrillated binders on the lower line.
(5) Based on the first image, the field of view was moved 1 mm to the right, and another image was taken. The diameters of fibrillated binders were measured through (3) and (4) above. The above operation was repeated, and terminated when the number of measurements exceeded 80.
(6) The median value of the diameters of all fibrillated binders measured above was taken as the size of the fibril diameter.

<Self-supporting film test>

A film piece (10 × 10 cm), cut from a film with a thickness of 10 μm or greater and 1000 μm or smaller, was grasped at its center of gravity using tweezers (PTS07, available from Engineer Inc.). The film was determined to be a self-supporting film if the grasped film piece did not crack, split, or bend.

Preparation Example 1

To 16 g of deionized water was added 0.273 g of lauric acid, to which 2.77 g of a 2.8% concentration ammonia aqueous solution was gradually added with stirring, whereby aqueous solution C was obtained.

To 100 g of deionized water was added 10 g of lauric acid, to which 25 g of a 10% concentration ammonia aqueous solution was gradually added with stirring, whereby aqueous solution D was obtained. The pH at this time was 9.6.

Production Example 1

A 3-L SUS reactor equipped with a stirrer was charged with 1748 g of deionized water, 90 g of paraffin wax, the aqueous solution C obtained in Preparation Example 1, and 0.5 g of ammonium oxalate. The pH of the aqueous dispersion at this time was 9.0. The reactor was hermetically sealed, and the inside of the reactor was replaced with nitrogen for oxygen removal. The temperature of the reactor was increased to 70°C, and 2.0 g of HFP was added to the reactor. Further, the pressure inside the reactor was increased with TFE to 2.70 MPa. When continuous feeding of a potassium permanganate aqueous solution at a concentration of 0.5% by mass, as a polymerization initiator, to the reactor was started, the pressure dropped and the reaction started. TFE was fed so that the reaction pressure was constant at 2.70 MPa. Stirring was stopped when 80 g of TFE had been added, and depressurization was performed until the reaction pressure reached the atmospheric pressure.

Immediately thereafter, the reactor was filled with TFE to set the reaction pressure to 2.70 MPa, and stirring was restarted, whereby the reaction was continued. At the same time, continuous feeding of the aqueous solution D obtained in Preparation Example 1 to the reactor was started. Stirring was stopped when 680 g of TFE had been added, and depressurization was performed until the pressure inside the reactor reached the atmospheric pressure. By the end of the reaction, 56.0 g of the potassium permanganate aqueous solution and 26.2 g of the aqueous solution D were fed. The resulting aqueous dispersion was taken out of the reactor and cooled, and the paraffin wax was separated, whereby a TFE-based polymer aqueous dispersion was obtained. The resulting TFE-based polymer aqueous dispersion had a pH of 8.8, a solid content concentration of 27.1% by mass, and a primary particle size of 220 nm.

Manufacturing Example 1

The TFE-based polymer aqueous dispersion obtained in Production Example 1 was diluted with deionized water to a solid content concentration of 13% by mass. The dilution was stirred vigorously in a container equipped with a stirrer for

coagulation, and water was filtered out, whereby a wet powder was obtained. The water content of the wet powder was approximately 52% by mass.

The resulting wet powder was placed in a stainless-steel mesh tray (amount: 2.0 g/$cm^2$), and the mesh tray was heated in a hot air circulating electric furnace at 240°C. After 18 hours, the mesh tray was taken out and air-cooled, whereby TFE-based polymer composition A was obtained.

The resulting TFE-based polymer composition A had a water content of 0.001% by mass, a standard specific gravity of 2.170, a thermal instability index of 44, a HFP content of 0.002% by mass, a 0.1% mass reduction temperature of 391°C, a 1.0% mass reduction temperature of 491°C, and an endothermic peak temperature of 342°C. The extrusion pressure was 27.0 MPa, and the TFE-based polymer composition A was expandable.

The amount of the compound represented by the formula (1) containing m (4 to 20) carbon atoms in the resulting TFE-based polymer composition A and the amount of the compound represented by the formula (2) containing n (4 to 20) carbon atoms were each less than the quantitation limit (less than 10 ppb by mass).

Manufacturing Example 2

TFE-based polymer composition B was obtained as in Manufacturing Example 1, except that the heat treatment temperature was changed to 210°C.

The resulting TFE-based polymer composition B had a water content of 0.002% by mass, a standard specific gravity of 2.170, a thermal instability index of 44, a HFP content of 0.002% by mass, a 0.1% mass reduction temperature of 391°C, a 1.0% mass reduction temperature of 491°C, and an endothermic peak temperature of 342°C. The extrusion pressure was 24.9 MPa, and the TFE-based polymer composition B was expandable.

The physical properties of the resulting TFE-based polymer composition B are shown in Tables 7 and 8 below.

Manufacturing Example 3

TFE-based polymer composition C was obtained as in Manufacturing Example 2, except that the mesh tray was replaced with a flat tray (tray with no air permeability on the bottom and sides) and the heat treatment temperature was changed to 180°C.

The resulting TFE-based polymer composition C had a water content of 0.025% by mass, a standard specific gravity of 2.170, a thermal instability index of 44, a HFP content of 0.002% by mass, a 0.1% mass reduction temperature of 386°C, a 1.0% mass reduction temperature of 490°C, and an endothermic peak temperature of 342°C. The extrusion pressure was 20.8 MPa, and the TFE-based polymer composition C was expandable.

The physical properties of the resulting TFE-based polymer composition C are shown in Tables 7 and 8 below.

Preparation Example 2

A mixture of 10-undecen-1-ol (16 g), 1,4-benzoquinone (10.2 g), DMF (160 mL), water (16 mL), and $PdCl_2$ (0.34 g) was heated and stirred at 90°C for 12 hours.

Then, the solvent was removed under reduced pressure. The resulting residue was purified by separation and column chromatography, whereby 11-hydroxyundecan-2-one (15.4 g) was obtained.

A mixture of 11-hydroxyundecan-2-one (13 g), sulfur trioxide-triethylamine complex (13.9 g), and tetrahydrofuran (140 mL) was stirred at 50°C for 12 hours. A solution of sodium methoxide (3.8 g)/methanol (12 mL) was added dropwise to the reaction solution.

The precipitated solid was filtered under reduced pressure and washed with ethyl acetate, whereby sodium 10-oxoundecyl sulfate (15.5 g) (hereinafter referred to as surfactant A) was obtained.

To a 1-L glass reactor equipped with a stirrer was added 588.6 g of deionized water and 70.0 g of the surfactant **A.** The reactor was hermetically sealed, and the inside of the reactor was replaced with nitrogen for oxygen removal. The temperature of the reactor was increased to 90°C and the pressure was increased with nitrogen to 0.4 MPaG. Ammonium persulfate (APS) in an amount of 41.4 g was fed, followed by stirring for three hours. Stirring was stopped, and depressurization was performed until the pressure inside the reactor reached the atmospheric pressure, followed by cooling, whereby surfactant aqueous solution B was obtained.

Production Example 2

To a 6-L SUS reactor equipped with a stirrer was added 3600 g of deionized water, 180 g of paraffin wax, and 0.540 g of the surfactant **A.** The reactor was hermetically sealed, and the inside of the reactor was replaced with nitrogen for oxygen removal. The temperature of the reactor was increased to 70°C and the reactor was filled with TFE to set the pressure at 2.70 MPa. As polymerization initiators, 0.620 g of ammonium persulfate (APS) and 1.488 g of disuccinic acid

peroxide (DSP) were fed. TFE was fed so that the reaction pressure was constant at 2.70 MPa. While feeding of TFE was started, continuous feeding of the surfactant aqueous solution B was started. When 540 g of TFE had been fed, 20 g of deionized degassed water containing 0.76 g of hydroquinone dissolved therein was added. Stirring was stopped when 1200 g of TFE had been fed, and depressurization was performed until the pressure inside the reactor reached the atmospheric pressure. By the end of the reaction, 103 g of the surfactant aqueous solution B was fed. The contents were taken out of the reactor and cooled, and the paraffin wax was separated, whereby a TFE-based polymer aqueous dispersion was obtained.

The resulting TFE-based polymer aqueous dispersion had a solid content concentration of 25.9% by mass and an average primary particle size of 290 nm.

Manufacturing Example 4

The TFE-based polymer aqueous dispersion obtained in Production Example 2 was diluted with deionized water to a solid content concentration of 13% by mass. The dilution was stirred vigorously in a container equipped with a stirrer for coagulation, and water was filtered out, whereby a wet powder was obtained. The water content of the wet powder was approximately 52% by mass.

The resulting wet powder was placed in a stainless-steel mesh tray (amount: 2.0 g/$cm^2$), and the mesh tray was heated in a hot air circulating electric furnace at 210°C. After 18 hours, the mesh tray was taken out and air-cooled, whereby TFE-based polymer composition D was obtained.

The resulting TFE-based polymer composition D had a water content of 0.001% by mass, a standard specific gravity of 2.151, a thermal instability index of 42, a 0.1% mass reduction temperature of 397°C, a 1.0% mass reduction temperature of 492°C, and an endothermic peak temperature of 344°C. The extrusion pressure was 18.9 MPa, and the TFE-based polymer composition D was expandable. The physical properties of the resulting TFE-based polymer composition D are shown in Tables 7 and 8 below.

Manufacturing Example 5

The TFE-based polymer aqueous dispersion obtained in Production Example 1 was diluted with deionized water to a solid content concentration of 13% by mass. The dilution was stirred vigorously in a container equipped with a stirrer for coagulation, and water was filtered out, whereby a wet powder was obtained.

The resulting wet powder was placed in a stainless-steel mesh tray (amount: 1.2 g/$cm^2$). Superheated steam at 180°C was introduced at a rate of 20 kg/hr into a furnace equipped with a high-temperature superheated steam generator. The mesh tray was heated in the furnace at 180°C for seven hours, whereby TFE-based polymer composition E was obtained.

The resulting TFE-based polymer composition E had a water content of 0.002% by mass, a standard specific gravity of 2.170, a thermal instability index of 44, a 0.1% by mass reduction temperature of 391°C, a 1.0% by mass reduction temperature of 491°C, and an endothermic peak temperature of 342°C, and was expandable.

The amount of $(H-CF_2)_{m-1}-COO)H$ (wherein m is 12 or 14) was less than 10 ppb by mass relative to the TFE-based polymer composition E, and the amount of $(H-CF_2)_n-SO_3)H$ (wherein n is 4 to 20) was less than 10 ppb by mass relative to the TFE-based polymer composition E.

[Table 7]

| Amount of $(H-CF_2)_{m-1}-COO)M$ | | | |
|---|---|---|---|
| Unit: ppb by mass/TFE-based polymer | | | |
| m | Manufacturing Example 2 | Manufacturing Example 3 | Manufacturing Example 4 |
| 4 | < 10 | < 10 | < 10 |
| 5 | < 10 | < 10 | < 10 |
| 6 | < 10 | < 10 | < 10 |
| 7 | < 10 | < 10 | < 10 |
| 8 | < 10 | < 10 | < 10 |
| 9 | < 10 | < 10 | < 10 |
| 10 | < 10 | 32 | < 10 |
| 11 | < 10 | 33 | < 10 |

(continued)

| Amount of $(H-CF_2)_{m-1}-COO)M$ | | | |
|---|---|---|---|
| Unit: ppb by mass/TFE-based polymer | | | |
| m | Manufacturing Example 2 | Manufacturing Example 3 | Manufacturing Example 4 |
| 12 | < 10 | 33 | < 10 |
| 13 | < 10 | 47 | < 10 |
| 14 | < 10 | 48 | < 10 |
| 15 | 41 | 123 | 73 |
| 16 | < 10 | 69 | 141 |
| 17 | < 10 | 76 | < 10 |
| 18 | < 10 | 44 | < 10 |
| 19 | 26 | 47 | < 10 |
| 20 | < 10 | 26 | < 10 |

[Table 8]

| Amount of $(H-(CF_2)_n-SO_3)M$ | | | |
|---|---|---|---|
| Unit: ppb by mass/TFE-based polymer | | | |
| n | Manufacturing Example 2 | Manufacturing Example 3 | Manufacturing Example 4 |
| 4 | < 10 | < 10 | 45 |
| 5 | < 10 | < 10 | < 10 |
| 6 | < 10 | < 10 | 973 |
| 7 | < 10 | < 10 | < 10 |
| 8 | < 10 | < 10 | 1412 |
| 9 | < 10 | < 10 | < 10 |
| 10 | < 10 | < 10 | 786 |
| 11 | < 10 | < 10 | < 10 |
| 12 | < 10 | < 10 | 209 |
| 13 | < 10 | < 10 | < 10 |
| 14 | < 10 | < 10 | 112 |
| 15 | < 10 | < 10 | < 10 |
| 16 | < 10 | < 10 | < 10 |
| 17 | < 10 | < 10 | < 10 |
| 18 | < 10 | < 10 | < 10 |
| 19 | < 10 | < 10 | < 10 |
| 20 | < 10 | < 10 | < 10 |

The TFE-based polymer compositions obtained in Manufacturing Examples 1 to 5 were evaluated by the following methods.

Evaluation of electrolyte-containing battery

By the following procedures, mixture sheets of Examples 1 to 5 and Example A1 were produced, and evaluations of the mixture sheets and batteries were performed.

<Production of positive electrode mixture sheet>

The active material and the conductive aid were weighed out, and the materials were fed into a V-type mixer, followed by mixing at 37 rpm for 10 minutes, whereby a mixture containing the active material and the conductive aid was obtained. Then, the binder (TFE-based polymer composition) weighed out was added to the mixture and the mixture was allowed to cool sufficiently in a thermostatic bath at 5°C. The mixture containing the active material, the conductive aid, and the binder was fed into a Henschel mixer and processed at 1000 rpm for three minutes to homogenize the mixture.

Then, the mixture was thoroughly heated in a thermostatic bath at 50°C, and processed in a Henschel mixer at 1500 rpm for 10 minutes so that fibrillation was promoted, whereby an electrode mixture was obtained.

The electrode mixture was fed to parallel metal rolls (temperature: 80°C, rotation speed: 1 m/min) and rolled, whereby an electrode mixture sheet was obtained. The resulting rolled sheet was coarsely crushed by folding it into two, and the electrode mixture was again fed to the metal rolls (temperature: 80°C, rotation speed: 1 m/min) and rolled, whereby an electrode mixture sheet with higher strength was obtained.

The electrode mixture sheet was then fed to a roll press machine to adjust the gap. The thickness of the positive electrode mixture layer was finally adjusted to 90 μm.

Tables 9 shows the material types and compositions.

The obtained electrode mixture sheets were all self-supporting films.

[Table 9]

| | (A) Active material | (B) Binder | (C) Conductive aid | Composition ratio A:B:C (mass ratio) |
|---|---|---|---|---|
| Example 1 | $Li(Ni_{0.6}Mn_{0.2}Co_{0.2})O_2$ | TFE-based polymer compositionA | denka Li-400 | 95.8:2:2.2 |
| Example 2 | $Li(Ni_{0.6}Mn_{0.2}Co_{0.2})O_2$ | TFE-based polymer compositionB | denka Li-400 | 95.8:2:2.2 |
| Example 3 | $Li(Ni_{0.6}Mn_{0.2}Co_{0.2})O_2$ | TFE-based polymer composition C | denka Li-400 | 95.8:2:2.2 |
| Example 4 | $Li(Ni_{0.6}Mn_{0.2}Co_{0.2})O_2$ | TFE-based polymer composition D | denka Li-400 | 95.8:2:2.2 |
| Example 5 | $Li(Ni_{0.6}Mn_{0.2}Co_{0.2})O_2$ | TFE-based polymer compositionA | denka Li-400 | 97:1:2 |
| Example A1 | $Li(Ni_{0.6}Mn_{0.2}Co_{0.2})O_2$ | TFE-based polymer composition E | denka Li-400 | 95.8:2:2.2 |
| denka Li-400: carbon black available form Denka Company Limited. | | | | |

<Measurement of strenght of positive electrode mixture sheet (Tensile test)>

The psitive electrode mixture sheet was cut, whereby a strip-shaped test piece with a width of 4 mm was produced. A tensile tester was used t odetermine the strength of the test piece under the condition of 100 mm/min. The chuck distance was set to 30mm. A displacement was applied to the test piece until breaking and the maximum stress of the measured results was taken as the strength of each sample. The test pieces were ranked from A to E in descending order of tensile strength and sheet strength.

A: 0.2 $N/mm^2$ or more
B: 0.17 $N/mm^2$ or more but less than 0.2 $N/mm^2$
C: 0.15 $N/mm^2$ or more but less than 0.17 $N/mm^2$
D: 0.1 $N/mm^2$ or more but less than 0.15 $N/mm^2$
E: Less than 0.1 $N/mm^2$

Table 10 shows the results.

<Evaluation of flexibility of positive electrode mixture sheet (bending test)>

The obtained electrode mixture sheets were cut, whereby test pieces with a width of 4 cm and a length of 10 cm were produced. The test pieces were then wrapped around a Φ10-mm rod, and the test pieces were visually checked for damage such as scratches and cracks. When no damage was found, the test was conducted with an even thinner Φ5-mm rod, and the test pieces were checked for damage. When no damage was found again, the test was conducted with an even thinner Φ2-mm rod, and the test pieces were checked for damage. The results were classified from A to D.

A: No damage with Φ2-mm rod

B: Damaged with Φ2-mm rod
C: Damaged with Φ5-mm rod
D: Damaged with Φ10-mm rod

Table 10 shows the results.

<Production of positive electrode>

The positive electrode mixture sheet was bonded to 20-μm aluminum foil in the following manner.
The adhesive used was a slurry prepared by dissolving polyvinylidene fluoride (PVDF) in N-methylpyrrolidone (NMP) and dispersing carbon black therein at a ratio of 80:20. The above adhesive was applied to aluminum foil and dried on an electric griddle at 120°C for 15 minutes, whereby a current collector with an adhesive layer was formed.
After that, the positive electrode mixture sheet was placed on the current collector with an adhesive layer, and the positive electrode mixture sheet and the current collector were bonded to each other using a roll press machine heated to 100°C. The workpiece was cut into the desired size, followed by tab attachment, whereby a positive electrode was obtained.

<Production of negative electrode>

First, 98 parts by mass of a carbonaceous material (graphite) was mixed with 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-μm-thick copper foil and dried. The workpiece was rolled using a press and cut to provide a piece in a desired size, followed by tab attachment. This piece was used as a negative electrode.

<Preparation of electrolyte solution>

A solvent mixture of ethylene carbonate (EC) and ethyl methyl carbonate (EMC) (EC:EMC = 30:70 (volume ratio)) was weighed as an organic solvent into a sample bottle, and fluoroethylene carbonate (FEC) and vinylene carbonate (VC) each in an amount of 1% by mass were added thereto and dissolved therein, whereby a mixed solution was prepared. A $LiPF_6$ salt was mixed with this mixed solution at 23°C so that the concentration thereof in the electrolyte solution was 1.0 mol/L.

<Production of aluminum laminate cell>

The above positive electrode and negative electrode were placed to face each other with a 20-um-thick porous polyethylene film (separator) in between. The non-aqueous electrolyte solution prepared above was injected thereinto and the non-aqueous electrolyte solution was made to sufficiently permeate into the components such as the separator. The workpiece was then sealed, pre-charged, and aged, whereby a lithium-ion secondary battery was produced.

<Battery evaluation>

The lithium-ion secondary battery produced above was subjected to constant current/constant voltage charge (hereinafter, referred to as CC/CV charge) (0.1 C cut off) to 4.3 V at a current corresponding to 0.33 C at 25°C, and then discharged to 3 V at a constant current of 0.33 C. This was counted as one cycle, and the discharge capacity at the third cycle was used to determine the initial discharge capacity.
The battery whose initial discharge capacity had been evaluated was again subjected to CC/CV charge (0.1 C cut off) at 25°C to 4.3 V, and the volume of the battery was determined by the Archimedes' method. After determining the volume of the battery, the battery was stored at high temperature at 60°C for 30 days. After storage at high temperature, the battery was sufficiently cooled, and the volume thereof was determined at 25°C. Based on the difference in volume of the battery before and after the storage test, the amount of gas generated was determined.
After determination of the amount of gas generated, the battery was discharged at 0.33 C at 25°C to 3 V, and the remaining capacity was determined.
The ratio of the remaining capacity after storage at high temperature to the initial discharge capacity was calculated, and this was used as the remaining capacity rate (%).

(Remaining capacity) / (Initial discharge capacity) × 100 = Remaining capacity rate (%)

Table 10 shows the results.
[Table 10]

| | Strength | Bending test | Remaining capacity (%) | Amount of gas generated (ml) | Fibril diameter (median value [nm]) |
|---|---|---|---|---|---|
| Example 1 | A | C | 75 | 0.31 | 70 |
| Example 2 | A | C | 74 | 0.32 | 70 |
| Example 3 | B | B | 68 | 0.35 | 65 |
| Example 4 | C | A | 72 | 0.33 | 40 |
| Example 5 | D | B | 74 | 0.31 | 34 |
| Example A1 | A | C | 75 | 0.31 | 68 |

Evaluation of electrode mixture sheet for solid-state battery

The positive electrode mixture sheets of Examples 6 to 12 and Examples B1 to B3 were produced by the following procedure, and evaluated. The production and evaluation were performed in an argon atmosphere.

<Production of positive electrode mixture sheet>

The active material and the conductive aid were weighed out, and the materials were fed into a V-type mixer, followed by mixing at 37 rpm for 10 minutes, whereby a mixture containing the active material and the conductive aid was obtained. Then, the binder (TFE-based polymer composition) weighed out and a solid electrolyte were added to the mixture and the mixture was allowed to cool sufficiently in a thermostatic bath at 5°C. The mixture containing the active material, the conductive aid, the binder, and the solid electrolyte was fed into a Henschel mixer and processed at 300 rpm for two minutes to homogenize the mixture.
Then, the mixture was thoroughly heated in a thermostatic bath at 40°C, and processed in a Henschel mixer at 1000 rpm for three minutes so that fibrillation was promoted, whereby an electrode mixture was obtained.
The electrode mixture was fed to parallel metal rolls (temperature: 80°C, rotation speed: 1 m/min) and rolled, whereby an electrode mixture sheet was obtained. The resulting rolled sheet was coarsely crushed by folding it into two, and the electrode mixture was again fed to the metal rolls (temperature: 80°C, rotation speed: 1 m/min) and rolled, whereby an electrode mixture sheet with higher strength was obtained.
The electrode mixture sheet was then fed to a roll press machine to adjust the gap. The thickness of the positive electrode mixture layer was finally adjusted to 100 μm.
Tables 11 shows the material types and compositions.
The obtained electrode mixture sheets were all self-supporting films.
[Table 11]

| | (A) Active material | (B) Binder | (C) Conductive aid | (D) Solid electrolyte | Composition ratio A:B:C:D (mass ratio) |
|---|---|---|---|---|---|
| Example 6 | $Li(Ni_{0.8}Mn_{0.1}CO_{0.1})O_2$ | TFE-based polymer composition A | SuperP Li | $Li_{10}SnP_2S_{12}$ | 70:1:1.5:27.5 |
| Example 7 | $Li(Ni_{0.8}Mn_{0.1}CO_{0.1})O_2$ | TFE-based polymer composition B | SuperP Li | $Li_{10}SnP_2S_{12}$ | 70:1:1.5:27.5 |
| Example 8 | $Li(Ni_{0.8}Mn_{0.1}CO_{0.1})O_2$ | TFE-based polymer composition C | SuperP Li | $Li_{10}SnP_2S_{12}$ | 70:1:1.5:27.5 |

(continued)

| | (A) Active material | (B) Binder | (C) Conductive aid | (D) Solid electrolyte | Composition ratio A:B:C:D (mass ratio) |
|---|---|---|---|---|---|
| Example 9 | $Li(Ni_{0.8}Mn_{0.1}CO_{0.1})O_2$ | TFE-based polymer composition D | SuperP Li | $Li_{10}SnP_2S_{12}$ | 70:1:1.5:27.5 |
| Example 10 | $Li(Ni_{0.8}Mn_{0.1}CO_{0.1})O_2$ | TFE-based polymer composition A | SuperP Li | $Li_7P_3S_{11}$ | 70:1:1.5:27.5 |
| Example 11 | $Li(Ni_{0.8}Mn_{0.1}CO_{0.1})O_2$ | TFE-based polymer composition A | SuperP Li | $Li_{1.4}Al_{0.4}Ti_{1.6}(PO_4)_3$ | 70:1:1.5:27.5 |
| Example 12 | $Li(Ni_{0.8}Mn_{0.1}CO_{0.1})O_2$ | TFE-based polymer composition A | SuperP Li | $Li_{6.24}La_3Zr_2Al_{0.24}O_{11.98}$ | 70:1:1.5:27.5 |
| Example B1 | $Li(Ni_{0.8}Mn_{0.1}CO_{0.1})O_2$ | TFE-based polymer composition E | SuperP Li | $Li_{10}SnP_2S_{12}$ | 70:1:15:275 |
| Example B2 | $Li(Ni_{0.8}Mn_{0.1}CO_{0.1})O_2$ | TFE-based polymer composition A | SuperP Li | $Li_{10}GeP_2S_{12}$ | 70:1:15:275 |
| Example B3 | $Li(Ni_{0.8}Mn_{0.1}CO_{0.1})O_2$ | TFE-based polymer composition E | SuperP Li | $Li_{10}GeP_2S_{12}$ | 70:1:15:275 |
| SuperP Li: carbon black available from Imerys S. A. | | | | | |

<Measurement of strenght of positive electrode mixture sheet (Tensile test)>

the positive electrode mixture sheet was cut, whereby a strip-shaped test piece with a width of 8 mm was produced. A tensile tester was used to determine the strength of the test piece under the condition of 100 mm/min. The chuck distance was set to 30 **mm. A** displacement was applied to the test piece until breaking, and the maximum stress of the measured results was taken as the strength of each sample. The test pieces were ranked from A to E in descending order of tensile strength and sheet strength.

A: 0.2 $N/mm^2$ or more
B: 0.17 $N/mm^2$ or more but less than 0.2 $N/mm^2$
C: 0.15 $N/mm^2$ or more but less than 0.17 $N/mm^2$
D: 0.1 $N/mm^2$ or more but less than 0.15 $N/mm^2$
E: Less than 0.1 $N/mm^2$

Table 12 shows the results.

<Evaluation of flexibility of positive electrode mixture sheet (bending test)>

The obtained electrode mixture sheets were cut, whereby test pieces with a width of 4 cm and a length of 10 cm were produced. The test pieces were then wrapped around a Φ10-mm rod, and the test pieces were visually checked for damage such as scratches and cracks. When no damage was found, the test was conducted with an even thinner Φ5-mm rod, and the test pieces were checked for damage. When no damage was found again, the test was conducted with an even thinner Φ2-mm rod, and the test pieces were checked for damage. The results were classified from A to D.

A: No damage with Φ2-mm rod
B: Damaged with Φ2-mm rod

C: Damaged with Φ5-mm rod
D: Damaged with Φ10-mm rod

The results are shown in Table 12.

[Table 12]

| | Strength | Bending test |
|---|---|---|
| Example 6 | A | C |
| Example 7 | A | C |
| Example 8 | B | C |
| Example 9 | C | B |
| Example 10 | B | B |
| Example 11 | A | C |
| Example 12 | A | C |
| Example B1 | A | C |
| Example B2 | A | C |
| Example B3 | A | C |

Evaluation of solid electrolyte mixture sheet

The solid electrolyte mixture sheets of Examples 13 to 21 and Examples C1 to C3 were produced by the following procedure, and evaluated. The production and evaluation were performed in an argon atmosphere.

<Production of solid electrolyte mixture sheet>

The binder (TFE-based polymer composition) weighed out was cooled sufficiently in a thermostatic bath at 5°C, fed into a Henschel mixer, and processed at 300 rpm for two minutes, whereby pulverization was performed.
The pulverized binder and the solid electrolyte were each weighed out, and cooled sufficiently in a thermostatic bath at 5°C. They were fed into a Henschel mixer and processed at 300 rpm for one minute to homogenize the mixture.
Then, the mixture was thoroughly heated in a thermostatic bath at 40°C, and processed in a Henschel mixer at 1000 rpm for one minute so that fibrillation was promoted, whereby an electrolyte mixture was obtained.
The electrode mixture was fed to parallel metal rolls (temperature: 80°C, rotation speed: 1 m/min) and rolled, whereby an electrolyte mixture sheet was obtained. The resulting rolled sheet was coarsely crushed by folding it into two, and the electrolyte mixture was again fed to the metal rolls (temperature: 80°C, rotation speed: 1 m/min) and rolled, whereby an electrolyte mixture sheet with higher strength was obtained.
The electrolyte mixture sheet was then fed into a roll press machine to adjust the gap. The thickness of the electrolyte mixture sheet was finally adjusted to 150 μm.
Tables 13 shows the material types and compositions.
The obtained electrolyte mixture sheets were all self-supporting films.

[Table 13]

| | (A) Active material | (B) Binder | (C) Conductive aid | (D) Solid electrolyte | Composition ratio A:B:C:D (mass ratio) |
|---|---|---|---|---|---|
| Example 13 | Not used | TFE-based polymer composition A | Not used | $Li_{10}SnP_2S_{12}$ | 0:2:0:98 |
| Example 14 | Not used | TFE-based polymer composition B | Not used | $Li_{10}SnP_2S_{12}$ | 0:2:0:98 |
| Example 15 | Not used | TFE-based polymer composition C | Not used | $Li_{10}SnP_2S_{12}$ | 0:2:0:98 |

(continued)

| | (A) Active material | (B) Binder | (C) Conductive aid | (D) Solid electrolyte | Composition ratio A:B:C:D (mass ratio) |
|---|---|---|---|---|---|
| Example 16 | Not used | TFE-based polymer composition D | Not used | $Li_{10}SnP_2S_{12}$ | 0:2:0:98 |
| Example 17 | Not used | TFE-based polymer composition A | Not used | $Li_{10}SnP_2S_{12}$ | 0:1.5:0:98.5 |
| Example 18 | Not used | TFE-based polymer composition A | Not used | $Li_{10}SnP_2S_{12}$ | 0:0.9:0:99.1 |
| Example 19 | Not used | TFE-based polymer composition A | Not used | $Li_7P_3S_{11}$ | 0:1.6:0:98.4 |
| Example 20 | Not used | TFE-based polymer composition A | Not used | $Li_{1.4}Al_{0.\ 4}Ti_{1.6}(PO_4)_3$ | 0:25:0:975 |
| Example 21 | Not used | TFE-based polymer composition A | Not used | $Li_{6.24}La_3Zr_2Al_{0.24}O_{11.98}$ | 0:25:0:975 |
| Example C1 | Not used | TFE-based polymer composition E | Not used | $Li_{10}SnP_2S_{12}$ | 0:2:0:98 |
| Example C2 | Not used | TFE-based polymer composition A | Not used | $Li_{10}GeP_2S_{12}$ | 0:25:0:975 |
| Example C3 | Not used | TFE-based polymer composition E | Not used | $Li_{10}GeP_2S_{12}$ | 0:2.5:0:97.5 |

<Measurement of strenght of solid electrolyte mixture sheet and evaluation of flexibility>

The evaluations were performed in the same manner as those for the positive electrode mixture sheets described above. The results are shown in Table 14.

<Ion conductivity of solid electrolyte mixture sheet>

The solid electrolyte mixture sheet was cut to an appropiate size, and gold was vapor-deposited on both sides of the resulting sheet. Then, the resulting solid electrolyte mixture sheet punched out to a Φ10 mm circle was placed in a pressure cell, the cell screws were tightened with 8 N, and the top and bottom of the cell were caused to function as electrodes. FIG. 1 shows a schematic cross-sectional view of the pressure cell used.

Using this sample, the ion conductivity was measured using an impedance measurement apparatus available from Toyo Corporation under the conditions of 25°C, an AC amplitude modulation of 10 mV, and a frequency of $5 \times 10^6$ to 0.1 Hz.

The results are shown in Table 14.

[Table 14]

| | Strength | Bending test | Ion conductivity (S/cm) |
|---|---|---|---|
| Example 13 | A | B | $1.1 \times 10^{-3}$ |
| Example 14 | A | B | $1.0 \times 10^{-3}$ |
| Example 15 | B | B | $0.7 \times 10^{-3}$ |
| Example 16 | C | B | $0.5 \times 10^{-3}$ |
| Example 17 | B | B | $1.1 \times 10^{-3}$ |
| Example 18 | C | C | $1.2 \times 10^{-3}$ |
| Example 19 | C | A | $8.8 \times 10^{-4}$ |
| Example 20 | B | B | $8.0 \times 10^{-5}$ |

(continued)

| | Strength | Bending test | Ion conductivity (S/cm) |
|---|---|---|---|
| Example 21 | B | B | $11 \times 10^{-5}$ |
| Example C1 | A | B | $1.1 \times 10^{-3}$ |
| Example C2 | B | B | $08 \times 10^{-3}$ |
| Example C3 | B | B | $0.7 \times 10^{-3}$ |

REFERENCE SIGNS LIST

1: screw
2: nut
3: insulating sheet
4: solid electrolyte mixture sheet
5: deposited gold
6: upper electrode
7: lower electrode

## Claims

**1.** A self-supporting electrochemical device mixture film comprising:

at least one of an electrode active material or a solid electrolyte; and
a binder,
the binder containing a tetrafluoroethylene-based polymer composition,
the tetrafluoroethylene-based polymer composition containing a tetrafluoroethylene-based polymer and at least one compound selected from the group consisting of a compound represented by the following formula (1) and a compound represented by the following formula (2):

Formula (1): $(H-(CF_2)_{m-1}-COO)_pM^1$

wherein m is 4 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2; and

Formula (2): $(H-(CF_2)_n-SO_3)_qM^2$

wherein n is 4 to 20; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

**2.** The self-supporting electrochemical device mixture film according to claim 1, wherein $M^1$ in the formula (1) is H or $NH_4$ and $M^2$ in the formula (2) is H or $NH_4$.

**3.** The self-supporting electrochemical device mixture film according to claim 1 or 2, wherein the tetrafluoroethylene-based polymer is polytetrafluoroethylene.

**4.** The self-supporting electrochemical device mixture film according to any one of claims 1 to 3, wherein the tetrafluoroethylene-based polymer is contained in an amount of 99.95% by mass or more relative to the tetrafluoroethylene-based polymer composition.

**5.** The self-supporting electrochemical device mixture film according to any one of claims 1 to 4,

wherein the compound (1) is contained in an amount of 1 ppb by mass or more and 1000 ppb by mass or less and the compound (2) is contained in an amount of 5000 ppb by mass or less, relative to the tetrafluoroethylene-based polymer composition.

**6.** A self-supporting electrochemical device mixture film comprising:

at least one of an electrode active material or a solid electrolyte; and
a binder,
the binder containing a tetrafluoroethylene-based polymer composition,
the tetrafluoroethylene-based polymer composition being expandable and having a 0.1% mass reduction temperature of 400°C or lower.

**7.** A self-supporting electrochemical device mixture film comprising:

at least one of an electrode active material or a solid electrolyte; and
a binder,
the binder containing a tetrafluoroethylene-based polymer composition,
the tetrafluoroethylene-based polymer composition being expandable and having a 1.0% mass reduction temperature of 492°C or lower.

**8.** A self-supporting electrochemical device mixture film comprising:

at least one of an electrode active material or a solid electrolyte; and
a binder,
the binder containing a tetrafluoroethylene-based polymer composition,
the tetrafluoroethylene-based polymer composition being expandable and having a thermal stability index (TII) of 20 or higher.

**9.** A self-supporting electrochemical device mixture film comprising:

at least one of an electrode active material or a solid electrolyte; and
a binder,
the binder containing a tetrafluoroethylene-based polymer composition,
the tetrafluoroethylene-based polymer composition having a standard specific gravity of 2.200 or less and a 0.1% mass reduction temperature of 400°C or lower.

**10.** A self-supporting electrochemical device mixture film comprising:

at least one of an electrode active material or a solid electrolyte; and
a binder,
the binder containing a tetrafluoroethylene-based polymer composition,
the tetrafluoroethylene-based polymer composition having a standard specific gravity of 2.200 or less and a 1.0% mass reduction temperature of 492°C or lower.

**11.** The self-supporting electrochemical device mixture film according to claim 10,
wherein the tetrafluoroethylene-based polymer composition has a standard specific gravity of 2.130 or more and a 1.0% mass reduction temperature of 470°C or higher.

**12.** The self-supporting electrochemical device mixture film according to claim 10 or 11,

wherein the tetrafluoroethylene-based polymer composition contains a tetrafluoroethylene-based polymer, and the tetrafluoroethylene-based polymer is polytetrafluoroethylene.

**13.** The self-supporting electrochemical device mixture film according to any one of claims 10 to 12,
wherein the tetrafluoroethylene-based polymer is contained in an amount of 99.95% by mass or more relative to the tetrafluoroethylene-based polymer composition.

**14.** The self-supporting electrochemical device mixture film according to any one of claims 1 to 13,

wherein the self-supporting electrochemical device mixture film has a thickness of 300 μm or smaller.

**15.** The self-supporting electrochemical device mixture film according to claim 14,
wherein the self-supporting electrochemical device mixture film has a thickness of 50 μm or greater and 200 μm or smaller.

**16.** The self-supporting electrochemical device mixture film according to any one of claims 1 to 15,

wherein the tetrafluoroethylene-based polymer composition is substantially free from a compound represented by the following formula (3):

Formula (3): $(H-(CF_2)_8-SO_3)_qM^2$

wherein $M^2$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and q is 1 or 2.

**17.** The self-supporting electrochemical device mixture film according to claim 16,
wherein the compound represented by the formula (3) amounts to 25 ppb by mass or less relative to the tetrafluoroethylene-based polymer composition.

**18.** The self-supporting electrochemical device mixture film according to any one of claims 1 to 17,

wherein the tetrafluoroethylene-based polymer composition contains at least one compound selected from the group consisting of a compound represented by the following formula (4) and a compound represented by the following formula (4'), each in an amount of 1000 ppb by mass or less relative to the tetrafluoroethylene-based polymer composition:

Formula (4) : $(H-(CF_2)_{15}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (4'): $(H-(CF_2)_{16}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2.

**19.** The self-supporting electrochemical device mixture film according to any one of claims 1 to 18,

wherein the tetrafluoroethylene-based polymer composition contains at least one compound selected from the group consisting of a compound represented by the following formula (5) and a compound represented by the following formula (5'), each in an amount of 1000 ppb by mass or less relative to the tetrafluoroethylene-based polymer composition:

Formula (5): $(H-(CF_2)_{13}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (5'): $(H-(CF_2)_{14}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2.

**20.** The self-supporting electrochemical device mixture film according to any one of claims 1 to 19, wherein the tetrafluoroethylene-based polymer contains a tetrafluoroethylene unit and a modifying monomer unit based on a modifying monomer copolymerizable with tetrafluoroethylene.

**21.** The self-supporting electrochemical device mixture film according to any one of claims 1 to 20, wherein the binder has a fibrous structure with a fibril diameter (median value) of 100 nm or smaller.

**22.** The self-supporting electrochemical device mixture film according to any one of claims 1 to 21, wherein the solid electrolyte is a sulfide-based solid electrolyte or an oxide-based solid electrolyte.

**23.** The self-supporting electrochemical device mixture film according to any one of claims 1 to 22, wherein the electrode active material is a lithium-nickel composite oxide.

**24.** An electrode comprising the self-supporting electrochemical device mixture film according to any one of claims 1 to 23.

**25.** An electrochemical device comprising the electrode according to claim 24.

FIG. 1

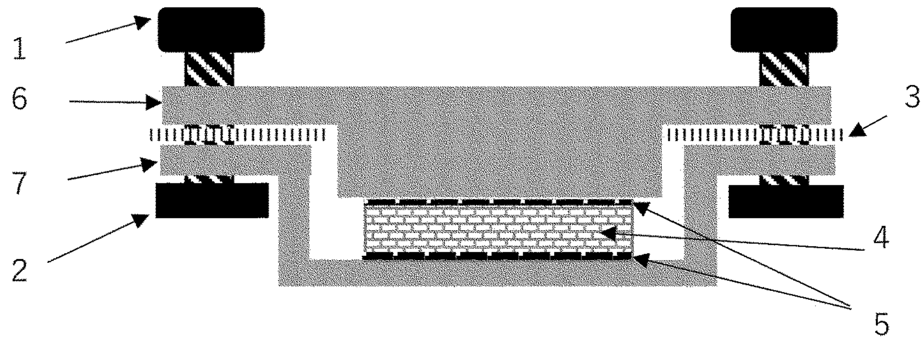

**INTERNATIONAL SEARCH REPORT**

International application No.
**PCT/JP2024/001347**

**A. CLASSIFICATION OF SUBJECT MATTER**

***H01M 4/62***(2006.01)i; ***H01M 4/13***(2010.01)i; ***H01M 4/131***(2010.01)i; ***H01M 4/525***(2010.01)i
FI: H01M4/62 Z; H01M4/525; H01M4/13; H01M4/131

According to International Patent Classification (IPC) or to both national classification and IPC

**B. FIELDS SEARCHED**

Minimum documentation searched (classification system followed by classification symbols)

H01M4/62; H01M4/13; H01M4/131; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-524884 A (UNIVERSITE DE MONTREAL) 02 November 2006 (2006-11-02) claims | 1-25 |
| A | JP 2003-123840 A (SAMSUNG SDI CO., LTD.) 25 April 2003 (2003-04-25) claims | 1-25 |
| A | JP 2022-103142 A (DAIKIN INDUSTRIES, LTD.) 07 July 2022 (2022-07-07) claims | 1-25 |
| P, A | JP 2023-051888 A (DAIKIN INDUSTRIES, LTD.) 11 April 2023 (2023-04-11) claims | 1-25 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/001347**

| Patent document cited in search report | Publication date (day/month/year) | Patent family member(s) | Publication date (day/month/year) |
|---|---|---|---|
| JP 2006-524884 A | 02 November 2006 | US 2008/0020284 A1 claims<br>CA 2427111 A1 | |
| JP 2003-123840 A | 25 April 2003 | US 2003/0073005 A1 claims<br>EP 1302997 A2<br>KR 10-2003-0031396 A<br>CN 1412882 A | |
| JP 2022-103142 A | 07 July 2022 | US 2023/0395804 A1 claims<br>EP 4270535 A1<br>TW 202231751 A<br>CN 116686117 A<br>KR 10-2023-0117457 A | |
| JP 2023-051888 A | 11 April 2023 | TW 202330850 A claims | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017517862 T
- WO 2021181887 A1
- WO 2021181888 A1
- WO 2021192541 A1
- WO 2022138942 A1
- WO 2022138939 A1
- JP 2005527652 T
- US 4576869 A
- JP 2002201217 A
- WO 2020022355 A
- JP 2013542308 T
- JP 2013 A
- JP 542309 T
- JP 2013542310 T
- US 6841616 B
- US 3391099 A, Punderson
- US 20070015864 A
- US 20070015865 A
- US 20070015866 A
- US 20070276103 A
- US 20070117914 A
- US 2007142541 A
- US 20080015319 A
- US 3250808 B
- US 3271341 B
- JP 2003119204 A
- WO 2005042593 A
- WO 2008060461 A
- WO 2007046377 A
- WO 2007119526 A
- WO 2007046482 A
- WO 2007046345 A
- US 20140228531 A
- WO 2013189824 A
- WO 2013189826 A
- WO 2011014715 A
- JP 2002 A
- JP 201217 A
- US 4576869 B


### Non-patent literature cited in the description


- **SUWA, T.** ; **TAKEHISA, M.** ; **MACHI, S.** *J. Appl. Polym. Sci.*, 1973, vol. 17, 3253
- **R. M. HILL**. Silicone Surfactants. Marcel Dekker, Inc.
- *J. Appl. Polymer Sci.*, 1995, vol. 57, 797
- Alkyl polyglycylside, Rompp. Lexikon Chemie. Georg Thieme Verlag, 1999